# EUROPEAN PATENT SPECIFICATION

(11) **EP 4 403 388 B1**
(45) Date of publication and mention of the grant of the patent: **01.07.2026**
(21) Application number: 21887889.0
(22) Date of filing: 17.09.2021
(51) Int. Cl.: B60H 1/00, B60K 11/04, B60L 1/00, B60H 1/32, B60L 58/26, B60L 58/27

(54) **VEHICLE THERMAL MANAGEMENT SYSTEM AND VEHICLE THERMAL MANAGEMENT METHOD**
FAHRZEUGWÄRMEVERWALTUNGSSYSTEM UND FAHRZEUGWÄRMEVERWALTUNGSVERFAHREN
SYSTÈME DE GESTION THERMIQUE DE VÉHICULE ET PROCÉDÉ DE GESTION THERMIQUE DE VÉHICULE

(43) Date of publication of application: 24.07.2024
(73) Proprietor: SAIC MOTOR Corporation Limited, Shanghai 201203 (CN)
(72) Inventor: QIU, Jie, Shanghai 201203 (CN); PAN, Leyan, Shanghai 201203 (CN); NIU, Fengxian, Shanghai 201203 (CN); ZHAO, Zhiyu, Shanghai 201203 (CN); WANG, Lei, Shanghai 201203 (CN)
(74) Representative: Hoffmann Eitle
(86) International application number: PCT/CN2021/119147
(87) International publication number: WO 2023/039853

(56) References cited:
- CN-A- 105 984 304
- CN-A- 107 310 344
- CN-A- 109 149 014
- CN-A- 109 638 381
- CN-A- 109 649 119
- CN-A- 111 342 168
- CN-A- 113 352 839
- CN-U- 209 119 272
- US-A1- 2017 018 825

## Description

### Technical Field

This disclosure relates to a technical field of thermal management of new energy vehicles, and in particular to a vehicle thermal management system and a vehicle thermal management method.

### Background Art

CN 113352839A is related to the preamble of claim 1.

In recent years, with the gradual popularity of new energy vehicles, respective performances of a new energy vehicle have also been significantly improved. A thermal management system of a new energy vehicle is a system that manages heat of the new energy vehicle, and the operation of the thermal management system also has a great impact on cruising range of the new energy vehicle. In order to make the cruising range of the new energy vehicle longer and longer, the requirements on the thermal management system of the new energy vehicle are getting higher and higher.

The thermal management system of the new energy vehicle usually consists of three parts. The first part is a thermal management of a passenger compartment, which controls a temperature of the passenger compartment at 15°C-20°C and a humidity thereof at about 50%-60%, so as to meet needs of passengers. The second part is a thermal management of a battery, which controls a working temperature of the battery at 25°C-45°C. The third part is a thermal management of a drive assembly which mainly includes heating elements such as a drive motor, a voltage-stabilized power supply and a motor controller. The goal for the thermal management of the drive assembly is to control the coolant temperature below 65°C.

In prior art, for the thermal management of the passenger compartment, a water-side high-voltage electric heater is typically disposed on a water side or an air-side high-voltage electric heater is disposed on an air side. However, a heating efficiency of each of the both ways is very low. For the thermal management of the battery, a water-side high-voltage electric heater is added into a battery loop to warm a coolant at a low temperature, but the heating efficiency of this way is also very low.

In order to improve the heating efficiency, some of vehicles have added a heat pump system to the thermal management system based on a refrigerant cycle. In traditional heat pump systems, environment heat is absorbed by a refrigerant evaporating inside an outdoor heat exchanger. Specifically, the refrigerant throttled via an expansion valve becomes a low-temperature and low-pressure liquid and enters the outdoor heat exchanger, and the temperature of the refrigerant is required to be lower than the environment temperature. A property of the refrigerant is that, as a degree of throttling is greater and the low pressure is lower, the corresponding refrigerant temperature is lower. For example, when the environment temperature is lower than -15°C, the refrigerant temperature is required to be lower than about -20°C such that the heat can be absorbed from the environment through the outdoor heat exchanger. When the refrigerant is lower than -20°C, an absolute pressure of the refrigerant is only 1.3 bar. When the refrigerant pressure is too low, the mass flow when an equal volume of refrigerant is sucked by a compressor may be greatly reduced, thereby resulting in a problem of the compressor being overheated and poor return of lubricating oil, which may cause failure of the compressor. In addition, since the temperature of the outdoor heat exchanger is lower than the environment temperature and the temperature difference therebetween is large, when the outdoor heat exchanger exchanges heat, a drop in air temperature may cause the water vapor in the air to condense and become frost attached onto the outdoor heat exchanger, which may result in a deterioration of a heat exchange capacity of the outdoor heat exchanger, thereby resulting in a deterioration of a performance of the heat pump system, and the heat pump system may stop when the frost has formed to a certain extent.

Therefore, in the thermal management system in the prior art, when the temperature of the refrigerant is too low, the compressor is prone to fail due to over-heating. Furthermore, the heat pump system may further stop due to the frost, and a working efficiency is reduced.

### Summary of Invention

The object of this invention is to solve the problem of relatively low working efficiency of the thermal management system in the prior art.

To solve the above problem, the invention as defined in claim 1 comprises a vehicle thermal management system, comprising an air-conditioning refrigerating-heating loop, a battery thermal management loop, and an electric-drive thermal management loop, a battery cooler is arranged between the air-conditioning refrigerating-heating loop and the battery thermal management loop, a battery is arranged in the battery thermal management loop, the electric-drive thermal management loop comprises an electric-drive coolant main path and a heat-dissipation main path which are sequentially connected in series, an electric drive assembly is arranged in the electric-drive coolant main path, and a radiator is arranged in the heat-dissipation main path, the vehicle thermal management system further comprises a thermoelectric heat exchanger, the thermoelectric heat exchanger is disposed between the battery thermal management loop and the electric-drive coolant main path of the electric-drive thermal management loop, such that a heat transferring state of a coolant between the battery thermal management loop and the electric-drive thermal management loop is regulated by the thermoelectric heat exchanger; the electric-drive thermal management loop further comprises a heat-dissipation bypass and an electric-drive-flow-path switch component, the heat-dissipation bypass is connected in parallel with the heat-dissipation main path, and the electric-drive-flow-path switch component is connected between one end of the heat-dissipation main path, one end of the heat-dissipation bypass, and one end of the electric-drive coolant main path; wherein, a loop is formed after the electric-drive coolant main path selectively communicates with the heat-dissipation main path or the heat-dissipation bypass by the electric-drive-flow-path switch component.

With the above solution, by disposing the thermoelectric heat exchanger between the battery thermal management loop and the electric-drive thermal management loop, the thermoelectric heat exchanger, as a primary heat pump, can absorb heat in the electric drive assembly, the battery, and the environment. The battery cooler is disposed between the air-conditioning refrigerating-heating loop and the battery thermal management loop, the air-conditioning refrigerating-heating loop can absorb heat of the thermoelectric heat exchanger by the battery cooler, and the compressor of the air-conditioning refrigerating-heating loop can heat the passenger compartment, as a secondary heat pump. As a result, even when the environment temperature is relatively low, the compressor can absorb heat in the electric drive assembly, the battery, and the environment, so that it may not fail due to over-heating or stop due to frost. Further, by disposing the heat-dissipation bypass in the electric-drive thermal management loop, the radiator may be not connected when the environment temperature is relatively low or there is no need to absorb heat from the environment, thereby avoiding the problem that, the heat generated by the electric drive assembly is conducted to the environment, thereby causing a waste, or the relatively low temperature of the coolant in the electric-drive thermal management loop causes a reduced working efficiency of the electric drive assembly.

In addition, by heating the battery and the passenger compartment by the heat of the electric drive assembly, it is possible to effectively utilize the heat of the electric drive assembly, thereby improving a utilization rate of the heat. Further, the heat absorbed by the thermoelectric heat exchanger from the electric-drive heat management loop and the heat absorbed by the battery cooler from the air-conditioning refrigerating-heating loop both can be used to heat the battery, thereby improving a heating efficiency of the battery. Thus, there is no need to dispose a thermistor for heating (Positive Temperature Coefficient, PTC) in the air-conditioning refrigerating-heating loop and the battery thermal management loop, thereby reducing a cost of the system.

According to another embodiment of this disclosure, in the vehicle thermal management system disclosed in the embodiment of this disclosure, the thermoelectric heat exchanger comprises a thermoelectric heat exchange unit, the thermoelectric heat exchange unit comprises a battery liquid-cooling module, a thermoelectric module, and an electric-drive liquid-cooling module, which are sequentially stacked along a thickness direction of the thermoelectric heat exchanger, one side of the thermoelectric module contacts with the battery liquid-cooling module, the other side of the thermoelectric module contacts with the electric-drive liquid-cooling module, the battery liquid-cooling module is disposed in the battery thermal management loop, and is disposed in series with the battery, and the electric-drive liquid-cooling module is disposed in the electric-drive coolant main path, and is disposed in series with the electric drive assembly..

Further, in some embodiments, the thermoelectric heat exchanger may have two thermoelectric heat exchange units, and the two thermoelectric heat exchange units are sequentially stacked in the thickness direction of the thermoelectric heat exchanger. The battery liquid-cooling module of one of the thermoelectric heat exchange units is disposed near the battery liquid-cooling module of the other one of the thermoelectric heat exchange units, and a third thermally-conductive layer is further arranged between the battery liquid-cooling module of the one of the thermoelectric heat exchange units and the battery liquid-cooling module of the other one of the thermoelectric heat exchange units.

With the above solution, by integrating the battery liquid-cooling module, the thermoelectric module, and the electric-drive liquid-cooling module to form the thermoelectric heat exchanger, utilizing only one component can realize the heat transferring between the battery thermal management loop and the electric-drive thermal management loop, which causes a higher integration.

According to another embodiment of this disclosure, in the vehicle thermal management system disclosed in the embodiment of this disclosure, the thermoelectric module comprises a first thermally-conductive layer, a semiconductor layer, and a second thermally-conductive layer, which are sequentially stacked along a thickness direction of the thermoelectric heat exchange unit; one side of the first thermally-conductive layer contacts with the battery liquid-cooling module, the other side of the first thermally-conductive layer contacts with one side of the semiconductor layer, the other side of the semiconductor layer contacts with one side of the second thermally-conductive layer, the other side of the second thermally-conductive layer contacts with the electric-drive liquid-cooling module, and the semiconductor layer comprises a plurality of semiconductors arranged in a matrix.

With the above solution, the thermoelectric module is consisted of the thermally-conductive layers and the semiconductor layer. Since the semiconductor layer generates heat quickly, and the thermally-conductive layers can further transfer heat to the battery liquid-cooling module and the electric-drive liquid-cooling module, it is possible to improve a heat transferring efficiency of the thermoelectric heat exchanger.

According to the invention, the electric-drive coolant main path comprises a thermoelectric-heat-exchange flow path and an electric-drive flow path which are sequentially connected in series, the thermoelectric heat exchanger is disposed in the thermoelectric-heat-exchange flow path, the electric drive assembly is disposed in the electric-drive flow path, the other end of the thermoelectric-heat-exchange flow path is the one end of the electric-drive coolant main path, and is connected with the electric-drive-flow-path switch component, and one end of the electric-drive flow path is the other end of the electric-drive coolant main path, and is connected with the other end of the heat-dissipation main loop and the other end of the heat-dissipation bypass; the electric-drive thermal management loop further comprises a thermoelectric-heat-exchange bypass, one end of the thermoelectric-heat-exchange bypass is connected with one end of the thermoelectric-heat-exchange flow path, and the other end of the thermoelectric-heat-exchange bypass is connected with the electric-drive-flow-path switch component, so that the thermoelectric-heat-exchange bypass and the thermoelectric-heat-exchange flow path are disposed in parallel; wherein, the electric-drive-flow-path switch component selectively brings the heat-dissipation main path or the heat-dissipation bypass in communication with the thermoelectric-heat-exchange flow path or the thermoelectric-heat-exchange bypass and subsequently in communication with the electric-drive flow path, to form a loop.

With the above solution, by disposing the thermoelectric-heat-exchange bypass, when the thermoelectric heat exchanger is not energized, the coolant flows through the thermoelectric-heat-exchange bypass and does not flow through the thermoelectric heat exchanger. As a result, the thermoelectric heat exchanger can be easily repaired and replaced. Even if the thermoelectric heat exchanger malfunctions, the thermoelectric-heat-exchange bypass can be temporarily used to ensure a flow in the loop, and maintain a basic refrigerating or heating demand, thereby improving a stability of the system.

According to the invention, the electric-drive-flow-path switch component is a four-way valve which has a first port, a second port, a third port, and a fourth port; the first port is connected with one end of the heat-dissipation main path, the second port is connected with the other end of the thermoelectric-heat-exchange flow path, the third port is connected with the other end of the thermoelectric-heat-exchange bypass, and the fourth port is connected with one end of the heat-dissipation bypass; an electric-drive-loop water pump is further arranged in the electric-drive flow path, and the electric-drive-loop water pump is disposed between the thermoelectric heat exchanger and the electric drive assembly.

With the above solution, by disposing the four-way valve, a plurality of flow paths can be in communication to form a plurality of different loops with a simple component, and the configuration is simple.

According to another embodiment of this disclosure, in the vehicle thermal management system disclosed in the embodiment of this disclosure, the electric-drive coolant main path comprises a thermoelectric-heat-exchange flow path and an electric-drive flow path which are sequentially connected in series, the thermoelectric heat exchanger is disposed in the thermoelectric-heat-exchange flow path, the electric drive assembly is disposed in the electric-drive flow path, the other end of the thermoelectric-heat-exchange flow path is the one end of the electric-drive coolant main path, and is connected with the electric-drive-flow-path switch component, and one end of the electric-drive flow path is the other end of the electric-drive coolant main path, and is connected with the other end of the heat-dissipation main path and the other end of the heat-dissipation bypass; an electric-drive-loop water pump and a heat-exchange three-way valve are further arranged in the thermoelectric-heat-exchange flow path, the electric-drive-loop water pump and the heat-exchange three-way valve are connected in series, and the electric-drive-loop water pump is disposed between the heat-exchange three-way valve and the thermoelectric heat exchanger; the electric-drive thermal management loop further comprises an electric-drive bypass, one end of the electric-drive bypass is connected with the heat-exchange three-way valve, and the other end of the electric-drive bypass is connected with the heat-dissipation bypass, so that the electric-drive bypass and the electric-drive flow path are disposed in parallel; the heat-exchange three-way valve has a first port, a second port, and a third port, the first port of the heat-exchange three-way valve is connected with the electric-drive-loop water pump, the second port of the heat-exchange three-way valve is connected with the other end of the electric-drive flow path, and the third port of the heat-exchange three-way valve is connected with one end of the electric-drive bypass; the electric-drive-flow-path switch component is a three-way valve which has a first port, a second port, and a third port; the first port of the three-way valve is connected with one end of the heat-dissipation main path, the second port of the three-way valve is connected with the other end of the thermoelectric-heat-exchange flow path, and the third port of the three-way valve is connected with one end of the heat-dissipation bypass.

With the above solution, by disposing the electric-drive bypass, when the coolant temperature in the electric-drive thermal management loop is too low, the coolant flows through the electric-drive bypass and does not flow through the electric-drive flow path, avoiding the problem that the coolant temperature is too low to thus affect the operating efficiency of the battery .

According to another embodiment of this disclosure, in the vehicle thermal management system disclosed in the embodiment of this disclosure, the electric-drive coolant main path comprises a thermoelectric-heat-exchange flow path and an electric-drive flow path which are sequentially connected in series, the thermoelectric heat exchanger is disposed in the thermoelectric-heat-exchange flow path, the electric drive assembly is disposed in the electric-drive flow path, the other end of the thermoelectric-heat-exchange flow path is the one end of the electric-drive coolant main path, and is connected with the electric-drive-flow-path switch component, and one end of the electric-drive flow path is the other end of the electric-drive coolant main path, and is connected with the other end of the heat-dissipation main loop and the other end of the heat-dissipation bypass; an electric-drive-loop water pump and a heat-exchange three-way valve are further arranged in the thermoelectric-heat-exchange flow path, the electric-drive-loop water pump and the heat-exchange three-way valve are connected in series, and the electric-drive-loop water pump is disposed between the heat-exchange three-way valve and the thermoelectric heat exchanger; the electric-drive thermal management loop further comprises a thermoelectric-heat-exchange bypass and an electric-drive bypass, one end of the thermoelectric-heat-exchange bypass is connected with the electric-drive-loop water pump, and the other end of the thermoelectric-heat-exchange bypass is connected with the electric-drive-flow-path switch component, so that the thermoelectric-heat-exchange bypass and the thermoelectric heat exchanger are disposed in parallel; one end of the electric-drive bypass is connected with the heat-exchange three-way valve, and the other end of the electric-drive bypass is connected with the electric-drive-flow-path switch component, so that the electric-drive bypass and the electric-drive-flow-path are disposed in parallel; the heat-exchange three-way valve has a first port, a second port, and a third port, the first port of the heat-exchange three-way valve is connected with the electric-drive-loop water pump, the second port of the heat-exchange three-way valve is connected with the other end of the electric-drive flow path, and the third port of the heat-exchange three-way valve is connected with one end of the electric-drive bypass; the electric-drive-flow-path switch component comprises a first three-way valve and a second three-way valve which are connected in series, the first three-way valve and the second three-way valve both have a first port, a second port, and a third port; the first port of the first three-way valve is connected with one end of the heat-dissipation main path, the second port of the first three-way valve is connected with the other end of the thermoelectric-heat-exchange flow path, and the third port of the first three-way valve is connected with the first port of the second three-way valve; the second port of the second three-way valve is connected with the other end of the thermoelectric-heat-exchange bypass and the other end of the electric-drive bypass, and the third port of the second three-way valve is connected with one end of the heat-dissipation bypass.

According to another embodiment of this disclosure, in the vehicle thermal management system disclosed in the embodiment of this disclosure, the battery thermal management loop comprises a battery coolant main path and a battery flow path which are sequentially connected in series, the thermoelectric heat exchanger and the battery cooler both are disposed in the battery coolant main path, and the battery is disposed in the battery flow path; and the battery thermal management loop further comprises a battery bypass and a battery-flow-path switch component; the battery bypass and the battery coolant main path are connected in parallel, and the battery-flow-path switch component is connected between the other end of the battery coolant main path, one end of the battery bypass, and one end of the battery flow path; and the heat-dissipation bypass and the battery bypass both are short bypasses; a battery-loop water pump is further arranged in the battery coolant main path, and the battery-loop water pump is disposed between the thermoelectric heat exchanger and the battery-flow-path switch component.

With the above solution, by disposing the battery bypass to bypass the battery flow path, and utilizing the battery-flow-path switch component to regulate a connection state of the battery bypass or the battery flow path, when the battery needs no refrigerating or the temperature of the refrigerant is relatively low, the coolant only flows through the battery bypass and does not flow through the battery flow path, which can avoid the problem that the coolant temperature is too low to thus affect the operating efficiency of the battery.

According to another embodiment of this disclosure, in the vehicle thermal management system disclosed in the embodiment of this disclosure, the battery-flow-path switch component is a three-way valve which has a first port, a second port, and a third port, the first port is connected with the other end of the battery coolant main path, the second port is connected with one end of the battery bypass, and the third port is connected with one end of the battery flow path.

With the above solution, by disposing the three-way valve, a plurality of flow paths can be in communication to form a plurality of different loops with a simple component, and the configuration is simple.

According to another embodiment of this disclosure, in the vehicle thermal management system disclosed in the embodiment of this disclosure, the air-conditioning refrigerating-heating loop comprises a compressor flow path, an in-vehicle condenser flow path, a heating flow path, a refrigerant main path, a bypass-valve flow path, a function-valve flow path, a regulate-valve flow path, and an in-vehicle evaporator flow path; the compressor flow path is connected in series with the in-vehicle condenser flow path, the heating flow path is connected in series with the compressor flow path, the refrigerant main path is connected in parallel with the in-vehicle evaporator flow path and the heating flow path, and the refrigerant main path comprises an outdoor-heat-exchanger flow path and a battery-cooler flow path which are connected in series; and the air-conditioning refrigerating-heating loop further comprises an outdoor heat exchanger, a compressor, a gas-liquid separator, an in-vehicle condenser, and an in-vehicle evaporator; the outdoor heat exchanger is disposed in the outdoor-heat-exchanger flow path, and one end of the outdoor-heat-exchanger flow path communicates with the other end of the regulate-valve flow path, and the other end of the outdoor-heat-exchanger flow path communicates with one end of the heating flow path and one end of the in-vehicle evaporator flow path; the gas-liquid separator and the compressor are disposed in series in the compressor flow path; the in-vehicle condenser is connected with the other end of the compressor flow path and one end of the in-vehicle condenser flow path; the in-vehicle evaporator is disposed in the in-vehicle evaporator flow path, and the other end of the in-vehicle evaporator flow path is connected with the other end of the heating flow path and one end of the compressor flow path; the battery cooler is disposed in the battery-cooler flow path of the refrigerant main path, and the other end of the refrigerant main path is connected with one end of the compressor flow path; the air-conditioning refrigerating-heating loop further comprises a first regulate valve, a second regulate valve, a third regulate valve, a bypass valve, a heating valve, and a function valve; the first regulate valve, the second regulate valve, and the third regulate valve all are used to regulate a flow rate of the refrigerant; the bypass valve, the heating valve, and the function valve all are used to regulate a flow direction of the refrigerant; the first regulate valve is disposed in the regulate-valve flow path, and is located at the side of one end of the outdoor heat exchanger; the second regulate valve is disposed in the battery-cooler flow path of the refrigerant main path, and is located at the side of one end of the battery cooler; the third regulate valve is disposed in the in-vehicle evaporator flow path, and is located at the side of one end of the in-vehicle evaporator; the bypass valve is disposed in the bypass-valve flow path, the bypass valve is disposed in parallel with the first regulate valve, and one end of the bypass-valve flow path is connected to one end of the first regulate valve, and the other end is connected to the other end of the first regulate valve; the heating valve is disposed in the heating flow path, one end of the heating flow path is connected with the outdoor heat exchanger, and the other end of the heating flow path is connected with one end of the compressor flow path; the function valve is disposed in the function-valve flow path, one end of the function-valve flow path is connected with the other end of the in-vehicle condenser flow path, and the other end of the function-valve flow path is connected with one end of the battery-cooler flow path of the refrigerant main path.

The embodiment of this invention as defined in claim 7, also discloses a vehicle thermal management method, adapted for the vehicle thermal management system as described in any one of the above embodiments, the vehicle thermal management method includes following steps:
S1: acquiring a startup information of a vehicle, and judging whether the vehicle is started up according to the startup information of the vehicle;
if yes, step S2 is performed;
if no, it is repeatedly judged whether the vehicle is started up;
S2: acquiring a state information of the vehicle from a power management module of the vehicle, and judging whether the vehicle is currently in a driving state according to the state information of the vehicle;
if the vehicle is currently in the driving state, step S3 is performed;
if the vehicle is not currently in the driving state, it is repeatedly judged whether the vehicle is currently in the driving state;
S3: acquiring a state information of a battery and a state information of a passenger compartment in the vehicle thermal management system, and judging whether a thermal management demand of the vehicle is only heating the passenger compartment according to the state information of the battery and the state information of the passenger compartment;
if yes, step S4 is performed;
if no, it is repeatedly judged whether the thermal management demand of the vehicle is only heating the passenger compartment;
S4: judging whether an environment temperature is less than a preset first temperature threshold;
if yes, it is judged whether a core temperature of the battery is greater than or equal to a preset second temperature threshold, and whether a water temperature of the electric drive assembly is less than a preset third temperature threshold;
if the core temperature of the battery is greater than or equal to the preset second temperature threshold, and the water temperature of the electric drive assembly is less than the preset third temperature threshold, the vehicle thermal management system enters a first mode; wherein in the first mode, the thermoelectric heat exchanger is not energized, a battery-loop water pump of the battery thermal management loop operates, a battery coolant main path of the battery thermal management loop communicates with a battery flow path, an electric-drive-loop water pump of the electric-drive thermal management loop operates, and the electric-drive-flow-path switch component brings the electric-drive coolant main path in communication with the heat-dissipation bypass, to form a loop; a compressor flow path, an in-vehicle condenser flow path, a function-valve flow path and the battery-cooler flow path of the air-conditioning refrigerating-heating loop are in communication, to form a loop;
if a core temperature of the battery is less than a preset second temperature threshold, or the water temperature of the electric drive assembly is greater than or equal to a preset third temperature threshold, it is judged whether the water temperature of the electric drive assembly is greater than or equal to the environment temperature;
if the water temperature of the electric drive assembly is greater than or equal to the environment temperature, the vehicle thermal management system enters a second mode; wherein in the second mode, the thermoelectric heat exchanger is energized, and one side of the thermoelectric heat exchanger located in the battery thermal management loop is a heating side, and one side of the thermoelectric heat exchanger located in the electric-drive thermal management loop is a refrigerating side, the battery-loop water pump of the battery thermal management loop operates, the battery coolant main path and a battery bypass of the battery thermal management loop are in communication to form a loop; the electric-drive-loop water pump of the electric-drive thermal management loop operates, and the electric-drive-flow-path switch component brings the electric-drive coolant main path in communication with the heat-dissipation bypass, to form a loop; the compressor flow path, the in-vehicle condenser flow path, the function-valve flow path and the battery-cooler flow path of the air-conditioning refrigerating-heating loop are in communication, to form a loop;
if the water temperature of the electric drive assembly is less than the environment temperature, the vehicle thermal management system enters a third mode; wherein in the third mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery bypass of the battery thermal management loop are in communication to form a loop; the electric-drive-loop water pump of the electric-drive thermal management loop operates, and the electric-drive-flow-path switch component brings the electric-drive coolant main path in communication with the heat-dissipation main path, to form a loop; the compressor flow path, the in-vehicle condenser flow path, the function-valve flow path and the battery-cooler flow path of the air-conditioning refrigerating-heating loop are in communication, to form a loop..

With the above solution, when the environment temperature is relatively low, since the thermoelectric heat exchanger is disposed to absorb heat in the electric drive assembly and the environment, and can also heat the coolant in the battery thermal management loop and transfer heat to the air-conditioning refrigerating-heating loop. The compressor can absorb heat in the electric drive assembly, the battery, and the environment, even when the environment temperature is relatively low, so that it may not fail due to over-heating or stop due to frost. Further, the heat-dissipation bypass is arranged in the electric-drive thermal management loop, the radiator can be not connected when the environment temperature is relatively low or there is no need to absorb heat from the environment, thereby avoiding the problem that, the heat generated by the electric drive assembly is conducted to the environment, thereby causing a waste, or the relatively low temperature of the coolant in the electric-drive thermal management loop causes a reduced working efficiency of the electric drive assembly.

According to another embodiment of this disclosure, in the vehicle thermal management method disclosed in the embodiment of this disclosure, while the electric-drive coolant main path comprises a thermoelectric-heat-exchange flow path and an electric-drive flow path which are sequentially connected in series, and the electric-drive thermal management loop further comprises a thermoelectric-heat-exchange bypass, in the first mode, the electric-drive-flow-path switch component brings the electric-drive flow path, the thermoelectric-heat-exchange bypass in communication with the heat-dissipation bypass, to form a loop; and when the electric-drive-flow-path switch component is a four-way valve, and a first port of the four-way valve is connected with one end of the heat-dissipation main path, a second port is connected with the other end of the thermoelectric-heat-exchange flow path, a third port is connected with the other end of the thermoelectric-heat-exchange bypass, and a fourth port is connected with one end of the heat-dissipation bypass, the third port and the fourth port of the four-way valve are in communication.

With the above solution, the thermoelectric-heat-exchange bypass is disposed in the electric-drive heat management loop, and the coolant flows through the thermoelectric-heat-exchange bypass and does not flow through the thermoelectric heat exchanger when the thermoelectric heat exchanger is not energized. As a result, the thermoelectric heat exchanger can be easily repaired and replaced. Even if the thermoelectric heat exchanger malfunctions, the thermoelectric-heat-exchange bypass can be temporarily used to ensure a flow in the loop, maintain a basic refrigerating or heating demand, thereby improving a stability of the system.

According to another embodiment of this disclosure, in the vehicle thermal management method disclosed in the embodiment of this disclosure, in the step S4,
if the environment temperature is greater than or equal to the preset first temperature threshold, the vehicle thermal management system enters a fourth mode, and it is judged whether an outlet water temperature of the battery cooler is less than a sum of a temperature of refrigerant at the other end of the outdoor heat exchanger of the air-conditioning refrigerating-heating loop, and a preset first temperature difference threshold;
if yes, opening degrees of a first regulate valve and a second regulate valve of the vehicle thermal management system are regulated to a proportional limit, and it is judged whether an outlet water temperature of the electric drive assembly of the vehicle is greater than or equal to the environment temperature;
if the outlet water temperature of the electric drive assembly of the vehicle is greater than or equal to the environment temperature, the vehicle thermal management system enters a fifth mode;
if the temperature of the electric drive assembly of the vehicle is less than the environment temperature, the vehicle thermal management system enters a sixth mode; wherein
in the fourth mode, the thermoelectric heat exchanger is not energized, the battery-loop water pump of the battery thermal management loop operates, the battery coolant main path and the battery bypass of the battery thermal management loop are in communication, to form a loop; the electric-drive-loop water pump of the electric-drive thermal management loop operates, the electric-drive-flow-path switch component brings the electric-drive coolant main path in communicate with the heat-dissipation bypass, to form a loop; the compressor flow path, the in-vehicle condenser flow path, the function-valve flow path and the battery-cooler flow path of the air-conditioning refrigerating-heating loop are in communication, to form a first loop; and the compressor flow path, the in-vehicle condenser flow path, the outdoor-heat-exchanger flow path and a heating flow path of the air-conditioning refrigerating-heating loop are in communication, to form a second loop; in the fifth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery bypass of the battery thermal management loop are in communication to form a loop; the electric-drive-loop water pump of the electric-drive thermal management loop operates, and the electric-drive-flow-path switch component brings the electric-drive coolant main path in communication with the heat-dissipation bypass, to form a loop; the compressor flow path, the in-vehicle condenser flow path, the function-valve flow path and the battery-cooler flow path of the air-conditioning refrigerating-heating loop are in communication, to form a first loop; and the compressor flow path, the in-vehicle condenser flow path, the outdoor-heat-exchanger flow path and the heating flow path of the air-conditioning refrigerating-heating loop are in communication, to form a second loop; in the sixth mode, the thermoelectric heat exchanger is energized, and one side of the thermoelectric heat exchanger located in the battery thermal management loop is a heating side, and one side of the thermoelectric heat exchanger located in the electric-drive thermal management loop is a refrigerating side, the battery-loop water pump of the battery thermal management loop operates, the battery-coolant main path and the battery bypass of the battery thermal management loop are in communication to form a loop; the electric-drive-loop water pump of the electric-drive thermal management loop operates, and the electric-drive-flow-path switch component brings the electric-drive coolant main path in communication with the heat-dissipation main path, to form a loop; the compressor flow path, the in-vehicle condenser flow path, the function-valve flow path and the battery-cooler flow path of the air-conditioning refrigerating-heating loop are in communication, to form a first loop; and the compressor flow path, the in-vehicle condenser flow path, the outdoor-heat-exchanger flow path and the heating flow path of the air-conditioning refrigerating-heating loop are in communication, to form a second loop.

According to another embodiment of this disclosure, in the vehicle thermal management method disclosed in the embodiment of this disclosure, in the step S2, if the vehicle is currently in the driving state, the thermal management method further comprises:
acquiring a state information of the battery and a state information of the passenger compartment in the vehicle thermal management system, and judging whether the thermal management demand of the vehicle is only heating the battery according to the state information of the battery and the state information of the passenger compartment;
if yes, it is judged whether the water temperature of the electric drive assembly is greater than or equal to a preset fourth temperature threshold;
if no, it is repeatedly judged whether the thermal management demand of the vehicle is only heating the battery;
if the water temperature of the electric drive assembly is greater than or equal to the preset fourth temperature threshold, the vehicle thermal management system enters a seventh mode; wherein in the seventh mode, the thermoelectric heat exchanger is not energized, the battery-loop water pump of the battery thermal management loop operates, the battery coolant main path and the battery flow path of the battery thermal management loop are in communication to form a loop; the electric-drive-loop water pump of the electric-drive thermal management loop operates, the electric-drive-flow-path switch component brings the electric-drive coolant main path in communication with the heat-dissipation bypass, to form a loop; and the air-conditioning refrigerating-heating loop does not operate;
if the water temperature of the electric drive assembly is less than the preset fourth temperature threshold, it is judged whether the water temperature of the electric drive assembly is greater than or equal to the environment temperature;
If the water temperature of the electric drive assembly is greater than or equal to the environment temperature, the vehicle thermal management system enters an eighth mode; wherein in the eighth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive-loop water pump of the electric-drive thermal management loop operates, the electric-drive-flow-path switch component brings the electric-drive coolant main path in communication with the heat-dissipation bypass, to form a loop; and the air-conditioning refrigerating-heating loop does not operate;
if the temperature of the electric drive assembly is less than the environment temperature, the vehicle thermal management system enters a ninth mode; wherein in the ninth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive-loop water pump of the electric-drive thermal management loop operates, the electric-drive-flow-path switch component brings the electric-drive coolant main path in communication with the heat-dissipation main path, to form a loop; and the air-conditioning refrigerating-heating loop does not operate.

With the above solution, it is judged whether the radiator is needed to absorb the environment temperature, according to the temperature of the electric drive assembly and the environment temperature, and the coolant is caused to flow through the heat-dissipation bypass when the radiator cannot absorb heat from the environment temperature, thereby avoiding the problem that, the heat generated by the electric drive assembly is conducted to the environment, thereby causing a waste, or the relatively low temperature of the coolant in the electric-drive thermal management loop causes a reduced working efficiency of the electric drive assembly.

According to another embodiment of this disclosure, in the vehicle thermal management method disclosed in the embodiment of this disclosure, in the step S2, if the vehicle is currently in the driving state, the thermal management method further comprises:
acquiring a state information of the battery and a state information of the passenger compartment in the vehicle thermal management system, and judging whether the thermal management demand of the vehicle is heating the battery and heating the passenger compartment according to the state information of the battery and the state information of the passenger compartment;
if the thermal management demand of the vehicle is heating the battery and heating the passenger compartment, it is judged whether a target of heating the passenger compartment is satisfied;
if the thermal management demand of the vehicle is not heating the battery and heating the passenger compartment, it is repeatedly judged whether the thermal management demand of the vehicle is heating the battery and heating the passenger compartment;
if the target of heating the passenger compartment is satisfied, it is judged whether a rotating speed of a compressor of the vehicle thermal management system is less than a preset rotating speed threshold;
if the target of heating the passenger compartment is not satisfied, it is judged whether the thermal management demand of the vehicle is heating the battery and heating the passenger compartment;
if the rotating speed of the compressor is less than the preset rotating speed threshold, it is judged whether the water temperature of the electric drive assembly is greater than or equal to the environment temperature;
if the rotating speed of the compressor is greater than or equal to the preset rotating speed threshold, it is repeatedly judged whether the target of heating the passenger compartment is satisfied;
if the rotating speed of the compressor is less than the preset rotating speed threshold, it is judged whether the water temperature of the electric drive assembly is greater than or equal to the environment temperature;
if the water temperature of the electric drive assembly is greater than or equal to the environment temperature, the vehicle thermal management system enters a tenth mode; wherein in the tenth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive-loop water pump of the electric-drive thermal management loop operates, and the electric-drive-flow-path switch component brings the electric-drive coolant main path in communication with the heat-dissipation bypass, to form a loop; the compressor flow path, the in-vehicle condenser flow path, the function-valve flow path and the battery-cooler flow path of the air-conditioning refrigerating-heating loop are in communication, to form a first loop; and the compressor flow path, the in-vehicle condenser flow path, the outdoor-heat-exchanger flow path and the heating flow path of the air-conditioning refrigerating-heating loop are in communication, to form a second loop;
if the water temperature of the electric drive assembly is less than the environment temperature, the vehicle thermal management system enters an eleventh mode; wherein in the eleventh mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive-loop water pump of the electric-drive thermal management loop operates, and the electric-drive-flow-path switch component brings the electric-drive coolant main path in communication with the heat-dissipation main path, to form a loop; the compressor flow path, the in-vehicle condenser flow path, the function-valve flow path and the battery-cooler flow path of the air-conditioning refrigerating-heating loop are in communication, to form a first loop; and the compressor flow path, the in-vehicle condenser flow path, the outdoor-heat-exchanger flow path and the heating flow path of the air-conditioning refrigerating-heating loop are in communication with, to form a second loop.

According to another embodiment of this disclosure, in the vehicle thermal management method disclosed in the embodiment of this disclosure, in the step S1, if the vehicle is started up, the thermal management method further comprises:
acquiring a state information of the vehicle from a power management module of the vehicle, and judging whether the vehicle is currently in a charging state according to the state information of the vehicle;
if the vehicle is currently in the charging state, it is judged whether the thermal management demand of the vehicle is only heating the passenger compartment;
if the thermal management demand of the vehicle is only heating the passenger compartment, it is judged whether the environment temperature is less than a preset fifth temperature threshold;
if the environment temperature is less than the preset fifth temperature threshold, the vehicle thermal management system enters the third mode;
if the environment temperature is greater than or equal to the preset fifth temperature threshold, the vehicle thermal management system enters a sixth mode;
if the thermal management demand of the vehicle is judged not be only heating the passenger compartment, it is judged whether the thermal management demand of the vehicle is only heating the battery;
if it is only heating the battery, the vehicle thermal management system enters a twelfth mode; wherein in the twelfth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive-loop water pump of the electric-drive thermal management loop operates, and the electric-drive-flow-path switch component brings the electric-drive coolant main path in communication with the heat-dissipation main path, to form a loop; the air-conditioning refrigerating-heating loop does not operate;
if it is judged not to be only heating the battery, it is judged whether the thermal management demand of the vehicle is heating the battery and heating the passenger compartment;
if the thermal management demand of the vehicle is heating the battery and heating the passenger compartment, the vehicle thermal management system enters a thirteenth mode; wherein in the thirteenth mode, the thermoelectric heat exchanger is energized, and one side of the thermoelectric heat exchanger located in the battery thermal management loop is a heating side, one side of the thermoelectric heat exchanger located in the electric-drive thermal management loop is a refrigerating side, the battery-loop water pump of the battery thermal management loop operates, the battery coolant main path and the battery flow path of the battery thermal management loop are in communication to form a loop; the electric-drive loop water pump of the electric-drive thermal management loop operates, and the electric-drive-flow-path switch component brings the electric-drive coolant main path in communication with the heat-dissipation main path, to form a loop; the compressor flow path, the in-vehicle condenser flow path, the function-valve flow path and the battery-cooler flow path of the air-conditioning refrigerating-heating loop are in communication, to form a loop.

According to another embodiment of this disclosure, in the vehicle thermal management method disclosed in the embodiment of this disclosure, in the step S1, if the vehicle is started up, the thermal management method further comprises:
acquiring a state information of the battery in the vehicle thermal management system, and judging whether the battery has a cooling demand according to the state information of the battery;
if the battery has the cooling demand, it is judged whether the environment temperature is greater than a preset sixth temperature threshold;
if the environment temperature is greater than the preset sixth temperature threshold, it is judged whether the passenger compartment has a refrigerating demand at the same time;
if the passenger compartment has the refrigerating demand at the same time, it is judged whether an absolute value of a difference between a target temperature of the passenger compartment and an actual temperature of the passenger compartment is greater than a preset second temperature difference threshold;
if the passenger compartment has no refrigerating demand, it is repeatedly judged whether the passenger compartment has the refrigerating demand at the same time;
if the absolute value of the difference between the target temperature of the passenger compartment and the actual temperature of the passenger compartment is greater than the preset second temperature difference threshold, the vehicle thermal management system enters a fourteenth mode; wherein in the fourteenth mode, the thermoelectric heat exchanger is energized, and one side of the thermoelectric heat exchanger located in the battery thermal management loop is a refrigerating side, one side of the thermoelectric heat exchanger located in the electric-drive thermal management loop is a heating side, the battery-loop water pump of the battery thermal management loop operates, the battery coolant main path and the battery flow path of the battery thermal management loop are in communication to form a loop; the electric-drive-loop water pump of the electric-drive thermal management loop operates, and the electric-drive-flow-path switch component brings the electric-drive coolant main path in communication with the heat-dissipation main path, to form a loop; the compressor flow path, the in-vehicle condenser flow path, the regulate-valve flow path and the indoor evaporator flow path of the air-conditioning refrigerating-heating loop are in communication, to form a loop; and a refrigerant does not flow through an in-vehicle condenser;
if the absolute value of the difference between the target temperature of the passenger compartment and the actual temperature of the passenger compartment is less than or equal to the preset second temperature difference threshold, the vehicle thermal management system enters a fifteenth mode; wherein in the fifteenth mode, the thermoelectric heat exchanger is not energized, the battery-loop water pump of the battery thermal management loop operates or turns off, the battery coolant main path and the battery flow path of the battery thermal management loop are in communication to form a loop; the electric-drive-loop water pump of the electric-drive thermal management loop operates, the electric-drive-flow-path switch component brings the electric-drive coolant main path in communication with the heat-dissipation main path, to form a loop; the compressor flow path, the bypass-valve flow path, the function-valve flow path, the outdoor-heat-exchanger flow path, and the battery-cooler flow path of the air-conditioning refrigerating-heating loop are in communication to form a first loop; and the compressor flow path, the in-vehicle condenser flow path, the bypass-valve flow path, the function-valve flow path, the outdoor heat exchanger and the in-vehicle evaporator flow path of the air-conditioning refrigerating-heating loop are in communication, to form a second loop;
if the environment temperature is less than or equal to the preset sixth temperature threshold, it is judged whether a target water temperature of the battery is less than a preset seventh temperature threshold;
if the water temperature of the battery is less than the preset seventh temperature threshold, the vehicle thermal management system enters a sixteenth mode; wherein in the sixteenth mode, the thermoelectric heat exchanger is not energized, the battery-loop water pump of the battery thermal management loop operates, the battery cooler of the battery thermal management loop does not operate, the electric-drive-loop water pump of the electric-drive thermal management loop operates, and the electric-drive-flow-path switch component brings the electric-drive coolant main path in communication with the heat-dissipation main path, to form a loop; an operating state of the air-conditioning refrigerating-heating loop is to be determined;
if the water temperature of the battery is greater than or equal to the preset seventh temperature threshold, the vehicle thermal management system enters a seventeenth mode; wherein in the seventeenth mode, the thermoelectric heat exchanger is energized, and one side of the thermoelectric heat exchanger located in the battery thermal management loop is a refrigerating side, one side of the thermoelectric heat exchanger located in the electric-drive thermal management loop is a heating side, the battery cooler of the battery thermal management loop does not operate, the electric-drive-loop water pump of the electric-drive thermal management loop operates, and the electric-drive-flow-path switch component brings the electric-drive coolant main path in communication with the heat-dissipation main path, to form a loop; the operating state of the air-conditioning refrigerating-heating loop is to be determined.

According to another embodiment of this disclosure, in the vehicle thermal management method disclosed in the embodiment of this disclosure, while the electric-drive coolant main path comprises a thermoelectric-heat-exchange flow path and an electric-drive flow path which are sequentially connected in series, and the electric-drive thermal management loop further comprises a thermoelectric-heat-exchange bypass, in the fifteenth mode, the electric-drive-flow-path switch component brings the electric-drive flow path, the thermoelectric-heat-exchange bypass in communication with the heat-dissipation main path, to form a loop; and when the electric-drive-flow-path switch component is a four-way valve, and a first port of the four-way valve is connected with one end of the heat-dissipation main path, a second port is connected with the other end of the thermoelectric-heat-exchange flow path, a third port is connected with the other end of a thermoelectric-heat-exchange bypass, and a fourth port is connected with one end of the heat-dissipation bypass, the first port and the third port of the four-way valve are in communication.

With the above solution, the thermoelectric-heat-exchange bypass is disposed in the electric-drive heat management loop, and the coolant flows through the thermoelectric-heat-exchange bypass and does not flow through the thermoelectric heat exchanger when the thermoelectric heat exchanger is not energized. As a result, the thermoelectric heat exchanger can be easily repaired and replaced. Even if the thermoelectric heat exchanger malfunctions, the thermoelectric-heat-exchange bypass can be temporarily used to ensure a flow in the loop, and maintain a basic refrigerating or heating demand, thereby improving a stability of the system.

According to another embodiment of this disclosure, in the vehicle thermal management method disclosed in the embodiment of this disclosure, when the battery-flow-path switch component is a three-way valve, the electric-drive-flow-path switch component is a four-way valve, and the air-conditioning refrigerating-heating loop further comprises a first regulate valve, a second regulate valve, a third regulate valve, a bypass valve, a heating valve, and a function valve,
in the first mode, a first port and a third port of the battery-flow-path switch component are in communication, a third port and a fourth port of the electric-drive-flow-path switch component are in communication, the first regulate valve is closed, the second regulate valve is half-opened for throttling, the third regulate valve is closed, the bypass valve is closed, the heating valve is closed, and the function valve is opened;
in the second mode, the first port and a second port of the battery-flow-path switch component are in communication, and a second port and the fourth port of the electric-drive-flow-path switch component are in communication; the first regulate valve is closed, the second regulate valve is half-opened for throttling, the third regulate valve is closed, the bypass valve is closed, the heating valve is closed, and the function valve is opened;
in the third mode, the first port and the second port of the battery-flow-path switch component are in communication, and a first port and the second port of the electric-drive-flow-path switch component are in communication; the first regulate valve is closed, the second regulate valve is half-opened for throttling, the third regulate valve is closed, the bypass valve is closed, the heating valve is closed, and the function valve is opened;
in the fourth mode, the first port and the second port of the battery-flow-path switch component are in communication, the second port and the fourth port of the electric-drive-flow-path switch component are in communication, the first regulate valve is half-opened for throttling, the second regulate valve is half-opened for throttling, the third regulate valve is closed, the bypass valve is closed, the heating valve is opened, and the function valve is opened;
in the fifth mode, the first port and the second port of the battery-flow-path switch component are in communication, the second port and the fourth port of the electric-drive-flow-path switch component are in communication, the first regulate valve is half-opened for throttling, the second regulate valve is half-opened for throttling, the third regulate valve is closed, the bypass valve is closed, the heating valve is opened, and the function valve is opened;
in the sixth mode, the first port and the second port of the battery-flow-path switch component are in communication, the first port and the second port of the electric-drive-flow-path switch component are in communication, the first regulate valve is half-opened for throttling, the second regulate valve is half-opened for throttling, the third regulate valve is closed, the bypass valve is closed, the heating valve is opened, and the function valve is opened;
in the seventh mode, the first port and the third port of the battery-flow-path switch component are in communication, the second port and the fourth port of the electric-drive-flow-path switch component are in communication, the first regulate valve is in a normal state, the second regulate valve is in a normal state, the third regulate valve is in a normal state, the bypass valve is in a normal state, the heating valve is in a normal state, and the function valve is in a normal state;
in the eighth mode, the first port and the third port of the battery-flow-path switch component are in communication, the second port and the fourth port of the electric-drive-flow-path switch component are in communication, the first regulate valve is in a normal state, the second regulate valve is in a normal state, the third regulate valve is in a normal state, the bypass valve is in a normal state, the heating valve is in a normal state, and the function valve is in a normal state;
in the ninth mode, the first port and the third port of the battery-flow-path switch component are in communication, the first port and the second port of the electric-drive-flow-path switch component are in communication, the first regulate valve is in a normal state, the second regulate valve is in a normal state, the third regulate valve is in a normal state, the bypass valve is in a normal state, the heating valve is in a normal state, and the function valve is in a normal state;
in the tenth mode, the first port and the third port of the battery-flow-path switch component are in communication, the second port and the fourth port of the electric-drive-flow-path switch component are in communication, the first regulate valve is half-opened for throttling, the second regulate valve is half-opened for throttling, the third regulate valve is closed, the bypass valve is closed, the heating valve is opened, and the function valve is opened;
in the eleventh mode, the first port and the third port of the battery-flow-path switch component are in communication, the first port and the second port of the electric-drive-flow-path switch component are in communication, the first regulate valve is half-opened for throttling, the second regulate valve is half-opened for throttling, the third regulate valve is closed, the bypass valve is closed, the heating valve is opened, and the function valve is opened;
in the twelfth mode, the first port and the third port of the battery-flow-path switch component are in communication, the first port and the second port of the electric-drive-flow-path switch component are in communication, the first regulate valve is in a normal state, the second regulate valve is in a normal state, the third regulate valve is in a normal state, the bypass valve is in a normal state, the heating valve is in a normal state, and the function valve is in a normal state;
in the thirteenth mode, the first port and the third port of the battery-flow-path switch component are in communication, the first port and the second port of the electric-drive-flow-path switch component are in communication, the first regulate valve is closed, the second regulate valve is half-opened for throttling, the third regulate valve is closed, the bypass valve is closed, the heating valve is closed, and the function valve is opened;
in the fourteenth mode, the first port and the third port of the battery-flow-path switch component are in communication, the first port and the second port of the electric-drive-flow-path switch component are in communication, the first regulate valve is opened, the second regulate valve is closed or half-opened for throttling, the third regulate valve is opened, the bypass valve is opened, the heating valve is closed, and the function valve is closed;
in the fifteenth mode, the first port and the third port of the battery-flow-path switch component are in communication, the first port and the third port of the electric-drive-flow-path switch component are in communication, the first regulate valve is opened, the second regulate valve is closed or half-opened for throttling, the third regulate valve is opened or closed, the bypass valve is opened, the heating valve is closed, and the function valve is closed;
in the sixteenth mode, the first port and the third port of the battery-flow-path switch component are in communication, the first port and the second port of the electric-drive-flow-path switch component are in communication, the first regulate valve is to be determined, the second regulate valve is to be determined, the third regulate valve is to be determined, the bypass valve is to be determined, the heating valve is to be determined, and the function valve is to be determined;
in the seventeenth mode, the first port and the third port of the battery-flow-path switch component are in communication, the first port and the second port of the electric-drive-flow-path switch component are in communication, the first regulate valve is to be determined, the second regulate valve is to be determined, the third regulate valve is to be determined, the bypass valve is to be the second regulate valve is to be determined, the heating valve is to be the second regulate valve is to be determined, and the function valve is to be the second regulate valve is to be determined.

According to another embodiment of this disclosure, in the vehicle thermal management method disclosed in the embodiment of this disclosure, a range of the preset first temperature threshold is -13°C to -17°C;
a range of the preset second temperature threshold is 15°C to 25°C;
a range of the preset third temperature threshold is 0°C to 10°C;
a range of the preset fourth temperature threshold is 15°C to 25°C;
a range of the preset fifth temperature threshold is -13°C to -17°C;
a range of the preset sixth temperature threshold is 18°C to 22°C;
a range of the preset seventh temperature threshold is 12°C to 20°C;
a range of the preset first temperature difference threshold is 0°C to 5°C;
a range of the preset second temperature difference threshold is 0°C to 5°C.

The beneficial effects of this disclosure are as follows:
With this solution, by disposing the thermoelectric heat exchanger between the battery thermal management loop and the electric-drive thermal management loop, the thermoelectric heat exchanger, as a primary heat pump, can absorb heat in the electric drive assembly, the battery, and the environment. Further, the battery cooler is disposed between the air-conditioning refrigerating-heating loop and the battery thermal management loop. The air-conditioning refrigerating-heating loop can absorb the heat from the thermoelectric heat exchanger by the battery cooler, and the compressor of the air-conditioning refrigerating-heating loop can heat the passenger compartment, as a secondary heat pump. As a result, even when the environment temperature is relatively low, the compressor can absorb heat in the electric drive assembly, the battery, and the environment, so that it may not fail due to over-heating or stop due to frost. Further, by disposing the heat-dissipation bypass in the electric-drive thermal management loop, the radiator can be not connected when the environment temperature is relatively low or there is no need to absorb heat from the environment, thereby avoiding the problem that, the heat generated by the electric drive assembly is conducted to the environment, thereby causing a waste, or the relatively low temperature of the coolant in the electric-drive thermal management loop causes a reduced working efficiency of the electric drive assembly. In addition, the battery and the passenger compartment are heated by the heat of the electric drive assembly, which can effectively utilize the heat of the electric drive assembly, thereby improving the utilization rate of the heat. Further, the heat absorbed by the thermoelectric heat exchanger from the electric-drive heat management loop and the heat absorbed by the battery cooler from the air-conditioning refrigerating-heating loop can be used to heat the battery, thereby improving the heating efficiency of the battery. Thus, there is no need to dispose a thermistor for heating in the air-conditioning refrigerating-heating loop and the battery thermal management loop, thereby reducing a cost of the system.

Further, the battery bypass is disposed to bypass the battery flow path, and the battery-flow-path switch component is utilized to regulate a connection state of the battery bypass or the battery flow path, and the coolant only flows through the battery bypass and does not flow through the battery flow path, when the battery needs no refrigerating or the temperature of the refrigerant is relatively low. It is possible to avoid the problem that the coolant temperature is too low to thus affect the operating efficiency of the battery.

### Brief Description of Drawings

Fig.1 is a schematic structural diagram of a vehicle thermal management system provided by the embodiment of this invention.
Fig.2a is a schematic overall-structural diagram of a thermoelectric heat exchanger of the vehicle thermal management system provided by the embodiment of this invention.
Fig.2b is an exploded view of the thermoelectric heat exchanger of the vehicle thermal management system provided by the embodiment of this invention.
Fig.3 is a schematic structural diagram of a battery thermal management loop and an electric-drive thermal management loop when the electric-drive-flow-path switch component is a three-way valve, in the vehicle thermal management system provided by the embodiment of this invention.
Fig.4 is a schematic structural diagram of the battery thermal management loop and the electric-drive thermal management loop while the electric-drive-flow-path switch component includes the first three-way valve and the second three-way valve which are connected in series, in the vehicle thermal management system provided by the embodiment of this invention.
Fig.5 is a schematic flowchart corresponding to a first mode to a thirteenth mode of a vehicle thermal management method provided by the embodiment of this invention.
Fig.6 is a schematic flowchart corresponding to a fourteenth mode to a seventeenth mode of the vehicle thermal management method provided by the embodiment of this invention.
Fig.7 is a schematic diagram of the state of the vehicle thermal management system entering the first mode of the vehicle thermal management method provided by the embodiment of this invention.
Fig.8 is a schematic diagram of the state of the vehicle thermal management system entering the second mode of the vehicle thermal management method provided by the embodiment of this invention.
Fig.9 is a schematic diagram of the state of the vehicle thermal management system entering the third mode of the vehicle thermal management method provided by the embodiment of this invention.

### Reference lists:

1, air-conditioning refrigerating-heating loop; 11, outdoor heat exchanger; 111, first regulate valve; 1111, regulate-valve flow path; 12, compressor; 121, compressor flow path; 13, gas-liquid separator; 14, in-vehicle condenser; 141, in-vehicle condenser flow path; 15, in-vehicle evaporator; 151, third regulate valve; 152, in-vehicle evaporator flow path; 16, second regulate valve; 17, bypass valve; 171, bypass-valve flow path; 18, heating valve; 181, heating flow path; 19, function valve; 191, function-valve flow path; 2, battery thermal management loop; 21, battery; 22, battery bypass; 23, battery-flow-path switch component; 24, battery-loop water pump; 3, electric-drive thermal management loop; 31, electric drive assembly; 311, motor; 312, charger; 32, radiator; 33, heat-dissipation bypass; 34, electric-drive-flow-path switch component; 35, electric-drive-loop water pump; 36, heat-exchange three-way valve; 37, thermoelectric-heat-exchange bypass; 38, electric-drive bypass; 4, battery cooler; 41, refrigerant main path; 411, outdoor-heat-exchanger flow path; 412, battery-cooler flow path; 5, thermoelectric heat exchanger; 50, thermoelectric heat exchange unit; 51, battery liquid-cooling module; 52, first thermally-conductive layer; 53, semiconductor layer 531, semiconductor; 54, second thermally-conductive layer; 55, electric-drive liquid-cooling module; 56, support frame; 57, connector; 58, mounting hole; 6, electric-drive coolant main path; 61, thermoelectric-heat-exchange flow path; 62, electric-drive flow path; 7, heat-dissipation main path; 8, battery coolant main path; 9, battery flow path

### Detailed Description of Embodiments

The implementation of this invention will be illustrated by specific embodiments below, and the skilled in the art can easily understand other advantages and effects of this invention as defined in the appended claims from the content disclosed in this specification. Although the description of this disclosure will be introduced in conjunction with the preferred embodiments, this does not mean that the features of this invention are limited to those implementations. On the contrary, the purpose of introducing this invention in conjunction with the implementations is to cover other options or modifications that may be extended based on the scope of the appended claims. In order to provide a deep understanding of this disclosure, many specific details will be contained in the description below.

It should be noted that, in this specification, similar reference numbers and letters indicate similar items in the following drawings. Therefore, once a certain item is defined in one drawing, it need not be further defined and interpreted in subsequent drawings.

In the description of the embodiments, it should be stated that, the orientation or positional relationship indicated by the terms "upper", "lower", "inner", "bottom", etc. is based on the orientation or positional relationship shown in the drawings, or, the orientation or positional relationship usually placed when this inventive product is used. It is only for the convenience of describing the application and simplifying the description, and does not indicate or imply that the device or element referred to must have a specific orientation, be constructed and operated in a specific orientation. Therefore, it cannot be understood as a restriction on this disclosure.

The terms "first", "second", etc. are only used to distinguishing description, and cannot be understood as indicating or implying relative importance.

In the description of this embodiment, it should further be stated that, unless otherwise clearly prescribed and limited, the terms "dispose", "interconnect", and "connect" should be interpreted in a broad sense. For example, it may be a fixed connection, and further may be a removable connection or integral connection; it may be a mechanical connection, and further may be an electrical connection; it may be a direct connection, further may be an indirect connection through an intermediate medium, and may be a communication inside two elements. For those ordinary skilled in the art, specific meanings of the above-mentioned terms in this embodiment can be understood in specific situations.

In order to make the object, technical solution, and advantage of this disclosure clearer, the implementation of this disclosure will be further described in detail below in conjunction with the accompanying drawings.

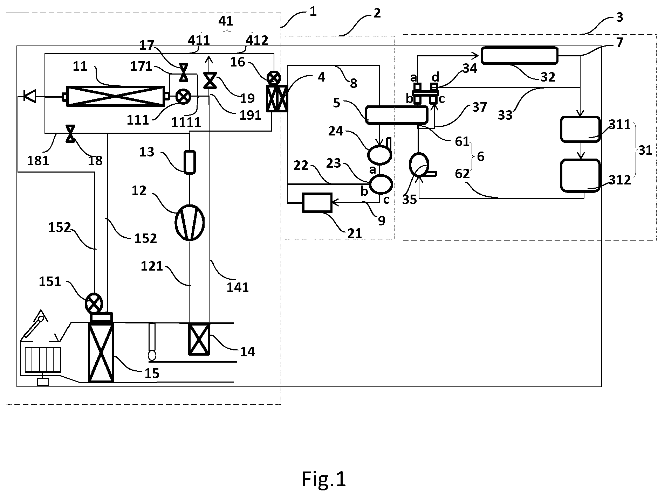

In order to solve the problem that in the thermal management system in the prior art, when the refrigerant temperature is too low, the compressor is prone to fail due to over-heating, and the heat pump system may stop due to the frost which results in a relatively low working efficiency of the thermal management system. The embodiment of this disclosure provides a vehicle thermal management system, specifically with reference to Fig.1 to Fig.4. The vehicle thermal management system provided by this embodiment includes an air-conditioning refrigerating-heating loop 1, a battery thermal management loop 2, and an electric-drive thermal management loop 3. A battery cooler 4 is arranged between the air-conditioning refrigerating-heating loop 1 and the battery thermal management loop 2. A battery 21 is arranged in the battery thermal management loop 2. The electric-drive thermal management loop 3 includes an electric-drive coolant main path 6 and a heat-dissipation main path 7 which are sequentially connected in series. An electric drive assembly 31 is arranged in the electric-drive coolant main path 6. A radiator 32 is arranged in the heat-dissipation main path 7.

Also, the vehicle thermal management system further includes a thermoelectric heat exchanger 5. The thermoelectric heat exchanger 5 is disposed between the battery thermal management loop 2 and the electric-drive coolant main path 6 of the electric-drive thermal management loop 3, to regulate a heat transferring state of a coolant between the battery thermal management loop 2 and the electric-drive thermal management loop 3 via the thermoelectric heat exchanger 5.

The electric-drive thermal management loop 3 further includes a heat-dissipation bypass 33 and an electric-drive-flow-path switch component 34. The heat-dissipation bypass 33 and the heat-dissipation main path 7 are connected in parallel. The electric-drive-flow-path switch component 34 is connected between one end of the heat-dissipation main path 7, one end of the heat-dissipation bypass 33 and one end of the electric-drive coolant main path 6. Wherein, after the electric-drive coolant main path 6 selectively communicates with the heat-dissipation main path 7 or the heat-dissipation bypass 33 by the electric-drive-flow-path switch component 34, a loop is formed.

In this disclosure, by disposing the thermoelectric heat exchanger 5 between the battery thermal management loop 2 and the electric-drive thermal management loop 3, the thermoelectric heat exchanger 5, as a primary heat pump, can absorb heat in the electric drive assembly 31, the battery 21, and the environment. Also, the battery cooler 4 is disposed between the air-conditioning refrigerating-heating loop 1 and the battery thermal management loop 2. The air-conditioning refrigerating-heating loop 1 can absorb the heat from the thermoelectric heat exchanger 5 by the battery cooler 4, and the compressor 12 of the air-conditioning refrigerating-heating loop 1 then can heat the passenger compartment, as a secondary heat pump. As a result, even when the environment temperature is relatively low, the compressor 12 can absorb heat in the electric drive assembly 31, the battery 21, and the environment, so that it may not fail due to over-heating or stop due to frost. Also, by disposing the heat-dissipation bypass 33 in the electric-drive thermal management loop 3, there is no need to connect the radiator 32 when the environment temperature is relatively low or there is no need to absorb heat from the environment, thereby avoiding a problem that, the heat generated by the electric drive assembly 31 is conducted to the environment, thereby causing a waste, or that, the relatively low temperature of the coolant in the electric-drive thermal management loop 3 causes a reduced working efficiency of the electric drive assembly 31.

Next, the vehicle thermal management system provided in this embodiment will be illustrated in detail with reference to Fig. 1 to Fig.4.

First, with reference to Fig.1, the air-conditioning refrigerating-heating loop 1 will be illustrated.

The air-conditioning refrigerating-heating loop 1 includes a compressor flow path 121, an in-vehicle condenser flow path 141, a heating flow path 181, a refrigerant main path 41, a bypass-valve flow path 171, a function-valve flow path 191, a regulate-valve flow path 1111, and an in-vehicle evaporator flow path 152. The compressor flow path 121 is connected in series with the in-vehicle condenser flow path 141. The heating flow path 181 is connected in series with the compressor flow path 121. The refrigerant main path 41 is connected in parallel with the in-vehicle evaporator flow path 152 and the heating flow path 181. The refrigerant main path 41 includes an outdoor-heat-exchanger flow path 411 and a battery-cooler flow path 412 which are connected in series.

The air-conditioning refrigerating-heating loop 1 further includes an outdoor heat exchanger 11, a compressor 12, a gas-liquid separator 13, an in-vehicle condenser 14, and an in-vehicle evaporator 15.

Specifically, the outdoor heat exchanger 11 has two modes. In a heating mode, the outdoor heat exchanger 11 can be equivalent to an evaporator, and the refrigerant evaporates inside the outdoor heat exchanger 11 and absorbs heat from the environment, thereby changing the refrigerant from a low-temperature and low-pressure liquid to a low-temperature and low-pressure gas. In a refrigerating mode, the outdoor heat exchanger 11 can be equivalent to a condenser, and the refrigerant condenses inside the outdoor heat exchanger 11 and releases heat, thereby changing the refrigerant from a high-temperature and high-pressure gas to a medium-temperature and high-pressure liquid. The outdoor heat exchanger 11 is disposed in the outdoor-heat-exchanger flow path 411. Further, one end of the outdoor-heat-exchanger flow path 411 communicates with the other end of the regulate-valve flow path 1111, and the other end of the outdoor-heat-exchanger flow path 411 communicates with one end of the heating flow path 181 and one end of the in-vehicle evaporator flow path 152.

The gas-liquid separator 13 and the compressor 12 are disposed in series in the compressor flow path 121. The compressor 12 is disposed between the gas-liquid separator 13 and the in-vehicle condenser 14. The gas-liquid separator 13 is used to separate gas and liquid, so that the gas enters the compressor 12 and the liquid remains in an internal cavity of the gas-liquid separator 13. The compressor 12 is a driving power for the refrigerant cycle, which can change the low-temperature and low-pressure refrigerant gas into a high-temperature and high-pressure refrigerant gas.

The in-vehicle condenser 14 is connected with the other end of the compressor flow path 121 and one end of the in-vehicle condenser flow path 141. The in-vehicle condenser 14 can condense the high-temperature and high-pressure refrigerant gas outputted from the compressor 12 into a medium-temperature and high-pressure refrigerant liquid, and release heat during the condensation to heat the air in the passenger compartment.

The in-vehicle evaporator 15 is disposed in the in-vehicle evaporator flow path 152. And, the other end of the in-vehicle evaporator flow path 152 is connected with the other end of the heating flow path 181 and one end of the compressor flow path 121. The in-vehicle evaporator 15 can change the refrigerant from a low-temperature and low-pressure liquid to a low-temperature and low-pressure gas, and absorb the heat during the evaporation of the refrigerant to reduce the temperature of the air in the passenger compartment.

The battery cooler 4 is disposed in the battery-cooler flow path 412 of the refrigerant main path 41. Further, the other end of the refrigerant path main 41 is connected with one end of the compressor flow path 121. The battery cooler 4 may be equivalent to an evaporator. Further, the heat exchange medium of the battery cooler 4 includes the refrigerant of the air-conditioning refrigerating-heating loop 1, and the coolant of the battery thermal management loop 2. The refrigerant evaporates in the battery cooler 4 and absorbs the heat of the coolant, such that the coolant is cooled down and then the cooled-down coolant dissipates the heat of the battery.

The air-conditioning refrigerating-heating loop 1 further includes a first regulate valve 111, a second regulate valve 16, a third regulate valve 151, a bypass valve 17, a heating valve 18, and a function valve 19. Wherein, the first regulate valve 111, the second regulate valve 16, and the third regulate valve 151 are all used to regulate a flow rate of the refrigerant. The bypass valve 17, the heating valve 18, and the function valve 19 are all used to regulate a flow direction of the refrigerant.

Specifically, the first regulate valve 111 is disposed in the regulate-valve flow path 1111, on the side of one end of the outdoor heat exchanger 11. The second regulate valve 16 is disposed in the battery-cooler flow path 412 of the refrigerant main path 41, on the side of one end of the battery cooler 4. The third regulate valve 151 is disposed in the in-vehicle evaporator flow path 152, on the side of one end of the in-vehicle evaporator 15. The bypass valve 17 is disposed in the bypass-valve flow path 171. The bypass valve 17 is disposed with the first regulate valve 111 in parallel. Further, one end of the bypass-valve flow path 171 is connected to one end of the first regulate valve 111, and the other end thereof is connected to the other end of the first regulate valve 111. The heating valve 18 is disposed in the heating flow path 181. One end of the heating flow path 181 is connected with the outdoor heat exchanger 11, and the other end of the heating flow path 181 is connected with one end of the compressor flow path 121. The function valve 19 is disposed in the function-valve flow path 191. One end of the function-valve flow path 191 is connected with the other end of the in-vehicle condenser flow path 141, and the other end of the function-valve flow path 191 is connected with one end of the battery-cooler flow path 412 of the refrigerant main path 41.

Further, the first regulate valve 111, the second regulate valve 16, and the third regulate valve 151 all are electronic expansion valves. An opening degrees of the electronic expansion valves can be actively controlled, so they have a function of regulating a flow rate. The first regulate valve 111, the second regulate valve 16, and the third regulate valve 151 all can change the refrigerant from a medium-temperature and high-pressure refrigerant liquid into a low-temperature and low-pressure refrigerant liquid.

The bypass valve 17, the heating valve 18, and the function valve 19 all are solenoid switch valves, which can regulate a flow direction of the refrigerant by opening and closing the solenoid switch valves.

The principle of the air-conditioning refrigerating-heating loop 1 will be illustrated below in conjunction with Fig.1. The air-conditioning refrigerating-heating loop 1 in this embodiment is mainly used for a thermal management of the passenger compartment, which has dual functions of heating the passenger compartment and refrigerating the passenger compartment.

When the passenger compartment has a heating demand, the high-temperature and high-pressure refrigerant gas outputted by the compressor 12 is first transmitted to the in-vehicle condenser 14 through the compressor flow path 121. Since it is the heating demand in the passenger compartment at this time, the air passes through the in-vehicle condenser 14 to exchange heat with the in-vehicle condenser 14, and releases heat to heat the passenger compartment. After becoming a medium-temperature and high-pressure liquid, the refrigerant passes through the in-vehicle condenser flow path 141 and the regulate-valve flow path 1111 sequentially, and to the outdoor heat exchanger 11. The outdoor heat exchanger 11 evaporates and absorbs the heat from the environment, such that the refrigerant becomes a low-temperature and low-pressure gas. After outputted from the outdoor heat exchanger 11, the refrigerant, in the form of low-temperature and low-pressure gas, passes through the heating flow path 181 and returns to the compressor flow path 121. After outputted from the outdoor heat exchanger 11, the refrigerant, in the form of low-temperature and low-pressure gas, can further passes through the second regulate valve 16 and the battery-cooler flow path 412 to the battery cooler 4, and absorbs heat from the coolant, thereby becoming a low-temperature and low-pressure gas and returning to the compressor flow path 121. When the passenger compartment has a refrigerating demand, the high-temperature and high-pressure refrigerant gas outputted by the compressor 12 is first transmitted to the in-vehicle condenser 14 through the compressor flow path 121. Since it is the refrigerating demand in the passenger compartment at this time, the air does not pass through the in-vehicle condenser 14 and does not exchange heat with the in-vehicle condenser 14. Instead, it passes through the in-vehicle condenser flow path 141 and the regulate-valve flow path 1111 sequentially, and to the outdoor heat exchanger 11 where it is condensed to a medium-temperature and high-pressure liquid. After flowing out of the outdoor heat exchanger 11, the liquid refrigerant can be throttled via the third regulate valve 151 on the side near one end of the in-vehicle evaporator 15 in the in-vehicle evaporator flow path 152, thereby becoming the low-temperature and low-pressure refrigerant liquid, and the heat of the air in the air-conditioner box is absorbed by the in-vehicle evaporator 15, thereby cooling down the air to refrigerating the passenger compartment.

Furthermore, when the battery 21 has a cooling demand at the same time, after flowing out of the outdoor heat exchanger 11, the liquid refrigerant can further flow through the outdoor-heat-exchanger flow path 411 and be throttled via the second regulate valve 16 on the side near one end of the battery cooler 4, thereby becoming the low-temperature and low-pressure refrigerant liquid, and the heat of the coolant is absorbed by the battery cooler 4 such that the coolant is cooled down so as to cool the battery 21.

It should be stated that, in the air-conditioning refrigerating-heating loop 1, a flow direction of the coolant is fixed, that is, in a certain section of the flow path, the coolant can only flow from one end to the other end of that section of the flow path. Therefore, one end of the compressor flow path 121 described in this embodiment is an inlet of the compressor flow path 121, and the other end of the compressor flow path 121 is an outlet of the compressor flow path 121. One end of the in-vehicle condenser flow path 141 is an inlet of the in-vehicle condenser flow path 141, and the other end of the in-vehicle condenser flow path 141 is an outlet of the in-vehicle condenser flow path 141. One end of the in-vehicle evaporator flow path 152 is an inlet of the in-vehicle evaporator flow path 152, and the other end of the in-vehicle evaporator flow path 152 is an outlet of the in-vehicle evaporator flow path 152. One end of the heating flow path 181 is an inlet of the heating flow path 181, and the other end of the heating flow path 181 is an outlet of the heating flow path 181. So do other flow paths, that is, one end is an inlet for the refrigerant, and the other end is an outlet for the refrigerant. They are not listed one by one herein.

In this embodiment, by disposing the outdoor heat exchanger 11 in the air-conditioning refrigerating-heating loop 1, which functions as an evaporator when the passenger compartment has a heating demand, and function as a condenser when the passenger compartment has a refrigerating demand, thus controlling the temperature of the passenger compartment by varying the temperature and state of the refrigerant. As a result, disposing only one component can achieve the dual functions of refrigerating and heating, with higher integration and lower cost.

Next, with reference to Fig.1, the battery thermal management loop 2 will be illustrated.

A battery cooler 4 is arranged between the air-conditioning refrigerating-heating loop 1 and the battery thermal management loop 2. The battery cooler 4 has no essential difference in structure from a battery cooler 4 in the prior art, and its principle has been described in detail in the air-conditioning refrigerating-heating loop 1, which will not be repeated in this embodiment.

The battery 21 is arranged in the battery thermal management loop 2. The structure of the battery 21 also belongs to the prior art, which will not be repeated in this embodiment. The battery thermal management loop 2 includes a battery coolant main path 8 and a battery flow path 9 which are sequentially connected in series. The thermoelectric heat exchanger 5 and the battery cooler 4 both are disposed on the battery coolant main path 8, and the battery 21 is disposed on the battery flow path 9. The battery thermal management loop 2 further includes a battery bypass 22 and a battery-flow-path switch component 23. The battery bypass 22 is connected in parallel with the battery coolant main path 8. The battery-flow-path switch component 23 is connected between the other end of the battery coolant main path 8, one end of the battery bypass 22, and one end of the battery flow path 9.

It should be explained that, the battery bypass 22 is a short bypass.

It should further be explained that, a battery-loop water pump 24 is further arranged in the battery coolant main path 8, and the battery-loop water pump 24 is disposed between the thermoelectric heat exchanger 5 and the battery-flow-path switch component 23. The battery-loop water pump 24 mainly functions to regulate the flow direction of the coolant in the battery thermal management loop 2. Therefore, the one ends and the other ends of the battery coolant main path 8, the battery bypass 22, and the battery flow path 9 do not simply represent outlets and inlets of the battery coolant main path 8, the battery bypass 22, and the battery flow path 9. When a regulation direction by the battery-loop water pump 24 is a first direction, the one ends of the battery coolant main path 8, the battery bypass 22, and the battery flow path 9 are inlets of the battery coolant main path 8, the battery bypass 22, and the battery flow path 9, and, the other ends of the battery coolant main path 8, the battery bypass 22, and the battery flow path 9 are outlets of the battery coolant main path 8, the battery bypass 22, and the battery flow path 9. When the regulation direction by the battery-loop water pump 24 is a second direction opposite to the first direction, the situation is the opposite.

Specifically, the battery-flow-path switch component 23 is a three-way valve which has a first port a, a second port b, and a third port c. The first port a is connected with the other end of the battery coolant main path 8. The second port b is connected with one end of the battery bypass 22, and the third port c is connected with one end of the battery flow path 9.

The principle of the battery thermal management loop 2 will be illustrated below in conjunction with Fig.1. The battery thermal management loop 2 in this embodiment is mainly used for thermal management of the battery 21, which functions to cool down the battery 21, and to transfer the heat of the electric-drive thermal management loop 3 to the air-conditioning refrigerating-heating loop 1.

In summer, the refrigerant in the battery cooler 4 absorbs the heat of the coolant in the battery cooler 4, to cool down the coolant in the battery thermal management loop 2. The cooled coolant then cools the battery 21, to control the temperature of the coolant for the battery in the range of 15°C~25°C.

In some cases, the thermoelectric heat exchanger 5 also operates, and the side of the thermoelectric heat exchanger 5 contacting with the battery thermal management loop 2 is a refrigerating side, which is capable of further lowering the temperature of the coolant in the battery thermal management loop 2, to cool down the battery.

In winter, the coolant flows through the battery bypass 22 and does not flow through the battery 21, so as to prevent the temperature of the coolant from being too low to affect the working efficiency of the battery 21.

In some cases, the thermoelectric heat exchanger 5 also operates, and the side of the thermoelectric heat exchanger 5 contacting with the battery thermal management loop 2 is a heating side, which is capable of heating the coolant in the battery thermal management loop 2. As needed, the thermoelectric heat exchanger 5 can use the environment temperature or a waste heat from the electric drive assembly 31 to heat the battery 21, or transfer it to the air-conditioning refrigerating-heating loop 1 via the battery thermal management loop 2.

It should be explained that, in this embodiment, by disposing the battery bypass 22 to bypass the battery flow path 9, and utilizing the battery-flow-path switch component 23 to regulate a connection state of the battery bypass 22 or the battery flow path 9, when the battery 21 needs no refrigerating or the temperature of the refrigerant is relatively low, the coolant only flows through the battery bypass 22 and does not flow through the battery flow path 9, which can prevent the temperature of the coolant from being too low to affect the working efficiency of the battery 21.

Next, with reference to Fig.1, the electric-drive thermal management loop 3 will be illustrated.

The electric-drive thermal management loop 3 includes an electric-drive coolant main path 6 and a heat-dissipation main path 7 which are sequentially connected in series. An electric drive assembly 31 is arranged in the electric-drive coolant main path 6. A radiator 32 is arranged in the heat-dissipation main path 7. In this embodiment, the electric drive assembly 31 includes a motor 311, and a charger 312. The electric drive assembly 31 is also an object of thermal management. The electric drive assembly 31 can be thermally managed by heating or cooling down the coolant of the electric-drive thermal management loop 3, according to actual needs. The radiator 32 is mainly used to realize heat exchange of the coolant with the environment. When the coolant temperature is higher than the environment temperature, the heat shifts from the coolant to the environment. When the coolant temperature is lower than the environment temperature, the heat shifts from the environment to the coolant.

The electric-drive thermal management loop 3 further includes a heat-dissipation bypass 33 and an electric-drive-flow-path switch component 34. The heat-dissipation bypass 33 and the heat-dissipation main path 7 are connected in parallel. The electric-drive-flow-path switch component 34 is connected between one end of the heat-dissipation main path 7, one end of the heat-dissipation bypass 33 and one end of the electric-drive coolant main path 6. After the electric-drive coolant main path 6 selectively communicates with the heat-dissipation main path 7 or the heat-dissipation bypass 33 by the electric-drive-flow-path switch component 34, a loop is formed.

It should be explained that, the heat-dissipation bypass 33 is a short bypass. In this embodiment, by disposing the heat-dissipation bypass 33 in the electric-drive thermal management loop 3, there is no need to connect the radiator 32 when the environment temperature is relatively low or there is no need to absorb heat from the environment, thereby avoiding a problem that, the heat generated by the electric drive assembly 31 is conducted to the environment, thereby causing a waste, or that, the relatively low temperature of the coolant in the electric-drive thermal management loop 3 causes a reduced working efficiency of the electric drive assembly 31.

Specifically, in this embodiment, the electric-drive coolant main path 6 includes a thermoelectric-heat-exchange flow path 61 and an electric-drive flow path 62 which are sequentially connected in series. The thermoelectric heat exchanger 5 is disposed in the thermoelectric-heat-exchange flow path 61. The electric drive assembly 31 is disposed in the electric-drive flow path 62. The other end of the thermoelectric-heat-exchange flow path 61 is one end of the electric-drive coolant main path 6, and is connected with the electric-drive-flow-path switch component 34. One end of the electric-drive flow path 62 is the other end of the electric-drive coolant main path 6, and is connected with the other end of the heat-dissipation main path 7, and the other end of the heat-dissipation bypass 33. The electric-drive thermal management loop further includes a thermoelectric-heat-exchange bypass 37. One end of the thermoelectric-heat-exchange bypass 37 is connected with one end of the thermoelectric-heat-exchange flow path 61, and the other end of the thermoelectric-heat-exchange bypass 37 is connected with the electric-drive-flow-path switch component 34, so that the thermoelectric-heat-exchange bypass 37 and the thermoelectric-heat-exchange flow path 61 are disposed in parallel. The electric-drive-flow-path switch component 34 selectively brings the heat-dissipation main path 7 or the heat-dissipation bypass 33 communicate with the thermoelectric-heat-exchange flow path 61 or the thermoelectric-heat-exchange bypass 37 and subsequently communicate with the electric-drive flow path 62, to form a loop.

In this embodiment, by disposing the thermoelectric-heat-exchange bypass 37, when the thermoelectric heat exchanger 5 is not energized, the coolant flows through the thermoelectric-heat-exchange bypass 37 and does not flow through the thermoelectric heat exchanger 5. As a result, the thermoelectric heat exchanger 5 can be easily repaired and replaced. Even if the thermoelectric heat exchanger 5 malfunctions, the thermoelectric-heat-exchange bypass 37 can be temporarily used to ensure a flow in the loop, and maintain a basic refrigerating or heating demand, thereby improving a stability of the system.

More specifically, in this embodiment, the electric-drive-flow-path switch component 34 is a four-way valve. The four-way valve has a first port a, a second port b, a third port c, and a fourth port d. The first port a is connected with one end of the heat-dissipation main path 7. The second port b is connected with the other end of the thermoelectric-heat-exchange flow path 61. The third port c is connected with the other end of the thermoelectric-heat-exchange bypass 37. The fourth port d is connected with one end of the heat-dissipation bypass 33. An electric-drive-loop water pump 35 is further arranged in the electric-drive flow path 62, and the electric-drive-loop water pump 35 is disposed between the thermoelectric heat exchanger 5 and the electric drive assembly 31.

More specifically, the four-way valve is a solenoid valve, which controls different flow paths in the electric-drive thermal management loop 3 to form a loop, by controlling opening-closure of any two ports of the first port a, the second port b, the third port c, and the fourth port d.

In other words, in this embodiment, by conversion between the ports of the four-way valve, it can be achieved that, the heat-dissipation main path 7 or the heat-dissipation bypass 33 communicates with the thermoelectric-heat-exchange flow path 61 or the thermoelectric-heat-exchange bypass 37, and subsequently communicates with the electric-drive flow path 62, to form a loop. Specifically, when the first port a communicates with the second port b, the heat-dissipation main path 7 communicates with the thermoelectric-heat-exchange flow path 61. When the first port a communicates with the third port c, the heat-dissipation main path 7 communicates with the thermoelectric-heat-exchange bypass 37. When the second port b communicates with the fourth port d, the thermoelectric-heat-exchange flow path 61 communicates with the heat-dissipation bypass 33. When the third port c communicates with the fourth port d, the thermoelectric-heat-exchange bypass 37 communicates with the heat-dissipation bypass 33.

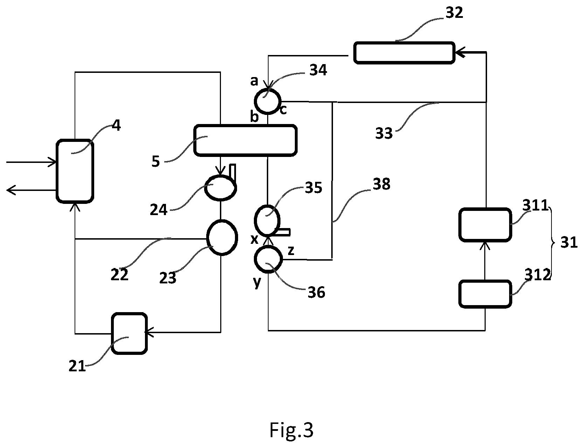

Further, with reference to Fig.3, in another embodiment of this disclosure, the electric-drive coolant main path 6 includes a thermoelectric-heat-exchange flow path 61 and an electric-drive flow path 62 which are sequentially connected in series. The thermoelectric heat exchanger 5 is disposed in the thermoelectric-heat-exchange flow path 61. The electric drive assembly 31 is disposed in the electric-drive flow path 62. The other end of the thermoelectric-heat-exchange flow path 61 is one end of the electric-drive coolant main path 6, and is connected with the electric-drive-flow-path switch component 34. One end of the electric-drive flow path 62 is the other end of the electric-drive coolant main path 6, and is connected with the other end of the heat-dissipation main path 7, and the other end of the heat-dissipation bypass 33.

An electric-drive-loop water pump 35 and a heat-exchange three-way valve 36 are further arranged in the thermoelectric-heat-exchange flow path 61. The electric-drive-loop water pump 35 and the heat-exchange three-way valve 36 are connected in series. Further, the electric-drive-loop water pump 35 is disposed between the heat-exchange three-way valve 36 and the thermoelectric heat exchanger 5.

The electric-drive thermal management loop further includes an electric-drive bypass 38. One end of the electric-drive bypass 38 is connected with the heat-exchange three-way valve 36, and the other end of the electric-drive bypass 38 is connected with the heat-dissipation bypass 33, so that the electric-drive bypass 38 and the electric-drive flow path 62 are disposed in parallel.

Specifically, the heat-exchange three-way valve 36 has a first port x, a second port y, and a third port z. The first port x of the heat-exchange three-way valve 36 is connected with the electric-drive-loop water pump 35. The second port y of the heat-exchange three-way valve 36 is connected with the other end of the electric-drive flow path 62. The third port z of the heat-exchange three-way valve 36 is connected with one end of the electric-drive bypass 38. Specifically, when the first port x of the heat-exchange three-way valve 36 communicates with the second port y of the heat-exchange three-way valve 36, the thermoelectric-heat-exchange flow path 61 communicates with the electric-drive flow path 62. When the first port x of the heat-exchange three-way valve communicates with the third port z of the heat-exchange three-way valve, the thermoelectric-heat-exchange flow path 61 communicates with the electric-drive bypass 38.

More specifically, the electric-drive-flow-path switch component 34 is a three-way valve. The three-way valve has a first port a, a second port b, and a third port c. The first port a of the three-way valve is connected with one end of the heat-dissipation main path 7. The second port b of the three-way valve is connected with the other end of the thermoelectric-heat-exchange flow path 61. The third port c of the three-way valve is connected with one end of the heat-dissipation bypass 33. Specifically, when the first port a of the three-way valve communicates with the second port b of the three-way valve, the heat-dissipation main path 7 communicates with the thermoelectric-heat-exchange flow path 61. When the second port b of the three-way valve communicates with the third port c of the three-way valve, the thermoelectric-heat-exchange flow path 61 communicates with the heat-dissipation bypass 33. Furthermore, when the first port a of the electric-drive-flow-path switch component 34 communicates with the second port b of the electric-drive-flow-path switch component 34, and the first port x of the heat-exchange three-way valve 36 communicates with the third port z of the heat-exchange three-way valve 36, the coolant flows through the heat-dissipation main path 7, the thermoelectric-heat-exchange flow path 61, and the electric-drive bypass, but does not flow through the electric-drive flow path 62.

It should further be explained that, each of the heat-exchange three-way valve 36 and the electric-drive-flow-path switch component 34 is a solenoid valve.

In this embodiment, by disposing the electric-drive bypass 38, when the coolant temperature in the electric-drive thermal management loop 3 is too low, the coolant flows through the electric-drive bypass 38 and does not flow through the electric-drive flow path 62, avoiding the problem that the working efficiency of the electric drive assembly 31 is affected due to the relatively low coolant temperature.

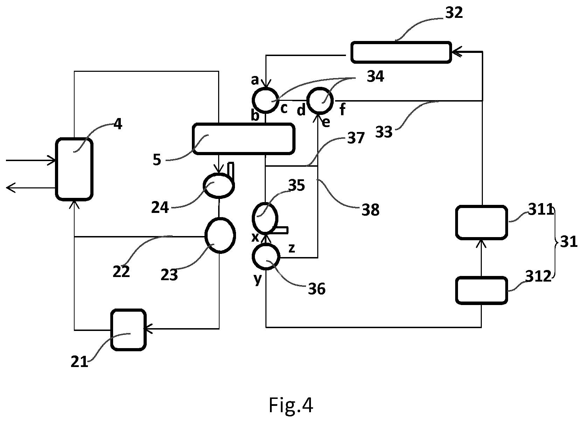

Still further, with reference to Fig.4, in another embodiment of this disclosure, the electric-drive coolant main path 6 includes a thermoelectric-heat-exchange flow path 61 and an electric-drive flow path 62 which are sequentially connected in series. The thermoelectric heat exchanger 5 is disposed on the thermoelectric-heat-exchange flow path 61. The electric drive assembly 31 is disposed on the electric-drive flow path 62. The other end of the thermoelectric-heat-exchange flow path 61 is one end of the electric-drive coolant main path 6, and is connected with the electric-drive-flow-path switch component 34. One end of the electric-drive flow path 62 is the other end of the electric-drive coolant main path 6, and is connected with the other end of the heat-dissipation main path 7, and the other end of the heat-dissipation bypass 33. An electric-drive-loop water pump 35 and a heat-exchange three-way valve 36 are further arranged in the thermoelectric-heat-exchange flow path 61. The electric-drive-loop water pump 35 and the heat-exchange three-way valve 36 are connected in series. Further, the electric-drive-loop water pump 35 is disposed between the heat-exchange three-way valve 36 and the thermoelectric heat exchanger 5.

The electric-drive thermal management loop further includes a thermoelectric-heat-exchange bypass 37 and an electric-drive bypass 38. One end of the thermoelectric-heat-exchange bypass 37 is connected with the electric-drive-loop water pump 35, and the other end of the thermoelectric-heat-exchange bypass 37 is connected with the electric-drive-flow-path switch component 34, so that the thermoelectric-heat-exchange bypass 37 and the thermoelectric heat exchanger 5 are disposed in parallel. One end of the electric-drive bypass 38 is connected with the heat-exchange three-way valve 36, and the other end of the electric-drive bypass 38 is connected with the electric-drive-flow-path switch component 34, so that the electric-drive bypass 38 and the electric-drive flow path 62 are disposed in parallel.

Specifically, the heat-exchange three-way valve 36 has a first port x, a second port y, and a third port z. The first port x of the heat-exchange three-way valve 36 is connected with the electric-drive-loop water pump 35. The second port y of the heat-exchange three-way valve 36 is connected with the other end of the electric-drive flow path 62. The third port z of the heat-exchange three-way valve 36 is connected with one end of the electric-drive bypass 38. Specifically, when the first port x of the heat-exchange three-way valve 36 communicates with the second port y of the heat-exchange three-way valve 36, the thermoelectric-heat-exchange flow path 61 communicates with the electric-drive flow path 62. When the first port x of the heat-exchange three-way valve communicates with the third port z of the heat-exchange three-way valve, the thermoelectric-heat-exchange flow path 61 communicates with the electric-drive bypass 38.

More specifically, the electric-drive-flow-path switch component 34 includes a first three-way valve and a second three-way valve which are connected in series. The first three-way valve and the second three-way valve both have a first port, a second port, and a third port. The first port a of the first three-way valve is connected with one end of the heat-dissipation main path 7. The second port b of the first three-way valve is connected with the other end of the thermoelectric-heat-exchange flow path 61. The third port c of the first three-way valve is connected with the first port d of the second three-way valve. The second port e of the second three-way valve is connected with the other end of the thermoelectric-heat-exchange bypass 37 and the other end of the electric-drive bypass 38. The third port f of the second three-way valve is connected with one end of the heat-dissipation bypass 33. Specifically, when the first port a of the first three-way valve communicates with the second port b of the first three-way valve, and the second port e of the second three-way valve communicates with the third port f of the second three-way valve, the heat-dissipation main path 7 communicates with the heat-dissipation bypass. When the first port a of the first three-way valve communicates with the third port c of the first three-way valve, and the first port d of the second three-way valve communicates with the second port e of the second three-way valve, the heat-dissipation main path 7 communicates with the thermoelectric-heat-exchange bypass 37, and the electric-drive flow path 62. Furthermore, when the first port a of the first three-way valve communicates with the second port b of the first three-way valve, the second port e of the second three-way valve communicates with the third port f of the second three-way valve, and the first port x of the heat-exchange three-way valve 36 communicates with the third port z of the heat-exchange three-way valve 36, the coolant flows through the heat-dissipation bypass 33, the heat-dissipation main path 7, the thermoelectric-heat-exchange flow path 61 and the electric-drive bypass 38, but does not flow through the electric-drive flow path 62.

It should be explained that, each of the first three-way valve and the second three-way valve both are solenoid valves.

In this embodiment, by disposing the electric-drive bypass 38, when the coolant temperature in the electric-drive thermal management loop 3 is too low, the coolant flows through the electric-drive bypass 38 and does not flow through the electric-drive flow path 62, avoiding the problem that the working efficiency of the electric drive assembly 31 is affected due to the relatively low coolant temperature.

The principle of the electric-drive thermal management loop 3 will be illustrated below in conjunction with Fig.1, Fig.3, and Fig.4. The electric-drive thermal management loop 3 in this embodiment is mainly used for thermal management of the battery 31, and heat transferring of the environment and the battery thermal management loop 2.

In winter, when the temperature of the coolant of the electric-drive thermal management loop 3 is lower than the environment temperature, the coolant can pass through the radiator 32 to absorb heat from the environment, and then transmit the heat from the environment to the battery thermal management loop 2 via the thermoelectric heat exchanger 5. Furthermore, the heat generated by the electric drive assembly 31 can further be transmitted to the battery thermal management loop 2 via the thermoelectric heat exchanger 5.

When the temperature of the coolant of the electric-drive thermal management loop 3 is greater than or equal to the environment temperature, the radiator 32 cannot absorb heat from the environment. At this time, the radiator 32 can be bypassed, so that the temperature of the electric drive assembly 31 is transmitted to the battery thermal management loop 2.

In summer, the heat in the battery thermal management loop 2 can be dissipated into the environment via the radiator 32 of the electric-drive thermal management loop 3.

It should be explained that, the electric-drive-loop water pump 35 mainly functions to regulate a flow direction of the coolant in the electric-drive thermal management loop 3. Therefore, one ends and other ends of the electric-drive coolant main path 6, the heat-dissipation main path 7, and the heat-dissipation bypass 33 do not simply represent outlets and inlets of the electric-drive coolant main path 6, the heat-dissipation main path 7, and the heat-dissipation bypass 33. When the regulation direction of the electric-drive-loop water pump 35 is a first direction, the one ends of the electric-drive coolant main path 6, the heat-dissipation main path 7, and the heat-dissipation bypass 33 are inlets of the electric-drive coolant main path 6, the heat-dissipation main path, and the heat-dissipation bypass 33, and the other ends of the electric-drive coolant main path 6, the heat-dissipation main path 7, and the heat-dissipation bypass 33 are outlets of the electric-drive coolant main path 6, the heat-dissipation main path 7, and the heat-dissipation bypass 33. When the regulation direction of the electric-drive-loop water pump 35 is a second direction opposite to the first direction, the situation is the opposite.

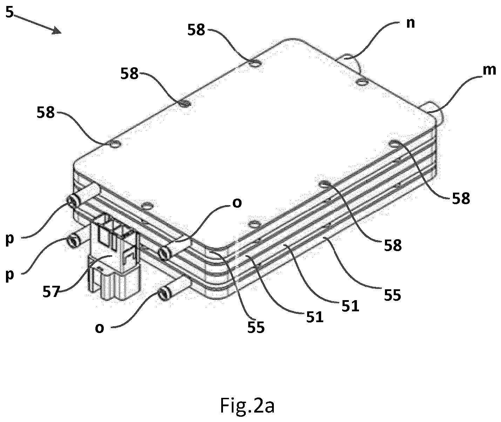

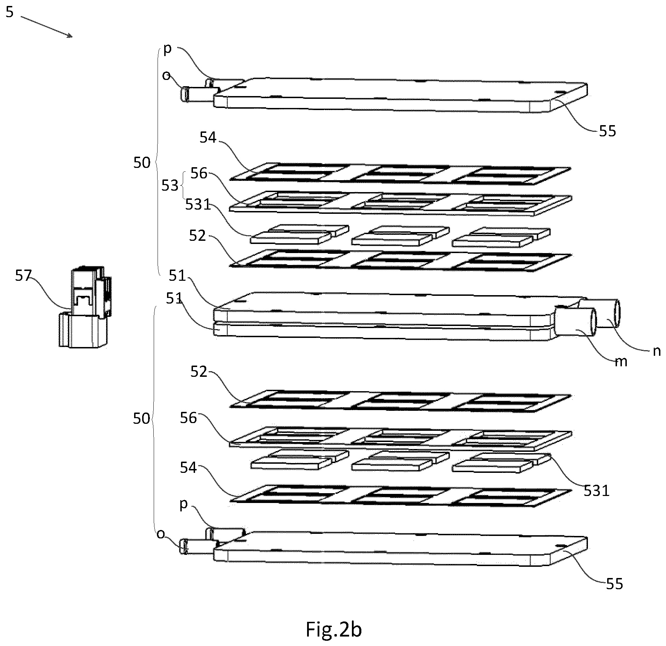

Next, with reference to Fig.1, Fig.2a and Fig.2b, the thermoelectric heat exchanger 5 will be illustrated.

With reference to Fig.1, the thermoelectric heat exchanger 5 is disposed between the battery thermal management loop 2 and the electric-drive coolant main path 6 of the electric-drive thermal management loop 3, to regulate a heat transferring state of the coolant between the battery thermal management loop 2 and the electric-drive thermal management loop 3 by the thermoelectric heat exchanger 5. In other words, the thermoelectric heat exchanger 5 causes the heat exchange between the battery thermal management loop 2 and the electric-drive thermal management loop 3. Furthermore, the refrigerating and heating of the thermoelectric heat exchanger 5 can be reversed, so that the heat can be transferred from the battery thermal management loop 2 to the electric-drive thermal management loop 3, and the heat can also be transferred from the electric-drive thermal management loop 3 to the battery thermal management loop 2. The reversion of refrigerating and heating of the thermoelectric heat exchanger 5 can be realized by converting positive and negative poles of a power supply.

Specifically, with reference to Fig.2b, the thermoelectric heat exchanger 5 includes a thermoelectric heat exchange unit 50. The thermoelectric heat exchange unit 50 includes a battery liquid-cooling module 51, a thermoelectric module, and an electric-drive liquid-cooling module 55, which are sequentially stacked along a thickness direction of the thermoelectric heat exchanger 5. One side of the thermoelectric module contacts with the battery liquid-cooling module 51, and the other side of the thermoelectric module contacts with the electric-drive liquid-cooling module 55. The battery liquid-cooling module 51 is disposed in the battery thermal management loop 2, and is disposed in series with the battery 21. The electric-drive liquid-cooling module 55 is disposed in the electric-drive coolant main path 6, and is disposed in series with the electric drive assembly 31.

It should be explained that, with reference to Fig.2a and Fig.2b, a connector 57 is further arranged on a side face of the thermoelectric heat exchange unit 50, so as to facilitate connecting multiple thermoelectric heat exchange units 50 to form a thermoelectric heat exchanger 5 with a larger volume. With reference to Fig.2a, mounting holes 58 are arranged at edges of the battery liquid-cooling module 51 and the electric-drive liquid-cooling module 55, for completing an installation and connection between a semiconductor layer, a thermally-conductive layer, a battery liquid-cooling module 51, and the electric-drive liquid-cooling module 55.

More specifically, the thermoelectric module includes a first thermally-conductive layer 52, a semiconductor layer 53, and a second thermally-conductive layer 54, which are sequentially stacked along the thickness direction of the thermoelectric heat exchange unit 50. One side of the first thermally-conductive layer 52 contacts with the battery liquid-cooling module 51, and the other side of the first thermally-conductive layer 52 contacts with one side of the semiconductor layer 53. The other side of the semiconductor layer 53 contacts with one side of the second thermally-conductive layer 54. The other side of the second thermal-conductive layer 54 contacts with the electric-drive liquid-cooling module 55. Further, the semiconductor layer 53 includes a plurality of semiconductors 531 arranged in a matrix. A plurality of semiconductors 531 arranged in a matrix are supported by a support frame 56, to form the semiconductor layer 53.

Specifically, the semiconductor layer 53 is used to generate heat after being energized, so as to heat the battery liquid-cooling module 51 and the electric-drive liquid-cooling module 55. Each of the battery liquid-cooling module 51 and the electric-drive liquid-cooling module 55 is a water-cooling plate. The first thermally-conductive layer 52 and the thermally-conductive layer 54 both are disposed for better heat transferring.

In this embodiment, the thermoelectric heat exchanger 5 has two thermoelectric heat exchange units 50 which are are sequentially stacked in the thickness direction of the thermoelectric heat exchanger 5. The battery liquid-cooling module 51 of one of the thermoelectric heat exchange units 50 is disposed near the battery liquid-cooling module 51 of the other of the thermoelectric heat exchange units 50. Further, a third thermally-conductive layer is further arranged between the battery liquid-cooling module 51 of the one of the thermoelectric heat exchange units 50 and the battery liquid-cooling module 51 of the other of the thermoelectric heat exchange units 50.

It should be explained that, a battery loop water inlet m and a battery loop water outlet n are further arranged at a side face of each battery liquid-cooling module 51. An electric-drive loop water inlet o and an electric-drive loop water outlet p are further arranged at a side face of each electric-drive liquid-cooling module 55.

It should further be explained that, in this embodiment, a refrigerating side and a heating side of the thermoelectric heat exchanger 5 are changed, by changing energized positive and negative poles of the battery liquid-cooling module 51 and the electric-drive liquid-cooling module 55. When it needs to set the side of the thermoelectric heat exchanger 5 near the battery thermal management loop 2 as the heating side, the battery liquid-cooling module 51 is connected to the positive pole. When it needs to set the side of the thermoelectric heat exchanger 5 near the battery thermal management loop 2 as the refrigerating side, the battery liquid-cooling module 51 is connected to the negative pole. After the polarity of the battery liquid-cooling module 51 is defined, the polarity of the electric-drive liquid-cooling module 55 is naturally defined.

It should be understood that, in other embodiment of this disclosure, one thermoelectric heat exchanger 5 may further include three, four, or even more thermoelectric heat exchange units 50, which are sequentially stacked in the thickness direction of the thermoelectric heat exchanger 5. Furthermore, the numbers of the semiconductor layer 53 and the thermally-conductive layer can further be set according to actual needs on heat generation and heat conduction, which is not limited to this embodiment.

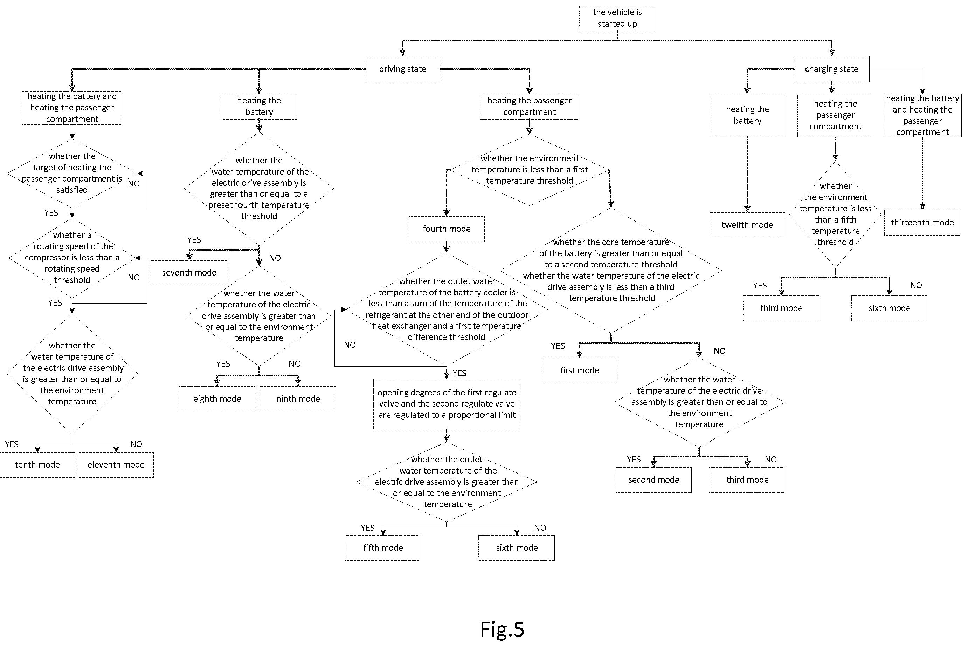

Based on above vehicle thermal management system, the embodiment of this disclosure also provides a vehicle thermal management method. Furthermore, the vehicle thermal management method provided in this embodiment is suitable for the vehicle thermal management system described in the above embodiment. Specifically, with reference to Fig.5, the vehicle thermal management method includes following steps:
S1: acquiring a startup information of a vehicle, and judging whether the vehicle is started up according to the startup information of the vehicle;
If yes, step S2 is performed;
If no, it is repeatedly judged whether the vehicle is started up;
S2: acquiring a state information of the vehicle from a power management module of the vehicle, and judging whether the vehicle is currently in a driving state according to the state information of the vehicle;
If the vehicle is currently in the driving state, step S3 is performed;
If the vehicle is not currently in the driving state, it is repeatedly judged whether the vehicle is currently in the driving state;
S3: acquiring a state information of a battery and a state information of a passenger compartment in the vehicle thermal management system, and judging whether a thermal management demand of the vehicle is only heating the passenger compartment according to the state information of the battery and the state information of the passenger compartment;
If yes, step S4 is performed;
If no, it is repeatedly judged whether the thermal management demand of the vehicle is only heating the passenger compartment;
S4: judging whether an environment temperature is less than a preset first temperature threshold;
If yes, it is judged whether a core temperature of the battery is greater than or equal to a preset second temperature threshold, and whether a water temperature of the electric drive assembly is less than a preset third temperature threshold;
If the core temperature of the battery is greater than or equal to the preset second temperature threshold, and the water temperature of electric drive assembly is less than the preset third temperature threshold, the vehicle thermal management system enters a first mode.
If the core temperature of the battery is less than the preset second temperature threshold, or the water temperature of the electric drive assembly is greater than or equal to the preset third temperature threshold, it is judged whether the water temperature of the electric drive assembly is greater than or equal to the environment temperature.
If the water temperature of the electric drive assembly is greater than or equal to the environment temperature, the vehicle thermal management system enters a second mode.
If the water temperature of the electric drive assembly is less than the environment temperature, the vehicle thermal management system enters a third mode.

It should be explained that, the startup information of the vehicle includes, but is not limited to, an engine rotating speed, a vehicle controller power-on information, and an engine temperature. When the engine rotating speed is greater than zero, or the vehicle controller is powered on, or the engine temperature continuously rises, it indicates that the vehicle is started up.

The state information of the vehicle can be acquired directly from a power management module of the vehicle. The state of vehicle is typically divided into two types, i.e., a driving state and a charging state. The charging state in turn can be subdivided into fast charging and slow charging.

It should further be explained that, the state information of the battery includes, but is not limited to, a battery temperature, and the state information of the passenger compartment includes, but is not limited to, a temperature of the passenger compartment. For example, when the temperature of the battery is less than a preset temperature threshold of about 25°C, the battery needs to be heated. When the temperature of the battery is greater than the preset temperature threshold of about 45°C, the battery needs to be cooled down. When a air-conditioning temperature regulation button of the passenger compartment indicates "heating", it shows that the passenger compartment needs to be heated. When the temperature regulation button of the passenger compartment indicates "refrigerating", it shows that the passenger compartment needs to be cooled down. Of course, it is possible to comprehensively judge whether it needs to heat or refrigerate the passenger compartment, in combination with an inside temperature, an outside temperature, and a difference between the inside temperature and the outside temperature.

In this embodiment, the step S4 can judge whether the thermal management demand of the vehicle is only heating the passenger compartment. In other words, there is no need to refrigerate or heat the battery at this time, but only to heat the passenger compartment.

It should be understood that, the core temperature and the water temperature of the electric drive assembly, etc., all can be collected by temperature sensors.

Preferably, a range of the preset first temperature threshold is -13°C to -17°C. For example, it can be -13°C, -15°C, -16.5°C, -17°C, or other values within this range.

A range of the preset second temperature threshold is 15°C to 25°C. For example, it can be 15° C, 20° C, 23.5° C, 25° C, or other values within this range.

A range of the preset third temperature threshold is 0°C to 10°C. For example, it can be 0° C, 5° C, 7.5° C, 10° C, or other values within this range.

Operating states of components of the vehicle thermal management system in the first mode, the second mode, and the third mode can refer to following table 1:

**Table 1**

| | | refrigerant side | | | | | | coolant side | | | |
|---|---|---|---|---|---|---|---|---|---|---|---|
| mode | thermoelectric heat exchanger | 3^{rd} regulate valve | 1^{st} regulate valve | 2^{nd} regulate valve | bypass valve | heating valve | function valve | battery-flow-path switch component | electric-drive-flow-path switch component | battery thermal management loop water pump | electric-drive-loop water pump |
| 1^{st} mode: winter: heating passenger compartment of ultra-low temperature (two stages of heat pumps + absorb heat stored in battery) | not energized | closed | closed | half-opened for throttling | closed | closed | opened | a&c in communication | d&c in communication | in operation | in operation |
| 2^{nd} mode: winter: heating passenger compartment (two stages of heat pumps + primary heat pump system absorbs heat from the motor) | energized, battery side is hot side | closed | closed | half-opened for throttling | closed | closed | opened | a&b in communication | b&d in communication | in operation | in operation |
| 3^{rd} mode: winter: heating passenger compartment of ultra-low temperature (two stages of heat pumps + primary heat pump absorbs heat from environment) | energized, battery side is hot side | closed | closed | half-opened for throttling | closed | closed | opened | a&b in communication | a&b in communication | in operation | in operation |

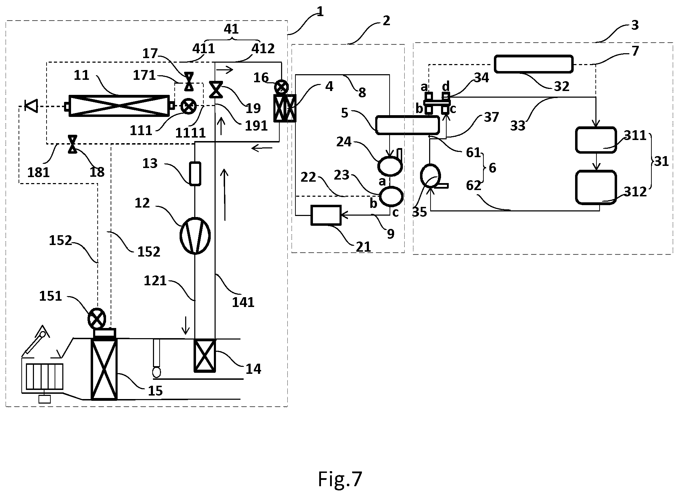

With reference to Fig.5 and Fig.7, in the first mode, the thermoelectric heat exchanger 5 is not energized. The battery-loop water pump 24 of the battery thermal management loop 2 operates, and the battery coolant main path 8 of the battery thermal management loop 2 communicates with the battery flow path 9. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The compressor flow path 121, the in-vehicle condenser flow path 141, the function-valve flow path 191 and the battery-cooler flow path 412 of the air-conditioning refrigerating-heating loop 1 are in communication, to form a loop.

It should be explained that, in Fig.7, the dotted line in the air-conditioning refrigerating-heating loop 1 represents a flow path through which the refrigerant does not pass, and the solid line represents a flow path through which the refrigerant passes. The arrow next to the solid line represents a flow direction of the refrigerant. The dotted lines in the battery thermal management loop 2 and the electric-drive thermal management loop 3 represent flow paths through which the coolant does not pass, the solid line represents flow paths through which the coolant passes, and the arrow on the solid line indicates a flow direction of the coolant.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the first mode, the first port a of the battery-flow-path switch component 23 communicates with the third port c of the battery-flow-path switch component 23; the third port c of the electric-drive-flow-path switch component 34 communicates with the fourth port d of the electric-drive-flow-path switch component 34; the first regulate valve 111 is closed; the second regulate valve 16 is half-opened for throttling; the third regulate valve 151 is closed; the bypass valve 17 is closed; the heating valve 18 is closed; and the function valve 19 is opened.

In the air-conditioning refrigerating-heating loop 1, the compressor 12 is in a heating mode. The high-temperature and high-pressure gas refrigerant out from the compressor 12 first passes through the in-vehicle condenser 14. At this time, the temperature damper of the air-conditioning box in the passenger compartment is in a fully-heating mode, and the air exchanges heat with the in-vehicle condenser 14, condenses and releases heat to heat the passenger compartment. At the same time, there is only one flow path after the refrigerant becomes a medium-temperature and high-pressure liquid, that is, after throttled by the second regulate valve 16, it passes through the function valve 19, enters the battery cooler 4 to absorb heat in the coolant, becomes a low-temperature and low-pressure gas, and returns to the compressor 12.

In the battery thermal management loop 2, the coolant cooled down by the battery cooler 4 enters the battery 21, and absorbs the heat stored in the battery 21.

In the electric-drive thermal management loop 3, when the water temperature of the electric drive assembly 31 is less than the environment temperature, the heat of the electric drive assembly 31 is stored.

At this time, the heat of the passenger compartment is a sum of a power consumption amount of the compressor 12 and the heat of the battery 21 absorbed by the battery cooler 4.

Preferably, while the electric-drive coolant main path 6 includes the thermoelectric-heat-exchange flow path 61 and the electric-drive flow path 62 which are sequentially connected in series, and the electric-drive thermal management loop 3 further includes the thermoelectric-heat-exchange bypass 37, in the first mode, the electric-drive-flow-path switch component 34 brings the electric-drive flow path 62 in communication with the thermoelectric-heat-exchange bypass and the heat-dissipation bypass 33, to form a loop. Furthermore, when the electric-drive-flow-path switch component 34 is a four-way valve, the first port a of the four-way valve is connected with one end of the heat-dissipation main path 7, the second port b is connected with the other end of the thermoelectric-heat-exchange flow path 61, the third port c is connected with the other end of the thermoelectric-heat-exchange bypass 37, and the fourth port d is connected with one end of the heat-dissipation bypass 33, the third port c and the fourth port d of the four-way valve are in communication.

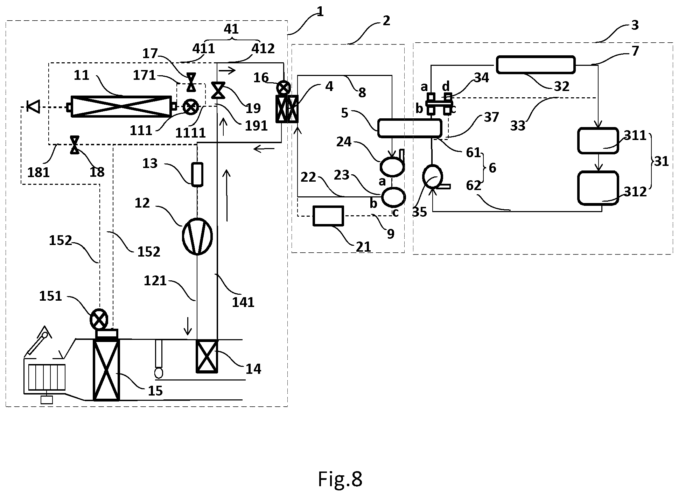

With reference to Fig.5 and Fig.8, in the second mode, the thermoelectric heat exchanger 5 is energized. Further, one side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery bypass 22 of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The compressor flow path 121, the in-vehicle condenser flow path 141, the function-valve flow path 191 and the battery-cooler flow path 412 of the air-conditioning refrigerating-heating loop 1 are in communication, to form a loop.

It should be explained that, in Fig.8, the dotted line in the air-conditioning refrigerating-heating loop 1 represents a flow path through which the refrigerant does not pass, and the solid line represents a flow path through which the refrigerant passes. The arrow next to the solid line represents a flow direction of the refrigerant. The dotted lines in the battery thermal management loop 2 and the electric-drive thermal management loop 3 represent flow paths through which the coolant does not pass, the solid line represents a flow path through which the coolant passes, and the arrow on the solid line indicates a flow direction of the coolant.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the second mode, the first port a and the second port b of the battery-flow-path switch component 23 are in communication, and the second port b and the fourth port d of the electric-drive-flow-path switch component 34 are in communication; the first regulate valve 111 is closed; the second regulate valve 16 is half-opened for throttling; the third regulate valve 151 is closed; the bypass valve 17 is closed; the heating valve 18 is closed; and the function valve 19 is opened.

In other words, when the environment temperature is relatively low and the electric-drive thermal management loop 3 cannot absorb heat from the environment, the system enters the second mode. At this time, the thermoelectric heat exchanger 5 is energized to operate for absorbing heat, as a supplement to the heat absorbed by the refrigerant of the battery cooler 4.

In the air-conditioning refrigerating-heating loop 1, the compressor 12 is in the heating mode. The high-temperature and high-pressure gas refrigerant out from the compressor 12 first passes through the in-vehicle condenser 14. At this time, the temperature damper of the air-conditioning box in the passenger compartment is in a fully-heating mode, and the air exchanges heat with the in-vehicle condenser 14, condenses and releases heat to heat the passenger compartment. At the same time, there is only one flow path after the refrigerant becomes a medium-temperature and high-pressure liquid, that is, after throttled by the second regulate valve 16, it passes through the function valve 19, enters the battery cooler 4 to absorb heat in the coolant after throttled, becomes a low-temperature and low-pressure gas, and returns to the compressor 12.

In the battery thermal management loop 2, the coolant bypasses the battery, thereby avoiding affecting the efficiency of the battery after the coolant temperature is lowered.

In the electric-drive thermal management loop 3, the four-way valve bypasses the radiator. The heat of the electric drive assembly 31 is naturally conductively transferred to the side of the battery thermal management loop 2 through the thermoelectric heat exchanger 5, and then the heat is finally transferred to the passenger compartment through the loop for the refrigerant by the battery cooler 4.

At this time, the heat of the passenger compartment is a sum of a power consumption of the compressor 12, a power consumption of the thermoelectric heat exchanger 5, and the heat absorbed by the thermoelectric heat exchanger 5 from the electric-drive thermal management loop 3.

With reference to Fig.5 and Fig.8, in the third mode, the thermoelectric heat exchanger 5 is energized. Further, one side in the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery bypass 22of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the in-vehicle condenser flow path 141, the function-valve flow path 191 and the battery-cooler flow path 412 of the air-conditioning refrigerating-heating loop 1 are in communication, to form a loop.

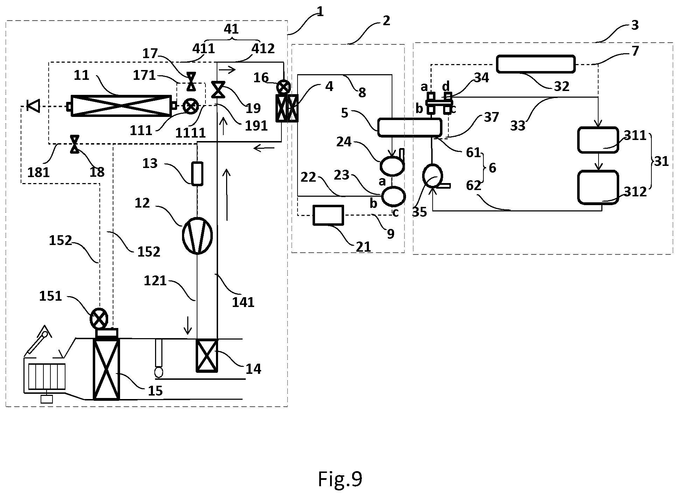

It should be explained that, in Fig.9, the dotted line in the air-conditioning refrigerating-heating loop 1 represents a flow path through which the refrigerant does not pass, and the solid line represents a flow path through which the refrigerant passes. The arrow next to the solid line represents a flow direction of the refrigerant. The dotted lines in the battery thermal management loop 2 and the electric-drive thermal management loop 3 represent flow paths through which the coolant does not pass, the solid line represents a flow path through which the coolant passes, and the arrow on the solid line indicates a flow direction of the coolant.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the third mode, the first port a and the second port b of the battery-flow-path switch component 23 are in communication; the first port a and the second port b of the electric-drive-flow-path switch component 34 are in communication; the first regulate valve 111 is closed; the second regulate valve 16 is half-opened for throttling; the third regulate valve 151 is closed; the by-pass valve 17 is closed; the heating valve 18 is closed; and the function valve 19 is opened.

In other words, when the environment temperature is relatively low, it is difficult for the refrigerant of the air-conditioning refrigerating-heating loop 1 to absorb heat from the environment through the outdoor heat exchanger 11, and the system enters the third mode. At this time, the thermoelectric heat exchanger 5 is energized to operate for absorbing heat, as a supplement to the heat absorbed by the refrigerant of the battery cooler 4.

In the air-conditioning refrigerating-heating loop 1, the compressor 12 is in the heating mode. The high-temperature and high-pressure gas refrigerant out from the compressor 12 first passes through the in-vehicle condenser 14. At this time, the temperature damper of the air-conditioning box in the passenger compartment is in the fully-heating mode, and the air exchanges heat with the in-vehicle condenser 14, condenses and releases heat to heat the passenger compartment. At the same time, there is only one flow path after the refrigerant becomes a medium-temperature and high-pressure liquid, that is, after throttled by the second regulate valve 16, it passes through the function valve 19, enters the battery cooler 4 to absorb heat in the coolant, becomes a low-temperature and low-pressure gas, and returns to the compressor 12.

In the battery thermal management loop 2, the coolant bypasses the battery 21, thereby avoiding affecting the efficiency of the battery 21 after the coolant temperature is lowered.

In the electric-drive thermal management loop 3, the coolant cooled down by the thermoelectric heat exchanger 5 is lower than the environment temperature, and then absorbs the environment temperature by the radiator 32. The heating side of the thermoelectric heat exchanger 5 absorbs the heat from the environment and the heat is transferred to the electric-drive thermal management loop 3, and then to the battery thermal management loop 2 through the thermoelectric heat exchanger 5, and finally to the passenger compartment through the air-conditioning refrigerating-heating loop 1.

At this time, the heat of the passenger compartment is a sum of a power consumption of the compressor 12, a power consumption of the thermoelectric heat exchanger 5, the heat absorbed by the radiator 32 from the environment, and the heat absorbed by the radiator 32 from the electric drive assembly 31.

Further, in step S4, if the environment temperature is greater than or equal to the preset first temperature threshold, the vehicle thermal management system enters a fourth mode, and judges whether an outlet water temperature of the battery cooler is less than a sum of the temperature of the refrigerant at the other end of the outdoor heat exchanger of the air-conditioning refrigerating-heating loop and a preset first temperature difference threshold;
If yes, openings of the first regulate valve and the second regulate valve of the vehicle thermal management system are regulated to a proportional limit, and it is judged whether the outlet water temperature of the electric drive assembly of the vehicle is greater than or equal to the environment temperature;
If the outlet water temperature of the electric drive assembly of the vehicle is greater than or equal to the environment temperature, the vehicle thermal management system enters a fifth mode.
If the temperature of the electric drive assembly of the vehicle is less than the environment temperature, the vehicle thermal management system enters a sixth mode.

Preferably, a range of the preset first temperature difference threshold is 0°C to 5°C. For example, it can be 0° C, 2.5° C, 5° C, or other values in this range.

Operating states of components of the vehicle thermal management system in the fourth mode, the fifth mode, and the sixth mode can refer to following table 2:

**Table 2**

| | | refrigerant side | | | | | | coolant side | | | |
|---|---|---|---|---|---|---|---|---|---|---|---|
| mode | thermoelectric heat exchanger | 3^{rd} regulate valve | 1^{st} regulate valve | 2^{nd} regulate valve | bypass valve | heating valve | function valve | battery-flow-path switch component | electric-drive-flow-path switch component | battery thermal management loop water pump | electric-drive -loop water pump |
| 4^{th} mode: winter: heating passenger compartment (two stage of heat pumps absorb heat from environment + waste heat is recovered from motor) | not energized | closed | half-opened for throttling | half-opened for throttling | closed | opened | opened | a&b in communication | b&d in communication, a&c not in communication | in operation | in operation |
| 5^{th} mode: winter: heating passenger compartment (two stage of heat pumps absorb heat from environment +primary heat pump system absorbs heat from motor) | energized, battery side is hot side | closed | half-opened for throttling | half-opened for throttling | closed | opened | opened | a&b in communication | b&d in communication | in operation | in operation |
| 6^{th} mode: winter: heating passenger compartment (two stage of heat pumps absorb heat from environment +primary heat pump system absorbs heat from environment) | energized, battery side is hot side | closed | half-opened for throttling | half-opened for throttling | closed | opened | opened | a&b in communication | a&b in communication | in operation | in operation |

With reference to Fig.1 and Fig.5, in the fourth mode, the thermoelectric heat exchanger 5 is not energized. The battery-loop water pump 24 of the battery thermal management loop 2 operates, and the battery coolant main path 8 and the battery bypass 22 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The compressor flow path 121, the in-vehicle condenser flow path 141, the function valve flow path 191 and the battery-cooler flow path 412 of the air-conditioning refrigerating-heating loop 1 are in communication, to form a first loop. The compressor flow path 121, the in-vehicle condenser flow path 141, the outdoor-heat-exchanger flow path 411 and the heating flow path 181of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the fourth mode, the first port a and the second port b of the battery-flow-path switch component 23 are in communication, the second port b and the fourth port d of the electric-drive-flow-path switch component 34 are in communication; the first regulate valve 111 is half-opened for throttling; the second regulate valve 16 is half-opened for throttling; the third regulate valve 151 is closed; the bypass valve 17 is closed; the heating valve 18 is opened; and the function valve 19 is opened.

In the air-conditioning refrigerating-heating loop 1, the compressor 12 is in the heating mode. The high-temperature and high-pressure gas refrigerant out from the compressor 12 first passes through the in-vehicle condenser 14. At this time, the temperature damper of the air-conditioning box in the passenger compartment is in a fully-heating mode, and the air exchanges heat with the in-vehicle condenser 14, condenses and releases heat to heat the passenger compartment. At the same time, the refrigerant is divided into two parts after the refrigerant becomes a medium-temperature and high-pressure liquid. One part, after throttled by the first regulate valve 111, enters the outdoor heat exchanger 11 and evaporates to absorb the heat from the environment, such that the refrigerant becomes a low-temperature and low-pressure gas, passes through the heating valve 18 and returns to the compressor 12. The other part, after throttled by the second regulate valve 16, passes through the function valve 19, enters the battery cooler 4 to absorb heat in the coolant, becomes a low-temperature and low-pressure gas, and returns to the compressor 12.

In the battery thermal management loop 2, the coolant bypasses the battery 21, thereby avoiding affecting the efficiency of the battery 21 after the coolant temperature is lowered.

In the electric-drive thermal management loop 3, the radiator 32 is bypassed. The heat of the electric drive assembly 31 is naturally conductively transferred to the side of the battery thermal management loop 2 through the thermoelectric heat exchanger 5, and then the heat is finally transferred to the passenger compartment through the air-conditioning refrigerating-heating loop 1 by the battery cooler 4.

At this time, the heat of the passenger compartment is a sum of a power consumption of the compressor 12, the heat absorbed by the outdoor heat exchanger 11, and the heat of the electric-drive thermal management loop 3 absorbed by the battery cooler 4.

With reference to Fig.1 and Fig.5, in the fifth mode, the thermoelectric heat exchanger 1 is energized. One side of the thermoelectric heat exchanger 5 located in the battery thermal management loop 2 is the heating side, and one side of the thermoelectric heat exchanger 5 located at the electric-drive thermal management loop 3 is the refrigerating side. The battery-loop water pump 24 of the battery thermal management loop 2 operates, and the battery coolant main path 8 and the battery bypass 22 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The compressor flow path 121, the in-vehicle condenser flow path 141, the function-valve flow path 191 and the battery-cooler flow path 412 of the air-conditioning refrigerating-heating loop 1 are in communication, to form a first loop. The compressor flow path 121, the in-vehicle condenser flow path 141, the outdoor-heat-exchanger flow path 411 and the heating flow path 181 of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the fifth mode, the first port a and the second port b of the battery-flow-path switch component 23 are in communication, the second port b and the fourth port d of the electric-drive-flow-path switch component 34 are in communication; the first regulate valve 111 is half-opened for throttling; the second regulate valve 16 is half-opened for throttling; the third regulate valve 151 is closed; the by-pass valve 17 is closed; the heating valve 18 is opened; and the function valve 19 is opened.

In other words, when the outlet water temperature of the battery cooler 4 is less than the temperature at outlet of the refrigerant of the outdoor heat exchanger 11, the system enters the fifth mode, and the thermoelectric heat exchanger 5 is energized to operate for absorbing heat, as a supplement to the heat absorbed by the refrigerant of the battery cooler 4.

In the air-conditioning refrigerating-heating loop 1, the compressor 12 is in the heating mode. The high-temperature and high-pressure gas refrigerant out from the compressor 12 first passes through the in-vehicle condenser 14. At this time, the temperature damper of the air-conditioning box in the passenger compartment is in a fully-heating mode, and the air exchanges heat with the in-vehicle condenser 14, condenses and releases heat to heat the passenger compartment. At the same time, the refrigerant is divided into two parts after the refrigerant becomes a medium-temperature and high-pressure liquid. One part, after throttled by the first regulate valve 111, enters the outdoor heat exchanger 11 and evaporates to absorb the heat from the environment, such that the refrigerant becomes a low-temperature and low-pressure gas, passes through the heating valve 18 and returns to the compressor 12. The other part, after throttled by the second regulate valve 16, passes through the function valve 19, enters the battery cooler 4 to absorb heat in the coolant, becomes a low-temperature and low-pressure gas, and returns to the compressor 12.

In the battery thermal management loop 2, the coolant bypasses the battery 21, thereby avoiding affecting the efficiency of the battery 21 after the coolant temperature is lowered.

In the electric-drive thermal management loop 3, the radiator 32 is bypassed. The heat of the electric drive assembly 31 is naturally conductively transferred to the side of the battery thermal management loop 2 through the thermoelectric heat exchanger 5, and then the heat is finally transferred to the passenger compartment through the air-conditioning refrigerating-heating loop 1 by the battery cooler 4.

At this time, the heat of the passenger compartment is a sum of a power consumption of the compressor 12, the heat absorbed by the outdoor heat exchanger 11, a power consumption of the thermoelectric heat exchanger 5, and the heat absorbed by the thermoelectric heat exchanger 5 from the electric-drive thermal management loop 3.

In other words, the difference between the fourth mode and the fifth mode is whether the thermoelectric heat exchanger 5 is energized.

With reference to Fig.1 and Fig.5, in the sixth mode, the thermoelectric heat exchanger 1 is energized. One side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery bypass 22 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the in-vehicle condenser flow path 141, the function-valve flow path 191 and the battery-cooler flow path 412 of the air-conditioning refrigerating-heating loop 1 are in communication, to form a first loop. The compressor flow path 121, the in-vehicle condenser flow path 141, the outdoor-heat-exchanger flow path 411 and the heating flow path 181 of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the sixth mode, the first port a and the second port b of the battery-flow-path switch component 23 are in communication, the first port a and the second port b of the electric-drive-flow-path switch component 34 are in communication; the first regulate valve 111 is half-opened for throttling; the second regulate valve 16 is half-opened for throttling; the third regulate valve 151 is closed; the bypass valve 17 is closed; the heating valve 18 is opened; and the function valve 19 is opened.

In other words, compared with the fifth mode, when the outlet water temperature of the electric drive assembly 31 is less than the environment temperature, the electric-drive thermal management loop 3 can absorb heat from the environment at this time, and the system enters the sixth mode. The thermoelectric heat exchanger 5 is energized to operate for absorbing heat, as a supplement to the heat absorbed by the refrigerant of the battery cooler 4.

In the air-conditioning refrigerating-heating loop 1, the compressor 12 is in the heating mode. The high-temperature and high-pressure gas refrigerant out from the compressor 12 first passes through the in-vehicle condenser 14. At this time, the temperature damper of the air-conditioning box in the passenger compartment is in a fully-heating mode, and the air exchanges heat with the in-vehicle condenser 14, condenses and releases heat to heat the passenger compartment. At the same time, the refrigerant is divided into two parts after the refrigerant becomes a medium-temperature and high-pressure liquid. One part, after throttled by the first regulate valve 111, enters the outdoor heat exchanger 11 and evaporates to absorb the heat from the environment, such that the refrigerant becomes a low-temperature and low-pressure gas, passes through the heating valve 18, and returns to the compressor 12. The other part, after throttled by the second regulate valve 16, passes through the function valve 19, enters the battery cooler 4 to absorb heat in the coolant, becomes a low-temperature and low-pressure gas, and returns to the compressor 12.

In the battery thermal management loop 2, the coolant bypasses the battery 21, thereby avoiding affecting the efficiency of the battery 21 after the coolant temperature is lowered.

In the electric-drive thermal management loop 3, when the outlet water temperature of the electric drive assembly 31 is less than the environment temperature, the coolant cooled down by the thermoelectric heat exchanger 5 is lower than the environment temperature, and then absorbs the environment temperature by the radiator 32. The heat side of the thermoelectric heat exchanger 5 absorbs the heat from the environment and the heat is transferred to the electric-drive thermal management loop 3, and then to the battery thermal management loop 2 through the thermoelectric heat exchanger 5, and finally to the passenger compartment through the air-conditioning refrigerating-heating loop 1.

At this time, the heat of the passenger compartment is a sum of a power consumption of the compressor 12, the heat absorbed by the outdoor heat exchanger 11, a power consumption of the thermoelectric heat exchanger 5, the heat absorbed by the radiator 32 from the environment, and the heat absorbed by the thermoelectric heat exchanger 5 from the electric-drive thermal management loop 3.

Further, in step S2, if the vehicle is currently in the driving state, the thermal management method further includes:
acquiring the state information of the battery and the state information of the passenger compartment in the vehicle thermal management system, and judging whether the thermal management demand of the vehicle is only heating the battery according to the state information of the battery and the state information of the passenger compartment;
If yes, it is judged whether the water temperature of the electric drive assembly is greater than or equal to a preset fourth temperature threshold;
If no, it is repeatedly judged whether the thermal management demand of the vehicle is only heating the battery;
If the water temperature of the electric drive assembly is greater than or equal to the preset fourth temperature threshold, the vehicle thermal management system enters a seventh mode.
If the water temperature of the electric drive assembly is less than the preset fourth temperature threshold, it is judged whether the water temperature of the electric drive assembly is greater than or equal to the environment temperature.
If the water temperature of the electric drive assembly is greater than or equal to the environment temperature, the vehicle thermal management system enters an eighth mode.
If the temperature of the electric drive assembly is less than the environment temperature, the vehicle thermal management system enters a ninth mode.

It should be explained that, the state information of the battery and the state information of the passenger compartment here have no difference from the aforementioned state information of the battery and the state information of the passenger compartment, which do not be repeated here.

Preferably, a range of the preset third temperature threshold is 15°C to 25°C. For example, it can be 15° C, 17.5° C, 20° C, 25° C, or other values within this range.

Operating states of components of the vehicle thermal management system in the seventh mode, the eighth mode, and the ninth mode can refer to following table 3:

**Table 3**

| | | refrigerant side | | | | | | coolant side | | | |
|---|---|---|---|---|---|---|---|---|---|---|---|
| mode | thermoelectric heat exchanger | 3^{rd} regulate valve | 1^{st} regulate valve | 2^{nd} regulate valve | bypass valve | heating valve | function valve | battery-flow-path switch component | electric-drive-flow-path switch component | battery thermal management loop water pump | electric-drive-loop water pump |
| 7^{th} mode: winter: heat from electric drive heats battery | not energized | normal | normal | normal | normal | normal | normal | a&c in communication | b&d in communication | in operation | in operation |
| 8^{th} mode: winter: primary heat pump absorb heat from motor to heat battery | energized, battery side is hot side | normal | normal | normal | normal | normal | normal | a&c in communication | b&d in communication | in operation | in operation |
| 9^{th} mode: winter: primary heat pump absorb heat from environment to heat battery | energized, battery side is hot side | normal | normal | normal | normal | normal | normal | a&c in communication | a&b in communication | in operation | in operation |

With reference to Fig.1 and Fig.5, in the seventh mode, the thermoelectric heat exchanger 1 is not energized. The battery-loop water pump 24 of the battery thermal management loop 2 operates, and the battery coolant main path 8 and the battery flow path 9 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The air-conditioning refrigerating-heating loop 1 does not operate.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the by-pass valve 17, the heating valve 18, and the function valve 19, in the seventh mode, the first port a and the third port c of the battery-flow-path switch component 23 are in communication; the second port b and the fourth port d of the electric-drive-flow-path switch component 34 are in communicate; the first regulate valve 111 is in a normal state; the second regulate valve 16 is in a normal state; the third regulate valve 151 is in a normal state; the by-pass valve 17 is in a normal state; the heating valve 18 is in a normal state; and the function valve 19 is in a normal state.

At this time, heating the passenger compartment is turned off, and the air-conditioning refrigerating-heating loop 1 does not operate. The thermoelectric heat exchanger 5 does not operate, and the heat of the electric-drive thermal management loop 3 is naturally conductively transferred to the battery thermal management loop 2 through the thermoelectric heat exchanger 5.

With reference to Fig.1 and Fig.5, in the eighth mode, the thermoelectric heat exchanger 1 is energized. Further, one side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery flow path 9 of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The air-conditioning refrigerating-heating loop 1 does not operate.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the eighth mode, the first port a and the third port c of the battery-flow-path switch component 23 are in communication; the first regulate valve 111 is in a normal state; the second regulate valve 16 is in a normal state; the third regulate valve 151 is in a normal state; the bypass valve 17 is in a normal state; the heating valve 18 is in a normal state; and the function valve 19 is in a normal state.

At this time, heating the passenger compartment is turned off, and the air-conditioning refrigerating-heating loop 1 does not operate. The thermoelectric heat exchanger 5 operates, and the heat absorption from the electric drive assembly 31 is enhanced by the thermoelectric heat exchanger 5.

With reference to Fig.1 and Fig.5, in the ninth mode, the thermoelectric heat exchanger 1 is energized. Further, one side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery flow path 9 of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The air-conditioning refrigerating-heating loop 1 does not operate.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the ninth mode, the first port a and the third port c of the battery-flow-path switch component 23 are in communication; the first port a and the second port b of the electric-drive-flow-path switch component 34 are in communication.; the first regulate valve 111 is in a normal state; the second regulate valve 16 is in a normal state; the third regulate valve 151 is in a normal state; the bypass valve 17 is in a normal state; the heating valve 18 is in a normal state; and the function valve 19 is in a normal state.

At this time, heating the passenger compartment is turned off, and the air-conditioning refrigerating-heating loop 1 does not operate. The thermoelectric heat exchanger 5 operates, and the heat absorption from the electric drive assembly 31 is enhanced by the thermoelectric heat exchanger 5.

Still further, in step S2, if the vehicle is currently in the driving state, the thermal management method further includes:
acquiring the state information of the battery and the state information of the passenger compartment in the vehicle thermal management system, and judging whether the thermal management demand of the vehicle is heating the battery and heating the passenger compartment according to the state information of the battery and the state information of the passenger compartment;
If the thermal management demand of the vehicle is heating the battery and heating the passenger compartment, it is judged whether a target of heating the passenger compartment is satisfied;
If the thermal management demand of the vehicle is not heating the battery and heating the passenger compartment, it is repeatedly judged whether the thermal management demand of the vehicle is heating the battery and heating the passenger compartment;
If the target of heating the passenger compartment is satisfied, it is judged whether a rotating speed of the compressor of the vehicle thermal management system is less than a preset rotating speed threshold;
If the target of heating passenger compartment is not satisfied, it is judged whether the thermal management demand of the vehicle is heating the battery and heating the passenger compartment;
If the rotating speed of the compressor is less than the preset rotating speed threshold, it is judged whether the water temperature of the electric drive assembly is greater than or equal to the environment temperature.
If the rotating speed of the compressor is greater than or equal to the preset rotating speed threshold, it is repeatedly judged whether the target of heating the passenger compartment is satisfied;
If the rotating speed of the compressor is less than the preset rotating speed threshold, it is judged whether the water temperature of the electric drive assembly is greater than or equal to the environment temperature.
If the water temperature of the electric drive assembly is greater than or equal to the environment temperature, the vehicle thermal management system enters a tenth mode.
If the water temperature of the electric drive assembly is less than the environment temperature, the vehicle thermal management system enters an eleventh mode.

It should be explained that, the target of heating the passenger compartment refers to whether the temperature of the passenger compartment reaches a preset minimum temperature. The preset minimum temperature may be manually input by a person in the passenger compartment.

It should further be explained that, the preset rotating speed threshold is comprehensively defined according to the environment temperature, a setting for heating the passenger compartment, and a maximum value of a rotating speed of the compressor.

Operating states of components of the vehicle thermal management system in the tenth mode and the eleventh mode can refer to following table 4:

**Table 4**

| | | refrigerant side | | | | | | coolant side | | | |
|---|---|---|---|---|---|---|---|---|---|---|---|
| mode | thermoelectric heat exchanger | 3^{rd} regulate valve | 1^{st} regulate valve | 2^{nd} regulate valve | bypass valve | heating valve | function valve | battery-flow-path switch component | electric-drive-flow-path switch component | battery thermal management loop water pump | electric-drive-loop water pump |
| 10^{th} mode: winter: heating passenger compartment +heating battery (two stage of heat pumps absorb heat from environment +primary heat pump system absorb heat from motor) | energized, battery side is hot side | closed | half-opened for throttling | half-opened for throttling | closed | opened | opened | a&c in communication | b&d in communication | in operation | in operation |
| 11^{th} mode: winter: heating passenger compartment + heating battery (two stage of heat pumps absorb heat from environment +primary heat pump system absorb heat from environment) | energized, battery side is hot side | closed | half-opened for throttling | half-opened for throttling | closed | opened | opened | a&c in communication | a&b in communication | in operation | in operation |

With reference to Fig.1 and Fig.5, in the tenth mode, the thermoelectric heat exchanger 1 is energized. One side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery flow path 9 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation bypass 33, to form a loop. The compressor flow path 121, the in-vehicle condenser flow path 141, the function-valve flow path 191 and the battery-cooler flow path 412 of the air-conditioning refrigerating-heating loop 1 are in communication, to form a first loop. The compressor flow path 121, the in-vehicle condenser flow path 141, the outdoor-heat-exchanger flow path 411 and the heating flow path 181 of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the tenth mode, the first port a and the third port c of the battery-flow-path switch component 23 are in communication; the second port b and the fourth port d of the electric-drive-flow-path switch component 34 are in communication; the first regulate valve 111 is half-opened for throttling; the second regulate valve 16 is half-opened for throttling; the third regulate valve 151 is closed; the bypass valve 17 is closed; the heating valve 18 is opened; and the function valve 19 is opened.

Operating states of the air-conditioning refrigerating-heating loop 1 and the electric-drive thermal management loop 3 are similar to the fifth mode. In the battery thermal management loop 2, the coolant heated by the thermoelectric heat exchanger 5 first passes through the battery 21 to heat the battery 21.

With reference to Fig.1 and Fig.5, in the eleventh mode, the thermoelectric heat exchanger 1 is energized. One side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery flow path 9 of the battery thermal management loop 2 are in communication, to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the in-vehicle condenser flow path 141, the function-valve flow path 191 and the battery-cooler flow path 412 of the air-conditioning refrigerating-heating loop 1 are in communication, to form a first loop. The compressor flow path 121, the in-vehicle condenser flow path 141, the outdoor-heat-exchanger flow path 411 and the heating flow path 181 of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the eleventh mode, the first port a and the third port c of the battery-flow-path switch component 23 are in communication; the first port a and the second port b of the electric-drive-flow-path switch component 34 are in communication; the first regulate valve 111 is half-opened for throttling; the second regulate valve 16 is half-opened for throttling; the third regulate valve 151 is closed; the bypass valve 17 is closed; the heating valve 18 is opened; and the function valve 19 is opened.

Operating states of the air-conditioning refrigerating-heating loop 1 and the electric-drive thermal management loop 3 are similar to the sixth mode. In the battery thermal management loop 2, the coolant heated by the thermoelectric heat exchanger 5 first passes through the battery 21 to heat the battery 21.

Further, in step S1, if the vehicle is started up, the thermal management method further includes:
acquiring the state information of the vehicle from the power management module of vehicle, and judging whether the vehicle is currently in the charging state according to the state information of vehicle;
If the vehicle is currently in the charging state, it is judged whether the thermal management demand of the vehicle is only heating the passenger compartment;
If the thermal management demand of the vehicle is only heating the passenger compartment, it is judged whether the environment temperature is less than a preset fifth temperature threshold;
If the environment temperature is less than the preset fifth temperature threshold, the vehicle thermal management system enters the third mode;
If the environment temperature is greater than or equal to the preset fifth temperature threshold, the vehicle thermal management system enters the sixth mode;
If the thermal management demand of the vehicle is judged not be only heating the passenger compartment, it is judged whether the thermal management demand of the vehicle is only heating the battery;
If it is only heating the battery, the vehicle thermal management system enters a twelfth mode;
If it is judged not to be only heating the battery, it is judged whether the thermal management demand of the vehicle is heating the battery and heating the passenger compartment;
If the thermal management demand of the vehicle is heating the battery and heating the passenger compartment, the vehicle thermal management system enters a thirteenth mode.

Preferably, a range of the preset fifth temperature threshold is -13°C to -17°C. For example, it can be -13° C, -15° C, -16.5° C, -17° C, or other values within this range.

Operating states of components of the vehicle thermal management system in the twelfth mode and the thirteenth mode can refer to following table 5:

**Table 5**

| | | refrigerant side | | | | | | coolant side | | | |
|---|---|---|---|---|---|---|---|---|---|---|---|
| mode | thermoelectric heat exchanger | 3^{rd} regulate valve | 1^{st} regulate valve | 2^{nd} regulate valve | bypass valve | heating valve | function valve | battery-flow-path switch component | electric-drive-path-flow switch component | battery thermal management loop water pump | electric-drive-loop water pump |
| 12^{th} mode: winter: charging condition, heating battery, primary heat pump system heats battery | energized, battery side is hot side | normal | normal | normal | normal | normal | normal | a&c in communication | a&b in communication | in operation | in operation |
| 13^{th} mode: winter: charging condition, heating battery + heating passenger compartment | energized, battery side is hot side | closed | closed | half-opened for throttling | closed | closed | opened | a&c in communication | a&b in communication | in operation | in operation |

With reference to Fig.1 and Fig.5, in the twelfth mode, the thermoelectric heat exchanger 5 is energized. Further, one side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 of the battery thermal management loop 2 communicates with the battery flow path 9 to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The air-conditioning refrigerating-heating loop 1 does not operate, and the compressor 12 does not operate, either.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the twelfth mode, the first port a and the third port c of the battery-flow-path switch component 23 are in communication; the first port a and the second port b of the electric-drive-flow-path switch component 34 are in communication; the first regulate valve 111 is in a normal state; the second regulate valve 16 is in a normal state; the third regulate valve 151 is in a normal state; the bypass valve 17 is in a normal state; the heating valve 18 is in a normal state; and the function valve 19 is in a normal state.

The air-conditioning refrigerating-heating loop 1 does not operate. The thermoelectric heat exchanger 5 operates, and heats the coolant at the side of the battery thermal management loop 2, to heat the battery 21. The thermoelectric heat exchanger 5 absorbs the heat from the environment through the electric-drive thermal management loop 3.

At this time, a heat amount of heating the battery 21 is a sum of a power consumption of the thermoelectric heat exchanger 5 and the heat from the environment absorbed by the thermoelectric heat exchanger 5 through the electric-drive thermal management loop 3.

With reference to Fig.1 and Fig.5, in the thirteenth mode, the thermoelectric heat exchanger 5 is energized. Further, one side of the thermoelectric heat exchanger 5 located in the battery thermal management loop 2 is the heating side, and one side of the thermoelectric heat exchanger 5 located in the electric-drive thermal management loop 3 is the refrigerating side. The battery-loop water pump 24 of the battery thermal management loop 2 operates, and the battery coolant main path 8 and the battery flow path 9 of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the in-vehicle condenser flow path 141, the function-valve flow path 191 and the battery-cooler flow path 412 of the air-conditioning refrigerating-heating loop 1 are in communication, to form a loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the thirteenth mode, the first port a and the third port c of the battery-flow-path switch component 23 are in communication; the first port a and the second port b of the electric-drive-flow-path switch component 34 are in communication; the first regulate valve 111 is closed; the second regulate valve 16 is half-opened for throttling; the third regulate valve 151 is closed; the bypass valve 17 is closed; the heating valve 18 is closed; and the function valve 19 is opened.

The thirteenth mode is similar to the third mode. The operating states of the air-conditioning refrigerating-heating loop 1 and the electric-drive thermal management loop 3 are the same. The difference is that, in the battery thermal management loop 2 in the thirteenth mode, the coolant heated by the thermoelectric heat exchanger 5 first passes through the battery 21 to heat the battery 21, and then passes through the battery cooler 4. The coolant cooled down by the battery cooler 4 is then heated by the thermoelectric heat exchanger 5. In addition, the power consumption of the thermoelectric heat exchanger 5 in the thirteenth mode is greater.

At this time, a sum of the heat in the passenger compartment and the heat amount of heating the battery 21 is a sum of a power consumption of the compressor 12, a power consumption of the thermoelectric heat exchanger 5, and the heat absorbed by the radiator 32 from the environment.

Still further, in step S1, if the vehicle is started up, the thermal management method further includes:
acquiring the state information of the battery in the vehicle thermal management system, and judging whether the battery has a cooling demand according to the state information of battery;
If the battery has the cooling demand, it is judged whether the environment temperature is greater than a preset sixth temperature threshold;
If the environment temperature is greater than the preset sixth temperature threshold, it is judged whether the passenger compartment has a refrigerating demand at the same time;
If the passenger compartment has a refrigerating demand at the same time, it is judged whether an absolute value of a difference between a target temperature of the passenger compartment and an actual temperature of the passenger compartment is greater than a preset second temperature difference threshold;
If the passenger compartment has no refrigerating demand, it is repeatedly judged whether the passenger compartment has a cooling demand at the same time;
If the absolute value of the difference between the target temperature of the passenger compartment and the actual temperature of the passenger compartment is greater than the preset second temperature difference threshold, the vehicle thermal management system enters a fourteenth mode;
If the absolute value of the difference between the target temperature of the passenger compartment and the actual temperature of the passenger compartment is less than or equal to the preset second temperature difference threshold, the vehicle thermal management system enters a fifteenth mode.
If the environment temperature is less than or equal to the preset sixth temperature threshold, it is judged whether a target water temperature of the battery is less than a preset seventh temperature threshold;
If the water temperature of the battery is less than the preset seventh temperature threshold, the vehicle thermal management system enters a sixteenth mode.
If the water temperature of the battery is greater than or equal to the preset seventh temperature threshold, the vehicle thermal management system enters a seventeenth mode.

Preferably, a range of the preset sixth temperature threshold is 18°C to 22°C. For example, it may be 18°C, 19.5°C, 20°C, 22°C, or other values in this range.

A range of the preset seventh temperature threshold is 12°C to 20°C. For example, it may be 12° C, 15° C, 18.5° C, 20° C, or other values in this range.

A range of the preset first temperature difference threshold is 0°C to 5°C. For example, it can be 0° C, 2.5° C, 5° C, or other values in this range.

Operating state of components of the vehicle thermal management system in the fourteenth mode, the fifteenth mode, and the sixteenth mode, and the seventeenth mode can refer to following table 6:

**Table 6**

| | | refrigerant side | | | | | | coolant side | | | |
|---|---|---|---|---|---|---|---|---|---|---|---|
| mode | thermoelec tric heat exchanger | 3^{rd} regulate valve | 1^{st} regulate valve | 2^{nd} regulate valve | bypass valve | heating valve | function valve | battery-flow-path switch component | electric- drive-flow-path switch component | battery thermal managem ent loop water pump | electric-drive-loop water pump |
| 14^{th} mode: summer: refrigerating passenger compartment (rapidly refrigerating) /thermoelectric heat exchanger cools battery | energized, battery side is cold side | opened | opened | closed/half-opened for throttling | opened | closed | closed | a&c in communication | a&b in communication | in operation | in operation |
| 15^{th} mode: summer: refrigerating passenger compartment, cooling battery, motor cooling mode | not energized | opened/ closed | opened | closed/half-opened for throttling | opened | closed | closed | a&c in communication | a&c in communication | in operation /closed | in operation |
| 16^{th} mode: winter or autumn: radiator cools battery | to be determined | to be determined | to be determined | to be determined | to be determined | to be determined | a&c in communication | a&b in communication | in operation | in operation | to be determined |
| 17^{th} mode: winter or autumn: radiator cools battery | to be determined | to be determined | to be determined | to be determined | to be determined | to be determined | a&c in communication | a&b in communication | in operation | in operation | to be determined |

With reference to Fig.5 and Fig.8, in the fourteenth mode, the thermoelectric heat exchanger 5 is energized. Further, one side of the thermoelectric heat exchanger 5 located in the battery thermal management loop 2 is the refrigerating side, and one side of the thermoelectric heat exchanger 5 located in the electric-drive thermal management loop 3 is the heating side. The battery-loop water pump 24 of the battery thermal management loop 2 operates, and the battery coolant main path 8 of the battery thermal management loop 2 communicates with the battery flow path 9 to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the in-vehicle condenser flow path 141, the regulate valve flow path 1111 and the indoor evaporator flow path of the air-conditioning refrigerating-heating loop 1 are in communication, to form a loop, and the refrigerant does not flow through the in-vehicle condenser 14.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the fourteenth mode, the first port a and the third port c of the battery-flow-path switch component 23 are in communication; the first port a and the second port b of the electric-drive-flow-path switch component 34 are in communication; the first regulate valve 111 is opened; the second regulate valve 16 is closed or half-opened for throttling; the third regulate valve 151 is opened; the bypass valve 17 is opened; the heating valve 18 is closed; and the function valve 19 is closed.

There is a heat transferring between the battery thermal management loop 2 and the electric-drive thermal management loop 3. At this time, the thermoelectric heat exchanger 5 operates, cools down the coolant in the battery thermal management loop 2 to cool the battery 21, heats the coolant in the electric-drive thermal management loop 3, and then transfers the heat to the environment through the radiator 32.

In the air-conditioning refrigerating-heating loop 1, the high-temperature and high-pressure gas refrigerant out from the compressor 12 first passes through the in-vehicle condenser 14. At this time, the temperature damper of the air-conditioning box in the passenger compartment is in a fully-cooling mode. The air does not pass through the in-vehicle condenser 14, that is, the air does not exchange heat with the in-vehicle condenser 14, and then passes through the bypass valve 17, and enters the outdoor heat exchanger 11 to condense into a medium-temperature and high-pressure liquid. At this time, the refrigerant is one part, that is, it is throttled by the third regulate valve 151, and absorbs the heat of the air in the air-conditioning box through the in-vehicle evaporator 15 to cool down the air and cool the passenger compartment.

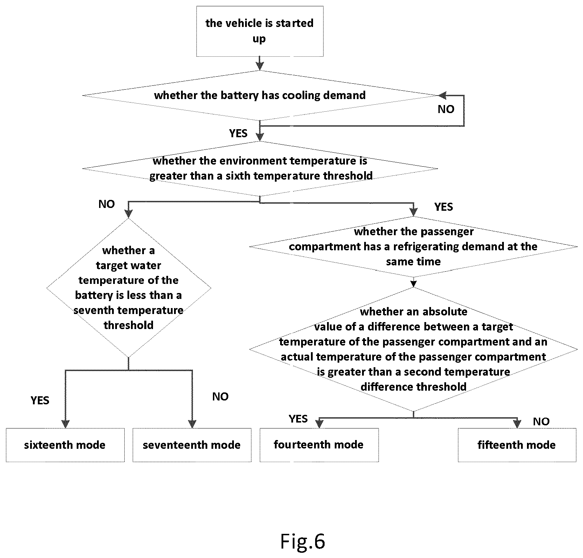

With reference to Fig.1 and Fig.6, in the fifteenth mode, the thermoelectric heat exchanger 5 is not energized. The battery-loop water pump 24 of the battery thermal management loop 2 operates or turns off, and the battery coolant main path 8 and the battery flow path of the battery thermal management loop 2 are in communication to form a loop. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The compressor flow path 121, the bypass valve flow path 171, the function-valve flow path 191, the outdoor-heat-exchanger flow path 411, and the battery-cooler flow path 412 of the air conditioning refrigerating-heating loop 1 are in communication to form a first loop. The compressor flow path 121, the in-vehicle condenser flow path 141, the bypass-valve flow path 171, the function valve flow path 191, the outdoor heat exchanger and the in-vehicle evaporator flow path 152 of the air-conditioning refrigerating-heating loop 1 are in communication, to form a second loop.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the fifteenth mode, the first port a and the third port c of the battery-flow-path switch component 23 are in communication; the first port a and the third port c of the electric-drive-flow-path switch component 34 are in communication; the first regulate valve 111 is opened; the second regulate valve 16 is closed or half-opened for throttling; the third regulate valve 151 is opened or closed; the bypass valve 17 is opened; the heating valve 18 is closed; and the function valve 19 is closed.

Specifically, while the electric-drive coolant main path 6 includes the thermoelectric-heat-exchange flow path 61 and the electric-drive flow path 62, which are sequentially connected in series, and the electric-drive thermal management loop 3 further includes the thermoelectric-heat-exchange bypass 37, in the fifteenth mode, the electric-drive-flow-path switch component 34 brings the electric-drive flow path 62, the thermoelectric-heat-exchange bypass 37 in communication with the heat-dissipation main path 7, to form a loop. Furthermore, when the electric-drive-flow-path switch component 34 is a four-way valve, and the first port a of the four-way valve is connected with one end of the heat-dissipation main path 7, the second port b is connected with the other end of the thermoelectric-heat-exchange flow path 61, the third port c is connected with the other end of the thermoelectric-heat-exchange bypass 37, and the fourth port d is connected with one end of the heat-dissipation bypass 33, the first port a and third port c of the four-way valve are in communication.

The battery thermal management loop 2 is independent of the electric-drive thermal management loop 3. At this time, the thermoelectric heat exchanger 5 does not operate. The coolant in the electric-drive thermal management loop 3 does not pass through the thermoelectric heat exchanger 5. The electric-drive thermal management loop 3 drives the coolant to pass through the radiator 32 by the electric-drive-loop water pump 35, to dissipate the heat. The cooled coolant cools an object to be cooled of the electric-drive thermal management loop 3. At this time, the target water temperature for cooling of the electric-drive thermal management loop 3 is typically less than or equal to 65°C.

The battery thermal management loop 2 absorbs the heat of the coolant in the battery cooler 4 by the refrigerant in the battery cooler 4, to cool down the coolant of the battery thermal management loop 2. The cooled-down coolant then cools the battery 21. A target water temperature of the coolant of the battery thermal management loop 2 is typically 15~25°C.

In the air-conditioning refrigerating-heating loop 1, the high-temperature and high-pressure gas refrigerant out from the compressor 12 first passes through the in-vehicle condenser 14. At this time, the temperature damper of the air-conditioning box in the passenger compartment is in fully-cooling mode. The air does not pass through the in-vehicle condenser 14, that is, the air does not exchange heat with the in-vehicle condenser 14, and then passes through the bypass valve 17, and enters the outdoor heat exchanger 11 to condense into a medium-temperature and high-pressure liquid. At this time, the refrigerant is divided into two parts. One part is throttled by the third regulate valve 151 in front of the air-conditioning box. The other part is throttled by the second regulate valve 16 in front of the battery cooler 4, and becomes a low-temperature and low-pressure liquid after throttled. By the in-vehicle evaporator 15 absorbing the heat of air in the air-conditioning box, the air is cooled down to cool the passenger compartment. By the battery cooler 4 absorbing the heat of the coolant, the coolant is cooled down to cool the battery 21.

With reference to Fig.1 and Fig.6, in the sixteenth mode, the thermoelectric heat exchanger 5 is not energized. The battery-loop water pump 24 of the battery thermal management loop 2 operates, and the battery cooler 4 of the battery thermal management loop 2 does not operate. The electric-drive-loop water pump 35 of the electric-drive thermal management loop 3 operates, and the electric-drive-flow-path switch component 34 brings the electric-drive coolant main path 6 in communication with the heat-dissipation main path 7, to form a loop. The operating state of the air-conditioning refrigerating-heating loop 1 is to be determined.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the sixteenth mode, the first port a and the third port c of the battery-flow-path switch component 23 are in communication; the first port a and the second port b of the electric-drive-flow-path switch component 34 are in communication; the first regulate valve 111 is to be determined; the second regulate valve 16 is to be determined; the third regulate valve 151 is to be determined; the bypass valve 17 is to be determined; the heating valve 18 is to be determined; and the function valve 19 is to be determined.

In spring and autumn, the environment temperature is relatively low, for example, less than 20°C. At this time, the battery 21 has a cooling demand, and the battery 21 can be cooled by the radiator 32, and the compressor 12 and the battery cooler 4 do not need to operate.

With reference to Fig.1 and Fig.6, in the seventeenth mode, the thermoelectric heat exchanger 5 is energized. Further, one side of the thermoelectric heat exchanger 6 located in the battery thermal management loop 2 is the refrigerating side, and one side of the thermoelectric heat exchanger 5 located at the electric-drive thermal management loop 3 is the heating side. The battery cooler 4 of the battery thermal management loop 2 does not operate, and the electric-drive-loop water pump 35 of the electric-drive thermal management loop 3 operates. The electric-drive-flow-path switch component 34 brings the electric-drive coolant main path 6 in communication with the heat-dissipation main path 7, to form a loop. The operating state of the air-conditioning refrigerating-heating loop 1 is to be determined.

When the battery-flow-path switch component 23 is a three-way valve, the electric-drive-flow-path switch component 34 is a four-way valve, and the air-conditioning refrigerating-heating loop 1 further includes the first regulate valve 111, the second regulate valve 16, the third regulate valve 151, the bypass valve 17, the heating valve 18, and the function valve 19, in the seventeenth mode, the first port a and the third port c of the battery-flow-path switch component 23 are in communication; the first port a and the second port b of the electric-drive-flow-path switch component 34 are in communication; the first regulate valve 111 is to be determined; the second regulate valve 16 is to be determined; the third regulate valve 151 is to be determined; the bypass valve 17 is to be determined; the heating valve 18 is to be determined; and the function valve 19 is to be determined.

In other words, when only the radiator 32 operates and the target water temperature of the battery 21 does not satisfy the requirement, the thermoelectric heat exchanger 5 may assist the operation. The thermoelectric heat exchanger 5 cools down the coolant of the battery thermal management loop 2 to cool the battery 21, heats the coolant of the electric-drive thermal management loop 3, and then transfers the heat to the environment through the radiator 32. It should be stated that, the target water temperature of the battery 21 is typically 12°C to 20°C.

Although this invention has been illustrated and described by referring to certain preferred embodiments of this invention, the ordinary skilled in the art should understand that, the above content is a further detailed illustration of this invention in conjunction with specific embodiments and cannot be considered that the specific embodiments of this invention are only limited to these illustrations. The skilled in the art can make various changes in forms and details, without departing from the scope of this invention as defined in the appended claims.

## Claims

1. A vehicle thermal management system, comprising an air-conditioning refrigerating-heating loop (1), a battery thermal management loop (2), and an electric-drive thermal management loop (3), a battery cooler (4) is arranged between the air-conditioning refrigerating-heating loop (1) and the battery thermal management loop (2), a battery (21) is arranged in the battery thermal management loop (2), the electric-drive thermal management loop (3) comprises an electric-drive coolant main path (6) and a heat-dissipation main path (7) which are sequentially connected in series, an electric drive assembly (31) is arranged in the electric-drive coolant main path (6), and a radiator is arranged in the heat-dissipation main path (7),
wherein the electric-drive thermal management loop (3) further comprises a heat-dissipation bypass (33) and an electric-drive-flow-path switch component (34), the heat-dissipation bypass (33) is connected in parallel with the heat-dissipation main path (7), and the electric-drive-flow-path switch component (34) is connected between one end of the heat-dissipation main path (7), one end of the heat-dissipation bypass (33), and one end of the electric-drive coolant main path (6); wherein, a loop is formed after the electric-drive coolant main path (6) selectively communicates with the heat-dissipation main path (7) or the heat-dissipation bypass (33) by the electric-drive-flow-path switch component (34) **characterized in that**
the vehicle thermal management system further comprises a thermoelectric heat exchanger (5), the thermoelectric heat exchanger (5) is disposed between the battery thermal management loop (2) and the electric-drive coolant main path (6) of the electric-drive thermal management loop (3), such that a heat transferring state of a coolant between the battery thermal management loop (2) and the electric-drive thermal management loop (3) is regulated by the thermoelectric heat exchanger (5);
wherein the electric-drive coolant main path (6) comprises a thermoelectric-heat-exchange flow path (61) and an electric-drive flow path (62) which are sequentially connected in series, the thermoelectric heat exchanger (5) is disposed in the thermoelectric-heat-exchange flow path (61), the electric drive assembly (31) is disposed in the electric-drive flow path (62), the other end of the thermoelectric-heat-exchange flow path (61) is the one end of the electric-drive coolant main path (6), and is connected with the electric-drive-flow-path switch component (34), and one end of the electric-drive flow path (62) is the other end of the electric-drive coolant main path (6), and is connected with the other end of the heat-dissipation main loop and the other end of the heat-dissipation bypass (33);
the electric-drive thermal management loop (3) further comprises a thermoelectric-heat-exchange bypass (37), one end of the thermoelectric-heat-exchange bypass (37) is connected with one end of the thermoelectric-heat-exchange flow path (61), and the other end of the thermoelectric-heat-exchange bypass (37) is connected with the electric-drive-flow-path switch component (34), so that the thermoelectric-heat-exchange bypass (37) and the thermoelectric-heat-exchange flow path (61) are disposed in parallel;
wherein, the electric-drive-flow-path switch component (34) selectively brings the heat-dissipation main path (7) or the heat-dissipation bypass (33) in communication with the thermoelectric-heat-exchange flow path (61) or the thermoelectric-heat-exchange bypass (37) and subsequently in communication with the electric-drive flow path (62), to form a loop, and
wherein the electric-drive-flow-path switch component (34) is a four-way valve which has a first port, a second port, a third port, and a fourth port; the first port is connected with one end of the heat-dissipation main path (7), the second port is connected with the other end of the thermoelectric-heat-exchange flow path (61), the third port is connected with the other end of the thermoelectric-heat-exchange bypass (37), and the fourth port is connected with one end of the heat-dissipation bypass (33);
an electric-drive-loop water pump (35) is further arranged in the electric-drive flow path (62), and the electric-drive-loop water pump (35) is disposed between the thermoelectric heat exchanger (5) and the electric drive assembly (31).

2. The vehicle thermal management system according to claim 1, wherein the thermoelectric heat exchanger (5) comprises a thermoelectric heat exchange unit (50), the thermoelectric heat exchange unit (50) comprises a battery liquid-cooling module (51), a thermoelectric module (51), and an electric-drive liquid-cooling module (55), which are sequentially stacked along a thickness direction of the thermoelectric heat exchanger (5), one side of the thermoelectric module contacts with the battery liquid-cooling module (51), the other side of the thermoelectric module contacts with the electric-drive liquid-cooling module (55), the battery liquid-cooling module (51) is disposed in the battery thermal management loop (2), and is disposed in series with the battery (21), and the electric-drive liquid-cooling module (55) is disposed in the electric-drive coolant main path (6), and is disposed in series with the electric drive assembly (31).

3. The vehicle thermal management system according to claim 2, wherein the thermoelectric module comprises a first thermally-conductive layer (52), a semiconductor layer (53), and a second thermally-conductive layer (54), which are sequentially stacked along a thickness direction of the thermoelectric heat exchange unit (50); one side of the first thermally-conductive layer (52) contacts with the battery liquid-cooling module (51), the other side of the first thermally-conductive layer (52) contacts with one side of the semiconductor layer (53), the other side of the semiconductor layer (53) contacts with one side of the second thermally-conductive layer (54), the other side of the second thermally-conductive layer (54) contacts with the electric-drive liquid-cooling module (55), and the semiconductor layer (53) comprises a plurality of semiconductors (531) arranged in a matrix.

4. The vehicle thermal management system according to any one of claims 1 to 3, wherein the battery thermal management loop (2) comprises a battery coolant main path (8) and a battery flow path (9) which are sequentially connected in series, the thermoelectric heat exchanger (5) and the battery cooler (4) both are disposed in the battery coolant main path (8), and the battery (21) is disposed in the battery flow path (9); and
the battery thermal management loop (2) further comprises a battery bypass (22) and a battery-flow-path switch component; the battery bypass (22) and the battery coolant main path (8) are connected in parallel, and the battery-flow-path switch component is connected between the other end of the battery coolant main path (8), one end of the battery bypass (22), and one end of the battery flow path (9); and
the heat-dissipation bypass (33) and the battery bypass (22) both are short bypasses;
a battery-loop water pump is further arranged in the battery coolant main path (8), and the battery-loop water pump is disposed between the thermoelectric heat exchanger (5) and the battery-flow-path switch component.

5. The vehicle thermal management system according to claim 4, wherein the battery-flow-path switch component is a three-way valve which has a first port, a second port, and a third port, the first port is connected with the other end of the battery coolant main path (8), the second port is connected with one end of the battery bypass (22), and the third port is connected with one end of the battery flow path (9).

6. The vehicle thermal management system according to any one of claims 1 to 5, wherein the air-conditioning refrigerating-heating loop (1) comprises a compressor flow path (121), an in-vehicle condenser flow path (141), a heating flow path (181), a refrigerant main path (41), a bypass-valve flow path (171), a function-valve flow path (191), a regulate-valve flow path (1111), and an in-vehicle evaporator flow path (152); the compressor flow path (121) is connected in series with the in-vehicle condenser flow path (141), the heating flow path (181) is connected in series with the compressor flow path (121), the refrigerant main path (41) is connected in parallel with the in-vehicle evaporator flow path (152) and the heating flow path (181), and the refrigerant main path (41) comprises an outdoor-heat-exchanger flow path (411) and a battery-cooler flow path (412) which are connected in series; and
the air-conditioning refrigerating-heating loop (1) further comprises an outdoor heat exchanger (11), a compressor (12), a gas-liquid separator (13), an in-vehicle condenser (14), and an in-vehicle evaporator (15); the outdoor heat exchanger (11) is disposed in the outdoor-heat-exchanger flow path (411), and one end of the outdoor-heat-exchanger flow path (411) communicates with the other end of the regulate-valve flow path (1111), and the other end of the outdoor-heat-exchanger flow path (411) communicates with one end of the heating flow path (181) and one end of the in-vehicle evaporator flow path (152); the gas-liquid separator (13) and the compressor (12) are disposed in series in the compressor flow path (121); the in-vehicle condenser (14) is connected with the other end of the compressor flow path (121) and one end of the in-vehicle condenser flow path (141); the in-vehicle evaporator (15) is disposed in the in-vehicle evaporator flow path (152), and the other end of the in-vehicle evaporator flow path (152) is connected with the other end of the heating flow path (181) and one end of the compressor flow path (121); the battery cooler (4) is disposed in the battery-cooler flow path (412) of the refrigerant main path (41), and the other end of the refrigerant main path (41) is connected with one end of the compressor flow path (121);
the air-conditioning refrigerating-heating loop (1) further comprises a first regulate valve (111), a second regulate valve (16), a third regulate valve (151), a bypass valve (17), a heating valve (18), and a function valve (19); the first regulate valve (111), the second regulate valve (16), and the third regulate valve (151) all are used to regulate a flow rate of the refrigerant; the bypass valve (17), the heating valve (18), and the function valve (19) all are used to regulate a flow direction of the refrigerant; the first regulate valve (111) is disposed in the regulate-valve flow path, and is located at the side of one end of the outdoor heat exchanger (11); the second regulate valve (16) is disposed in the battery-cooler flow path (412) of the refrigerant main path (41), and is located at the side of one end of the battery cooler (4); the third regulate valve (151) is disposed in the in-vehicle evaporator flow path (152), and is located at the side of one end of the in-vehicle evaporator (15); the bypass valve (17) is disposed in the bypass-valve flow path (171), the bypass valve (17) is disposed in parallel with the first regulate valve (111), and one end of the bypass-valve flow path (171) is connected to one end of the first regulate valve (111), and the other end is connected to the other end of the first regulate valve (111); the heating valve (18) is disposed in the heating flow path (181), one end of the heating flow path (181) is connected with the outdoor heat exchanger (11), and the other end of the heating flow path (181) is connected with one end of the compressor flow path (121); the function valve (19) is disposed in the function-valve flow path (191), one end of the function-valve flow path is connected with the other end of the in-vehicle condenser flow path (141), and the other end of the function-valve flow path (191) is connected with one end of the battery-cooler flow path (412) of the refrigerant main path (41).

7. A vehicle thermal management method adapted for the vehicle thermal management system according to any one of claims 1 to 6, the vehicle thermal management method comprises following steps:
S1: acquiring a startup information of a vehicle, and judging whether the vehicle is started up according to the startup information of the vehicle;
if yes, step S2 is performed;
if no, it is repeatedly judged whether the vehicle is started up;
S2: acquiring a state information of the vehicle from a power management module of the vehicle, and judging whether the vehicle is currently in a driving state according to the state information of the vehicle;
if the vehicle is currently in the driving state, step S3 is performed;
if the vehicle is not currently in the driving state, it is repeatedly judged whether the vehicle is currently in the driving state;
S3: acquiring a state information of a battery (21) and a state information of a passenger compartment in the vehicle thermal management system, and judging whether a thermal management demand of the vehicle is only heating the passenger compartment according to the state information of the battery (21) and the state information of the passenger compartment;
if yes, step S4 is performed;
if no, it is repeatedly judged whether the thermal management demand of the vehicle is only heating the passenger compartment;
S4: judging whether an environment temperature is less than a preset first temperature threshold;
if yes, it is judged whether a core temperature of the battery (21) is greater than or equal to a preset second temperature threshold, and whether a water temperature of the electric drive assembly (31) is less than a preset third temperature threshold;
if the core temperature of the battery (21) is greater than or equal to the preset second temperature threshold, and the water temperature of the electric drive assembly (31) is less than the preset third temperature threshold, the vehicle thermal management system enters a first mode; wherein
in the first mode, the thermoelectric heat exchanger (5) is not energized, a battery-loop water pump of the battery thermal management loop (2) operates, a battery coolant main path (8) of the battery thermal management loop (2) communicates with a battery flow path (9), an electric-drive-loop water pump (35) of the electric-drive thermal management loop (3) operates, and the electric-drive-flow-path switch component (34) brings the electric-drive coolant main path (6) in communication with the heat-dissipation bypass (33), to form a loop; a compressor flow path (121), an in-vehicle condenser flow path (141), a function-valve flow path (191) and the battery-cooler flow path (412) of the air-conditioning refrigerating-heating loop (1) are in communication, to form a loop;
if a core temperature of the battery (21) is less than a preset second temperature threshold, or the water temperature of the electric drive assembly (31) is greater than or equal to a preset third temperature threshold, it is judged whether the water temperature of the electric drive assembly (31) is greater than or equal to the environment temperature;
if the water temperature of the electric drive assembly (31) is greater than or equal to the environment temperature, the vehicle thermal management system enters a second mode; wherein
in the second mode, the thermoelectric heat exchanger (5) is energized, and one side of the thermoelectric heat exchanger (5) located in the battery thermal management loop (2) is a heating side, and one side of the thermoelectric heat exchanger (5) located in the electric-drive thermal management loop (3) is a refrigerating side, the battery-loop water pump of the battery thermal management loop (2) operates, the battery coolant main path (8) and a battery bypass (22) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation bypass (33), to form a loop; the compressor flow path (121), the in-vehicle condenser flow path (141), the function-valve flow path (191) and the battery-cooler flow path (412) of the air-conditioning refrigerating-heating loop (1) are in communication, to form a loop;
if the water temperature of the electric drive assembly (31) is less than the environment temperature, the vehicle thermal management system enters a third mode; wherein
in the third mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop (2) operates, the battery coolant main path (8) and the battery bypass (22) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the compressor flow path (121), the in-vehicle condenser flow path (141), the function-valve flow path (191) and the battery-cooler flow path (412) of the air-conditioning refrigerating-heating loop (1) are in communication, to form a loop.

8. The vehicle thermal management method according to claim 7, wherein while the electric-drive coolant main path (6) comprises a thermoelectric-heat-exchange flow path (61) and an electric-drive flow path (62) which are sequentially connected in series, and the electric-drive thermal management loop (3) further comprises a thermoelectric-heat-exchange bypass (37), in the first mode, the electric-drive-flow-path switch component (34) brings the electric-drive flow path (62), the thermoelectric-heat-exchange bypass (37) in communication with the heat-dissipation bypass (33), to form a loop; and
when the electric-drive-flow-path switch component (34) is a four-way valve, and a first port of the four-way valve is connected with one end of the heat-dissipation main path (7), a second port is connected with the other end of the thermoelectric-heat-exchange flow path (61), a third port is connected with the other end of the thermoelectric-heat-exchange bypass (37), and a fourth port is connected with one end of the heat-dissipation bypass (33), the third port and the fourth port of the four-way valve are in communication.

9. The vehicle thermal management method according to claim 7 or 8, wherein in the step S4,
if the environment temperature is greater than or equal to the preset first temperature threshold, the vehicle thermal management system enters a fourth mode, and it is judged whether an outlet water temperature of the battery cooler (4) is less than a sum of a temperature of refrigerant at the other end of the outdoor heat exchanger (11) of the air-conditioning refrigerating-heating loop (1), and a preset first temperature difference threshold;
if yes, opening degrees of a first regulate valve (111) and a second regulate valve (16) of the vehicle thermal management system are regulated to a proportional limit, and it is judged whether an outlet water temperature of the electric drive assembly (31) of the vehicle is greater than or equal to the environment temperature;
if the outlet water temperature of the electric drive assembly (31) of the vehicle is greater than or equal to the environment temperature, the vehicle thermal management system enters a fifth mode;
if the temperature of the electric drive assembly (31) of the vehicle is less than the environment temperature, the vehicle thermal management system enters a sixth mode; wherein
in the fourth mode, the thermoelectric heat exchanger (5) is not energized, the battery-loop water pump of the battery thermal management loop (2) operates, the battery coolant main path (8) and the battery bypass (22) of the battery thermal management loop (2) are in communication to form a loop; the electric-drive-loop water pump (35) of the electric-drive thermal management loop (3) operates, the electric-drive-flow-path switch component (34) brings the electric-drive coolant main path (6) in communicate with the heat-dissipation bypass (33), to form a loop; the compressor flow path (121), the in-vehicle condenser flow path (141), the function-valve flow path (191) and the battery-cooler flow path (412) of the air-conditioning refrigerating-heating loop (1) are in communication, to form a first loop; and the compressor flow path (121), the in-vehicle condenser flow path (141), and the outdoor-heat-exchanger flow path (411) and a heating flow path (181) of the air-conditioning refrigerating-heating loop (1) are in communication, to form a second loop;
in the fifth mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop operates, the battery coolant main path (8) and the battery bypass (22) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation bypass (33), to form a loop; the compressor flow path (121), the in-vehicle condenser flow path (141), the function-valve flow path (191) and the battery-cooler flow path (412) of the air-conditioning refrigerating-heating loop (1) are in communication, to form a first loop; and the compressor flow path (121), the in-vehicle condenser flow path (141), the outdoor-heat-exchanger flow path (411) and the heating flow path (181) of the air-conditioning refrigerating-heating loop (1) are in communication, to form a second loop;
in the sixth mode, the thermoelectric heat exchanger (5) is energized, and one side of the thermoelectric heat exchanger (5) located in the battery thermal management loop (2) is a heating side, and one side of the thermoelectric heat exchanger (5) located in the electric-drive thermal management loop is a refrigerating side, the battery-loop water pump of the battery thermal management loop (2) operates, the battery-coolant main path (8) and the battery bypass (22) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the compressor flow path (121), the in-vehicle condenser flow path (141), the function-valve flow path (191) and the battery-cooler flow path (412) of the air-conditioning refrigerating-heating loop (1) are in communication, to form a first loop; and the compressor flow path (121), the in-vehicle condenser flow path (141), the outdoor-heat-exchanger flow path (411) and the heating flow path (181) of the air-conditioning refrigerating-heating loop (1) are in communication, to form a second loop.

10. The vehicle thermal management method according to any one of claims 7 to 9, wherein in the step S2, if the vehicle is currently in the driving state, the thermal management method further comprises:
acquiring a state information of the battery (21) and a state information of the passenger compartment in the vehicle thermal management system, and judging whether the thermal management demand of the vehicle is only heating the battery (21) according to the state information of the battery (21) and the state information of the passenger compartment;
if yes, it is judged whether the water temperature of the electric drive assembly (31) is greater than or equal to a preset fourth temperature threshold;
if no, it is repeatedly judged whether the thermal management demand of the vehicle is only heating the battery (21);
if the water temperature of the electric drive assembly (31) is greater than or equal to the preset fourth temperature threshold, the vehicle thermal management system enters a seventh mode; wherein
in the seventh mode, the thermoelectric heat exchanger (5) is not energized, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, the electric-drive-flow-path switch component (34) brings the electric-drive coolant main path (6) in communication with the heat-dissipation bypass (33), to form a loop; and the air-conditioning refrigerating-heating loop (1) does not operate;
if the water temperature of the electric drive assembly (31) is less than the preset fourth temperature threshold, it is judged whether the water temperature of the electric drive assembly (31) is greater than or equal to the environment temperature;
if the water temperature of the electric drive assembly (31) is greater than or equal to the environment temperature, the vehicle thermal management system enters an eighth mode; wherein
in the eighth mode, the thermoelectric heat exchanger (5) is energized, and one side of the thermoelectric heat exchanger (5) located in the battery thermal management loop is a he(2) ating side, one side of the thermoelectric heat exchanger (5) located in the electric-drive thermal management loop (3) is a refrigerating side, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, the electric-drive-flow-path switch component (34) brings the electric-drive coolant main path (6) in communication with the heat-dissipation bypass (33), to form a loop; and the air-conditioning refrigerating-heating loop (1) does not operate;
if the temperature of the electric drive assembly (31) is less than the environment temperature, the vehicle thermal management system enters a ninth mode; wherein
in the ninth mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, the electric-drive-flow-path switch component (34) brings the electric-drive coolant main path (6) in communication with the heat-dissipation main path (7), to form a loop; and the air-conditioning refrigerating-heating loop (1) does not operate.

11. The vehicle thermal management method according to any one of claims 7 to 10, wherein in the step S2, if the vehicle is currently in the driving state, the thermal management method further comprises:
acquiring a state information of the battery (21) and a state information of the passenger compartment in the vehicle thermal management system, and judging whether the thermal management demand of the vehicle is heating the battery (21) and heating the passenger compartment according to the state information of the battery (21) and the state information of the passenger compartment;
if the thermal management demand of the vehicle is heating the battery (21) and heating the passenger compartment, it is judged whether a target of heating the passenger compartment is satisfied;
if the thermal management demand of the vehicle is not heating the battery (21) and heating the passenger compartment, it is repeatedly judged whether the thermal management demand of the vehicle is heating the battery (21) and heating the passenger compartment;
if the target of heating the passenger compartment is satisfied, it is judged whether a rotating speed of a compressor (12) of the vehicle thermal management system is less than a preset rotating speed threshold;
if the target of heating the passenger compartment is not satisfied, it is judged whether the thermal management demand of the vehicle is heating the battery (21) and heating the passenger compartment;
if the rotating speed of the compressor (12) is less than the preset rotating speed threshold, it is judged whether the water temperature of the electric drive assembly (31) is greater than or equal to the environment temperature;
if the rotating speed of the compressor (12) is greater than or equal to the preset rotating speed threshold, it is repeatedly judged whether the target of heating the passenger compartment is satisfied;
if the rotating speed of the compressor (12) is less than the preset rotating speed threshold, it is judged whether the water temperature of the electric drive assembly (31) is greater than or equal to the environment temperature;
if the water temperature of the electric drive assembly (31) is greater than or equal to the environment temperature, the vehicle thermal management system enters a tenth mode; wherein
in the tenth mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation bypass (33), to form a loop; the compressor flow path (121), the in-vehicle condenser flow path (141), the function-valve flow path (191) and the battery-cooler flow path (412) of the air-conditioning refrigerating-heating loop (1) are in communication, to form a first loop; and the compressor flow path (121), the in-vehicle condenser flow path (141), the outdoor-heat-exchanger flow path (411) and the heating flow path (181) of the air-conditioning refrigerating-heating loop (1) are in communication, to form a second loop;
if the water temperature of the electric drive assembly (31) is less than the environment temperature, the vehicle thermal management system enters an eleventh mode; wherein
in the eleventh mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop operates, the battery coolant main path (8) of the battery thermal management loop (2) communicates with the battery flow path (9) to form a loop; the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the compressor flow path (121), the in-vehicle condenser flow path (141), the function-valve flow path (191) and the battery-cooler flow path (412) of the air-conditioning refrigerating-heating loop (1) are in communication, to form a first loop; and the compressor flow path (121), the in-vehicle condenser flow path (141), the outdoor-heat-exchanger flow path (411) and the heating flow path (181) of the air-conditioning refrigerating-heating loop (1) are in communication, to form a second loop.

12. The vehicle thermal management method according to any one of claims 7 to 11, wherein in the step S1, if the vehicle is started up, the thermal management method further comprises:
acquiring a state information of the vehicle from a power management module of the vehicle, and judging whether the vehicle is currently in a charging state according to the state information of the vehicle;
if the vehicle is currently in the charging state, it is judged whether the thermal management demand of the vehicle is only heating the passenger compartment;
if the thermal management demand of the vehicle is only heating the passenger compartment, it is judged whether the environment temperature is less than a preset fifth temperature threshold;
if the environment temperature is less than the preset fifth temperature threshold, the vehicle thermal management system enters the third mode;
if the environment temperature is greater than or equal to the preset fifth temperature threshold, the vehicle thermal management system enters a sixth mode;
if the thermal management demand of the vehicle is judged not be only heating the passenger compartment, it is judged whether the thermal management demand of the vehicle is only heating the battery (21);
if it is only heating the battery (21), the vehicle thermal management system enters a twelfth mode; wherein
in the twelfth mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the air-conditioning refrigerating-heating loop (1) does not operate;
if it is judged not to be only heating the battery (21), it is judged whether the thermal management demand of the vehicle is heating the battery (21) and heating the passenger compartment;
if the thermal management demand of the vehicle is heating the battery (21) and heating the passenger compartment, the vehicle thermal management system enters a thirteenth mode; wherein
in the thirteenth mode, the thermoelectric heat exchanger (5) is energized, and one side of the thermoelectric heat exchanger (5) located in the battery thermal management loop (2) is a heating side, one side of the thermoelectric heat exchanger (5) located in the electric-drive thermal management loop (3) is a refrigerating side, the battery-loop water pump of the battery thermal management loop (2) operates, the battery coolant main path (8) and the battery flow path (9) of the battery thermal management loop (2) are in communication to form a loop; the electric-drive loop water pump (35) of the electric-drive thermal management loop (3) operates, and the electric-drive-flow-path switch component (34) brings the electric-drive coolant main path (6) in communication with the heat-dissipation main path (7), to form a loop; the compressor flow path (121), the in-vehicle condenser flow path (141), the function-valve flow path (191) and the battery-cooler flow path (412) of the air-conditioning refrigerating-heating loop (1) are in communication, to form a loop.

13. The vehicle thermal management method according to claim 12, wherein in the step S1, if the vehicle is started up, the thermal management method further comprises:
acquiring a state information of the battery (21) in the vehicle thermal management system, and judging whether the battery (21) has a cooling demand according to the state information of the battery (21);
if the battery (21) has the cooling demand, it is judged whether the environment temperature is greater than a preset sixth temperature threshold;
if the environment temperature is greater than the preset sixth temperature threshold, it is judged whether the passenger compartment has a refrigerating demand at the same time;
if the passenger compartment has the refrigerating demand at the same time, it is judged whether an absolute value of a difference between a target temperature of the passenger compartment and an actual temperature of the passenger compartment is greater than a preset second temperature difference threshold;
if the passenger compartment has no refrigerating demand, it is repeatedly judged whether the passenger compartment has the refrigerating demand at the same time;
if the absolute value of the difference between the target temperature of the passenger compartment and the actual temperature of the passenger compartment is greater than the preset second temperature difference threshold, the vehicle thermal management system enters a fourteenth mode; wherein
in the fourteenth mode, the thermoelectric heat exchanger (5) is energized, and one side of the thermoelectric heat exchanger (5) located in the battery thermal management loop (2) is a refrigerating side, one side of the thermoelectric heat exchanger (5) located in the electric-drive thermal management loop (3) is a heating side, the battery-loop water pump of the battery thermal management loop (2) operates, the battery coolant main path (8) and the battery flow path (9) of the battery thermal management loop (2) are in communication to form a loop; the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the compressor flow path (121), the in-vehicle condenser flow path, (141) the regulate-valve flow path (1111) and the indoor evaporator flow path of an air-conditioning refrigerating-heating loop (1) are in communication, to form a loop; and a refrigerant does not flow through an in-vehicle condenser (14);
if the absolute value of the difference between the target temperature of the passenger compartment and the actual temperature of the passenger compartment is less than or equal to the preset second temperature difference threshold, the vehicle thermal management system enters a fifteenth mode; wherein
in the fifteenth mode, the thermoelectric heat exchanger (5) is not energized, the battery-loop water pump of the battery thermal management loop (2) operates or turns off, the battery coolant main path (8) and the battery flow path (9) of the battery thermal management loop (2) are in communication to form a loop; the electric-drive-loop water pump (35) of the electric-drive thermal management loop (3) operates, the electric-drive-flow-path switch component (34) brings the electric-drive coolant main path (6) in communication with the heat-dissipation main path (7), to form a loop; the compressor flow path (121), the bypass-valve flow path (171), the function-valve flow path (191), the outdoor-heat-exchanger flow path (411), and the battery-cooler flow path (412) of the air-conditioning refrigerating-heating loop (1) are in communication to form a first loop; and the compressor flow path (121), the in-vehicle condenser flow path (141), the bypass-valve flow path (171), the function-valve flow path (191), the outdoor heat exchanger (11) and the in-vehicle evaporator flow path (152) of the air-conditioning refrigerating-heating loop (1) are in communication, to form a second loop;
if the environment temperature is less than or equal to the preset sixth temperature threshold, it is judged whether a target water temperature of the battery (21) is less than a preset seventh temperature threshold;
if the water temperature of the battery (21) is less than the preset seventh temperature threshold, the vehicle thermal management system enters a sixteenth mode; wherein
in the sixteenth mode, the thermoelectric heat exchanger (5) is not energized, the battery-loop water pump of the battery thermal management loop (2) operates, the battery cooler (4) of the battery thermal management loop (2) does not operate, the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; an operating state of the air-conditioning refrigerating-heating loop (1) is to be determined;
if the water temperature of the battery (21) is greater than or equal to the preset seventh temperature threshold, the vehicle thermal management system enters a seventeenth mode; wherein
in the seventeenth mode, the thermoelectric heat exchanger (5) is energized, and one side of the thermoelectric heat exchanger (5) located in the battery thermal management loop (2) is a refrigerating side, one side of the thermoelectric heat exchanger (5) located in the electric-drive thermal management loop (3) is a heating side, the battery cooler (4) of the battery thermal management loop (2) does not operate, the electric-drive-loop water pump (35) of the electric-drive thermal management loop (3) operates, and the electric-drive-flow-path switch component (34) brings the electric-drive coolant main path (6) in communication with the heat-dissipation main path (7), to form a loop; the operating state of the air-conditioning refrigerating-heating loop (1) is to be determined.

14. The vehicle thermal management method according to claim 13, wherein while the electric-drive coolant main path (6) comprises a thermoelectric-heat-exchange flow path (61) and an electric-drive flow path (62) which are sequentially connected in series, and the electric-drive thermal management loop (3) further comprises a thermoelectric-heat-exchange bypass (37), in the fifteenth mode, the electric-drive-flow-path switch component (34) brings the electric-drive flow path (62), the thermoelectric-heat-exchange bypass (37) in communication with the heat-dissipation main path (7), to form a loop; and
when the electric-drive-flow-path switch component (34) is a four-way valve, and a first port of the four-way valve is connected with one end of the heat-dissipation main path (7), a second port is connected with the other end of the thermoelectric-heat-exchange flow path (61), a third port is connected with the other end of a thermoelectric-heat-exchange bypass (37), and a fourth port is connected with one end of the heat-dissipation bypass (33), the first port and the third port of the four-way valve are in communication.

15. The vehicle thermal management method according to claim 13, wherein when the battery-flow-path switch component is a three-way valve, the electric-drive-flow-path switch component (34) is a four-way valve, and the air-conditioning refrigerating-heating loop (1) further comprises a first regulate valve (111), a second regulate valve (16), a third regulate valve (151), a bypass valve (17), a heating valve (18), and a function valve (19),
in the first mode, a first port and a third port of the battery-flow-path switch component are in communication, a third port and a fourth port of the electric-drive-flow-path switch component (34) are in communication, the first regulate valve (111) is closed, the second regulate valve (16) is half-opened for throttling, the third regulate valve (151) is closed, the bypass valve (17) is closed, the heating valve (18) is closed, and the function valve (19) is opened;
in the second mode, the first port and a second port of the battery-flow-path switch component are in communication, and a second port and the fourth port of the electric-drive-flow-path switch component (34) are in communication; the first regulate valve (111) is closed, the second regulate valve (16) is half-opened for throttling, the third regulate valve (151) is closed, the bypass valve (17) is closed, the heating valve (18) is closed, and the function valve (19) is opened;
in the third mode, the first port and the second port of the battery-flow-path switch component are in communication, and a first port and the second port of the electric-drive-flow-path switch component (34) are in communication; the first regulate valve (111) is closed, the second regulate valve (16) is half-opened for throttling, the third regulate valve (151) is closed, the bypass valve (17) is closed, the heating valve (18) is closed, and the function valve (19) is opened;
in the fourth mode, the first port and the second port of the battery-flow-path switch component are in communication, the second port and the fourth port of the electric-drive-flow-path switch component (34) are in communication, the first regulate valve (111) is half-opened for throttling, the second regulate valve (16) is half-opened for throttling, the third regulate valve (151) is closed, the bypass valve (17) is closed, the heating valve (18) is opened, and the function valve (19) is opened;
in the fifth mode, the first port and the second port of the battery-flow-path switch component are in communication, the second port and the fourth port of the electric-drive-flow-path switch component (34) are in communication, the first regulate valve (111) is half-opened for throttling, the second regulate valve (16) is half-opened for throttling, the third regulate valve (151) is closed, the bypass valve (17) is closed, the heating valve (18) is opened, and the function valve (19) is opened;
in the sixth mode, the first port and the second port of the battery-flow-path switch component are in communication, the first port and the second port of the electric-drive-flow-path switch component (34) are in communication, the first regulate valve (111) is half-opened for throttling, the second regulate valve (16) is half-opened for throttling, the third regulate valve (151) is closed, the bypass valve (17) is closed, the heating valve (18) is opened, and the function valve (19) is opened;
in the seventh mode, the first port and the third port of the battery-flow-path switch component are in communication, the second port and the fourth port of the electric-drive-flow-path switch component (34) are in communication, the first regulate valve (111) is in a normal state, the second regulate valve (16) is in a normal state, the third regulate valve (151) is in a normal state, the bypass valve (17) is in a normal state, the heating valve (18) is in a normal state, and the function valve is in a normal state;
in the eighth mode, the first port and the third port of the battery-flow-path switch component are in communication, the second port and the fourth port of the electric-drive-flow-path switch component (34) are in communication, the first regulate valve (111) is in a normal state, the second regulate valve (16) is in a normal state, the third regulate valve (151) is in a normal state, the bypass valve (17) is in a normal state, the heating valve (18) is in a normal state, and the function valve (19) is in a normal state;
in the ninth mode, the first port and the third port of the battery-flow-path switch component are in communication, the first port and the second port of the electric-drive-flow-path switch component (34) are in communication, the first regulate valve (111) is in a normal state, the second regulate valve (16) is in a normal state, the third regulate valve (151) is in a normal state, the bypass valve (17) is in a normal state, the heating valve (18) is in a normal state, and the function valve (19) is in a normal state;
in the tenth mode, the first port and the third port of the battery-flow-path switch component are in communication, the second port and the fourth port of the electric-drive-flow-path switch component (34) are in communication, the first regulate valve (111) is half-opened for throttling, the second regulate valve (16) is half-opened for throttling, the third regulate valve (151) is closed, the bypass valve (17) is closed, the heating valve (18) is opened, and the function valve (19) is opened;
in the eleventh mode, the first port and the third port of the battery-flow-path switch component are in communication, the first port and the second port of the electric-drive-flow-path switch component (34) are in communication, the first regulate valve (111) is half-opened for throttling, the second regulate valve (16) is half-opened for throttling, the third regulate valve (151) is closed, the bypass valve (17) is closed, the heating valve (18) is opened, and the function valve (19) is opened;
in the twelfth mode, the first port and the third port of the battery-flow-path switch component are in communication, the first port and the second port of the electric-drive-flow-path switch component (34) are in communication, the first regulate valve (111) is in a normal state, the second regulate valve (16) is in a normal state, the third regulate valve (151) is in a normal state, the bypass valve (17) is in a normal state, the heating valve (18) is in a normal state, and the function valve (19) is in a normal state;
in the thirteenth mode, the first port and the third port of the battery-flow-path switch component are in communication, the first port and the second port of the electric-drive-flow-path switch component (34) are in communication, the first regulate valve (111) is closed, the second regulate valve (16) is half-opened for throttling, the third regulate valve (151) is closed, the bypass valve (17) is closed, the heating valve (18) is closed, and the function valve (19) is opened;
in the fourteenth mode, the first port and the third port of the battery-flow-path switch component are in communication, the first port and the second port of the electric-drive-flow-path switch component (34) are in communication, the first regulate valve (111) is opened, the second regulate valve (16) is closed or half-opened for throttling, the third regulate valve (151) is opened, the bypass valve (17) is opened, the heating valve (18) is closed, and the function valve (19) is closed;
in the fifteenth mode, the first port and the third port of the battery-flow-path switch component are in communication, the first port and the third port of the electric-drive-flow-path switch component (34) are in communication, the first regulate valve (111) is opened, the second regulate valve (16) is closed or half-opened for throttling, the third regulate valve (151) is opened or closed, the bypass valve (17) is opened, the heating valve (18) is closed, and the function valve (19) is closed;
in the sixteenth mode, the first port and the third port of the battery-flow-path switch component are in communication, the first port and the second port of the electric-drive-flow-path switch component (34) are in communication, the first regulate valve (111) is to be determined, the second regulate valve (16) is to be determined, the third regulate valve (151) is to be determined, the bypass valve (17) is to be determined, the heating valve (18) is to be determined, and the function valve (19) is to be determined;
in the seventeenth mode, the first port and the third port of the battery-flow-path switch component are in communication, the first port and the second port of the electric-drive-flow-path switch component (34) are in communication, the first regulate valve (111) is to be determined, the second regulate valve (16) is to be determined, the third regulate valve (151) is to be determined, the bypass valve (17) is to be determined, the heating valve (18) is to be determined, and the function valve (19) is to be determined.

16. The vehicle thermal management method according to any one of claims 13 to 15, wherein
a range of the preset first temperature threshold is -13°C to -17°C;
a range of the preset second temperature threshold is 15°C to 25 °C;
a range of the preset third temperature threshold is 0°C to 10°C;
a range of the preset fourth temperature threshold is 15 °C to 25°C;
a range of the preset fifth temperature threshold is -13°C to -17°C;
a range of the preset sixth temperature threshold is 18°C to 22°C;
a range of the preset seventh temperature threshold is 12°C to 20°C;
a range of the preset first temperature difference threshold is 0°C to 5C;
a range of the preset second temperature difference threshold is 0°C to 5°C.

## Patentansprüche

1. Fahrzeugwärmeverwaltungssystem, umfassend einen Kühl-/Heizkreislauf der Klimaanlage (1), einen Batteriewärmeverwaltungskreis (2) und einen Elektroantriebswärmeverwaltungskreis (3), wobei ein Batteriekühler (4) zwischen dem Kühl-/Heizkreislauf der Klimaanlage (1) und dem Batteriewärmeverwaltungskreis (2) angeordnet ist, eine Batterie (21) im Batteriewärmeverwaltungskreis (2) angeordnet ist, der Elektroantriebswärmeverwaltungskreis (3) einen Elektroantriebs-Kühlmittel-Hauptströmungsweg (6) und einen Wärmeabfuhr-Hauptströmungsweg (7) umfasst, die nacheinander in Reihe verbunden sind, wobei eine Elektroantriebseinheit (31) im Elektroantriebs-Kühlmittel-Hauptströmungsweg (6) angeordnet ist und ein Kühler im Wärmeabfuhr-Hauptströmungsweg (7) angeordnet ist,
wobei der Elektroantriebswärmeverwaltungskreis (3) weiter einen Wärmeabfuhr-Bypass (33) und eine Elektroantriebs-Strömungsweg-Schaltkomponente (34) umfasst, der Wärmeabfuhr-Bypass (33) parallel mit dem Wärmeabfuhr-Hauptströmungsweg (7) verbunden ist, und die Elektroantriebs-Strömungsweg-Schaltkomponente (34) zwischen einem Ende des Wärmeabfuhr-Hauptströmungswegs (7), einem Ende des Wärmeabfuhr-Bypasses (33) und einem Ende des Elektroantriebs-Kühlmittel-Hauptströmungswegs (6) verbunden ist; wobei ein Kreislauf gebildet wird, nachdem der Elektroantriebs-Kühlmittel-Hauptströmungsweg (6) durch die Elektroantriebs-Strömungsweg-Schaltkomponente (34) wahlweise mit dem Wärmeabfuhr-Hauptströmungsweg (7) oder dem Wärmeabfuhr-Bypass (33) in Fluidverbindung steht, **dadurch gekennzeichnet, dass**
das Fahrzeugwärmeverwaltungssystem weiter einen thermoelektrischen Wärmetauscher (5) umfasst, wobei der thermoelektrische Wärmetauscher (5) zwischen dem Batteriewärmeverwaltungskreis (2) und dem Elektroantriebs-Kühlmittel-Hauptströmungsweg (6) des Elektroantriebswärmeverwaltungskreises (3) angeordnet ist, so dass ein Wärmeübertragungszustand eines Kühlmittels zwischen dem Batteriewärmeverwaltungskreis (2) und dem Elektroantriebswärmeverwaltungskreis (3) durch den thermoelektrischen Wärmetauscher (5) geregelt wird;
wobei der Elektroantriebs-Kühlmittel-Hauptströmungsweg (6) einen thermoelektrischen Wärmeaustausch-Strömungsweg (61) und einen Elektroantriebs-Strömungsweg (62) umfasst, die nacheinander in Reihe verbunden sind, wobei der thermoelektrische Wärmetauscher (5) im thermoelektrischen Wärmeaustausch-Strömungsweg (61) angeordnet ist, die Elektroantriebseinheit (31) im Elektroantriebs-Strömungsweg (62) angeordnet ist, das andere Ende des thermoelektrischen Wärmeaustausch-Strömungswegs (61) das eine Ende des Elektroantriebs-Kühlmittel-Hauptströmungswegs (6) ist und mit der Elektroantriebs-Strömungsweg-Schaltkomponente (34) verbunden ist, und ein Ende des Elektroantriebs-Strömungswegs (62) das andere Ende des Elektroantriebs-Kühlmittel-Hauptströmungswegs (6) ist und mit dem anderen Ende des Wärmeabfuhr-Hauptkreislaufs und dem anderen Ende des Wärmeabfuhr-Bypasses (33) verbunden ist;
der Elektroantriebswärmeverwaltungskreis (3) weiter einen thermoelektrischen Wärmeaustausch-Bypass (37) umfasst, wobei ein Ende des thermoelektrischen Wärmeaustausch-Bypasses (37) mit einem Ende des thermoelektrischen Wärmeaustausch-Strömungswegs (61) verbunden ist, und das andere Ende des thermoelektrischen Wärmeaustausch-Bypasses (37) mit der Elektroantriebs-Strömungsweg-Schaltkomponente (34) verbunden ist, so dass der thermoelektrische Wärmeaustausch-Bypass (37) und der thermoelektrische Wärmeaustausch-Strömungsweg (61) parallel angeordnet sind;
wobei die Elektroantriebs-Strömungsweg-Schaltkomponente (34) wahlweise den Wärmeabfuhr-Hauptströmungsweg (7) oder den Wärmeabfuhr-Bypass (33) mit dem thermoelektrischen Wärmeaustausch-Strömungsweg (61) oder dem thermoelektrischen Wärmeaustausch-Bypass (37) und anschließend mit dem Elektroantriebs-Strömungsweg (62) in Fluidverbindung bringt, um einen Kreislauf zu bilden, und
wobei die Elektroantriebs-Strömungsweg-Schaltkomponente (34) ein Vierwegeventil ist, das eine erste Öffnung, eine zweite Öffnung, eine dritte Öffnung und eine vierte Öffnung aufweist; die erste Öffnung mit einem Ende des Wärmeabfuhr-Hauptströmungswegs (7) verbunden ist, die zweite Öffnung mit dem anderen Ende des thermoelektrischen Wärmeaustausch-Strömungswegs (61) verbunden ist, die dritte Öffnung mit dem anderen Ende des thermoelektrischen Wärmeaustausch-Bypasses (37) verbunden ist und die vierte Öffnung mit einem Ende des Wärmeabfuhr-Bypasses (33) verbunden ist;
eine Elektroantriebskreislauf-Wasserpumpe (35) weiter im Elektroantriebs-Strömungsweg (62) angeordnet ist und die Elektroantriebskreislauf-Wasserpumpe (35) zwischen dem thermoelektrischen Wärmetauscher (5) und der Elektroantriebseinheit (31) angeordnet ist.

2. Fahrzeugwärmeverwaltungssystem nach Anspruch 1, wobei der thermoelektrische Wärmetauscher (5) eine thermoelektrische Wärmetauschereinheit (50) umfasst, wobei die thermoelektrische Wärmetauschereinheit (50) ein Batterie-Flüssigkeitskühlmodul (51), ein thermoelektrisches Modul (51) und ein Elektroantriebs-Flüssigkeitskühlmodul (55) umfasst, die nacheinander entlang einer Dickenrichtung des thermoelektrischen Wärmetauschers (5) gestapelt sind, wobei eine Seite des thermoelektrischen Moduls mit dem Batterie-Flüssigkeitskühlmodul (51) in Kontakt steht, wobei die andere Seite des thermoelektrischen Moduls mit dem Elektroantriebs-Flüssigkeitskühlmodul (55) in Kontakt steht, wobei das Batterie-Flüssigkeitskühlmodul (51) im Batteriewärmeverwaltungskreis (2) angeordnet ist und in Reihe mit der Batterie (21) angeordnet ist, und wobei das Elektroantriebs-Flüssigkeitskühlmodul (55) im Elektroantriebs-Kühlmittel-Hauptströmungsweg (6) angeordnet ist und in Reihe mit der Elektroantriebseinheit (31) angeordnet ist.

3. Fahrzeugwärmeverwaltungssystem nach Anspruch 2, wobei das thermoelektrische Modul eine erste wärmeleitfähige Schicht (52), eine Halbleiterschicht (53) und eine zweite wärmeleitfähige Schicht (54) umfasst, die nacheinander entlang einer Dickenrichtung der thermoelektrischen Wärmetauschereinheit (50) gestapelt sind; wobei eine Seite der ersten wärmeleitfähigen Schicht (52) mit dem Batterie-Flüssigkeitskühlmodul (51) in Kontakt steht, wobei die andere Seite der ersten wärmeleitfähigen Schicht (52) mit einer Seite der Halbleiterschicht (53) in Kontakt steht, wobei die andere Seite der Halbleiterschicht (53) mit einer Seite der zweiten wärmeleitfähigen Schicht (54) in Kontakt steht, wobei die andere Seite der zweiten wärmeleitfähigen Schicht (54) mit dem Elektroantriebs-Flüssigkeitskühlmodul (55) in Kontakt steht, und wobei die Halbleiterschicht (53) eine Vielzahl von Halbleitern (531) umfasst, die in einer Matrix angeordnet sind.

4. Fahrzeugwärmeverwaltungssystem nach einem der Ansprüche 1 bis 3, wobei der Batteriewärmeverwaltungskreis (2) einen Batterie-Kühlmittel-Hauptströmungsweg (8) und einen Batterie-Strömungsweg (9) umfasst, die nacheinander in Reihe verbunden sind, wobei der thermoelektrische Wärmetauscher (5) und der Batteriekühler (4) beide im Batterie-Kühlmittel-Hauptströmungsweg (8) angeordnet sind, und wobei die Batterie (21) im Batterie-Strömungsweg (9) angeordnet ist; und
der Batteriewärmeverwaltungskreis (2) weiter einen Batterie-Bypass (22) und eine Batterie-Strömungsweg-Schaltkomponente umfasst; wobei der Batterie-Bypass (22) und der Batterie-Kühlmittel-Hauptströmungsweg (8) parallel verbunden sind, und wobei die Batterie-Strömungsweg-Schaltkomponente zwischen dem anderen Ende des Batterie-Kühlmittel-Hauptströmungswegs (8), einem Ende des Batterie-Bypasses (22) und einem Ende des Batterie-Strömungswegs (9) verbunden ist; und
der Wärmeabfuhr-Bypass (33) und der Batterie-Bypass (22) beide kurze Bypässe sind;
eine Batterie-Kreislauf-Wasserpumpe weiter im Batterie-Kühlmittel-Hauptströmungsweg (8) angeordnet ist und die Batterie-Kreislauf-Wasserpumpe zwischen dem thermoelektrischen Wärmetauscher (5) und der Batterie-Strömungsweg-Schaltkomponente angeordnet ist.

5. Fahrzeugwärmeverwaltungssystem nach Anspruch 4, wobei die Batterie-Strömungsweg-Schaltkomponente ein Dreiwegeventil ist, das eine erste Öffnung, eine zweite Öffnung und eine dritte Öffnung aufweist, wobei die erste Öffnung mit dem anderen Ende des Batterie-Kühlmittel-Hauptströmungswegs (8) verbunden ist, wobei die zweite Öffnung mit einem Ende des Batterie-Bypasses (22) verbunden ist, und wobei die dritte Öffnung mit einem Ende des Batterie-Strömungswegs (9) verbunden ist.

6. Fahrzeugwärmeverwaltungssystem nach einem der Ansprüche 1 bis 5, wobei der Kühl-/Heizkreislauf der Klimaanlage (1) einen Verdichter-Strömungsweg (121), einen Innenraumkondensator-Strömungsweg (141), einen Heiz-Strömungsweg (181), einen Kältemittel-Hauptströmungsweg (41), einen Bypassventil-Strömungsweg (171), einen Funktionsventil-Strömungsweg (191), einen Regulierventil-Strömungsweg (1111) und einen Innenraumverdampfer-Strömungsweg (152) umfasst; wobei der Verdichter-Strömungsweg (121) in Reihe mit dem Innenraumkondensator-Strömungsweg (141) verbunden ist, wobei der Heiz-Strömungsweg (181) in Reihe mit dem Verdichter-Strömungsweg (121) verbunden ist, wobei der Kältemittel-Hauptströmungsweg (41) parallel mit dem Innenraumverdampfer-Strömungsweg (152) und dem Heiz-Strömungsweg (181) verbunden ist, und wobei der Kältemittel-Hauptströmungsweg (41) einen Außenwärmetauscher-Strömungsweg (411) und einen Batteriekühler-Strömungsweg (412) umfasst, die in Reihe verbunden sind; und
der Kühl-/Heizkreislauf der Klimaanlage (1) weiter einen Außenwärmetauscher (11), einen Verdichter (12), einen Gas-Flüssigkeitsabscheider (13), einen Innenraumkondensator (14) und einen Innenraumverdampfer (15) umfasst; wobei der Außenwärmetauscher (11) im Außenwärmetauscher-Strömungsweg (411) angeordnet ist, und wobei ein Ende des Außenwärmetauscher-Strömungswegs (411) mit dem anderen Ende des Regulierventil-Strömungswegs (1111) in Fluidverbindung steht, und das andere Ende des Außenwärmetauscher-Strömungswegs (411) mit einem Ende des Heiz-Strömungswegs (181) und einem Ende des Innenraumverdampfer-Strömungswegs (152) in Fluidverbindung steht; wobei der Gas-Flüssigkeitsabscheider (13) und der Verdichter (12) in Reihe im Verdichter-Strömungsweg (121) angeordnet sind; wobei der Innenraumkondensator (14) mit dem anderen Ende des Verdichter-Strömungswegs (121) und einem Ende des Innenraumkondensator-Strömungswegs (141) verbunden ist; wobei der Innenraumverdampfer (15) im Innenraumverdampfer-Strömungsweg (152) angeordnet ist, und wobei das andere Ende des Innenraumverdampfer-Strömungswegs (152) mit dem anderen Ende des Heiz-Strömungswegs (181) und einem Ende des Verdichter-Strömungswegs (121) verbunden ist; wobei der Batteriekühler (4) im Batteriekühler-Strömungsweg (412) des Kältemittel-Hauptströmungswegs (41) angeordnet ist, und wobei das andere Ende des Kältemittel-Hauptströmungswegs (41) mit einem Ende des Verdichter-Strömungswegs (121) verbunden ist;
der Kühl-/Heizkreislauf der Klimaanlage (1) weiter ein erstes Regulierventil (111), ein zweites Regulierventil (16), ein drittes Regulierventil (151), ein Bypassventil (17), ein Heizventil (18) und ein Funktionsventil (19) umfasst; wobei das erste Regulierventil (111), das zweite Regulierventil (16) und das dritte Regulierventil (151) alle verwendet werden, um eine Durchflussrate des Kältemittels zu regeln; wobei das Bypassventil (17), das Heizventil (18) und das Funktionsventil (19) alle verwendet werden, um eine Strömungsrichtung des Kältemittels zu regeln; wobei das erste Regulierventil (111) im Regulierventil-Strömungsweg angeordnet ist und sich an der Seite eines Endes des Außenwärmetauschers (11) befindet; wobei das zweite Regulierventil (16) im Batteriekühler-Strömungsweg (412) des Kältemittel-Hauptströmungswegs (41) angeordnet ist und sich an der Seite eines Endes des Batteriekühlers (4) befindet; wobei das dritte Regulierventil (151) im Innenraumverdampfer-Strömungsweg (152) angeordnet ist und sich an der Seite eines Endes des Innenraumverdampfers (15) befindet; wobei das Bypassventil (17) im Bypassventil-Strömungsweg (171) angeordnet ist, wobei das Bypassventil (17) parallel mit dem ersten Regulierventil (111) angeordnet ist, und wobei ein Ende des Bypassventil-Strömungswegs (171) mit einem Ende des ersten Regulierventils (111) verbunden ist und das andere Ende mit dem anderen Ende des ersten Regulierventils (111) verbunden ist; wobei das Heizventil (18) im Heiz-Strömungsweg (181) angeordnet ist, wobei ein Ende des Heiz-Strömungswegs (181) mit dem Außenwärmetauscher (11) verbunden ist, und wobei das andere Ende des Heiz-Strömungswegs (181) mit einem Ende des Verdichter-Strömungswegs (121) verbunden ist; wobei das Funktionsventil (19) im Funktionsventil-Strömungsweg (191) angeordnet ist, wobei ein Ende des Funktionsventil-Strömungswegs mit dem anderen Ende des Innenraumkondensator-Strömungswegs (141) verbunden ist, und wobei das andere Ende des Funktionsventil-Strömungswegs (191) mit einem Ende des Batteriekühler-Strömungswegs (412) des Kältemittel-Hauptströmungswegs (41) verbunden ist.

7. Fahrzeugwärmeverwaltungsverfahren, das an das Fahrzeugwärmeverwaltungssystem nach einem der Ansprüche 1 bis 6 angepasst ist, wobei das Fahrzeugwärmeverwaltungsverfahren die folgenden Schritte umfasst:
S1: Erfassen einer Startinformation eines Fahrzeugs und Beurteilen, ob das Fahrzeug entsprechend der Startinformation des Fahrzeugs gestartet wird;
wenn ja, wird Schritt S2 ausgeführt;
wenn nein, wird wiederholt beurteilt, ob das Fahrzeug gestartet wird;
S2: Erfassen einer Zustandsinformation des Fahrzeugs von einem Leistungsverwaltungsmodul des Fahrzeugs und Beurteilen, ob sich das Fahrzeug derzeit entsprechend der Zustandsinformation des Fahrzeugs in einem Fahrzustand befindet;
wenn sich das Fahrzeug derzeit im Fahrzustand befindet, wird Schritt S3 ausgeführt;
wenn sich das Fahrzeug derzeit nicht im Fahrzustand befindet, wird wiederholt beurteilt, ob sich das Fahrzeug derzeit im Fahrzustand befindet;
S3: Erfassen einer Zustandsinformation einer Batterie (21) und einer Zustandsinformation eines Fahrgastraums im Fahrzeugwärmeverwaltungssystem und Beurteilen, ob ein Wärmeverwaltungsbedarf des Fahrzeugs entsprechend der Zustandsinformation der Batterie (21) und der Zustandsinformation des Fahrgastraums nur das Heizen des Fahrgastraums ist;
wenn ja, wird Schritt S4 ausgeführt;
wenn nein, wird wiederholt beurteilt, ob der Wärmeverwaltungsbedarf des Fahrzeugs nur das Heizen des Fahrgastraums ist;
S4: Beurteilen, ob eine Umgebungstemperatur kleiner als ein vorgegebener erster Temperaturschwellenwert ist;
wenn ja, wird beurteilt, ob eine Kerntemperatur der Batterie (21) größer als oder gleich einem vorgegebenen zweiten Temperaturschwellenwert ist und ob eine Wassertemperatur der Elektroantriebseinheit (31) kleiner als ein vorgegebener dritter Temperaturschwellenwert ist;
wenn die Kerntemperatur der Batterie (21) größer als oder gleich dem vorgegebenen zweiten Temperaturschwellenwert ist und die Wassertemperatur der Elektroantriebseinheit (31) kleiner als der vorgegebene dritte Temperaturschwellenwert ist, geht das Fahrzeugwärmeverwaltungssystem in einen ersten Modus über; wobei
im ersten Modus der thermoelektrische Wärmetauscher (5) nicht bestromt wird, eine Batterie-Kreislauf-Wasserpumpe des Batteriewärmeverwaltungskreises (2) betrieben wird, ein Batterie-Kühlmittel-Hauptströmungsweg (8) des Batteriewärmeverwaltungskreises (2) mit einem Batterie-Strömungsweg (9) in Fluidverbindung steht, eine Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; ein Verdichter-Strömungsweg (121), ein Innenraumkondensator-Strömungsweg (141), ein Funktionsventil-Strömungsweg (191) und der Batteriekühler-Strömungsweg (412) des Kühl-/Heizkreislaufs der Klimaanlage (1) in Fluidverbindung stehen, so dass ein Kreislauf gebildet wird;
wenn eine Kerntemperatur der Batterie (21) kleiner als ein vorgegebener zweiter Temperaturschwellenwert ist oder die Wassertemperatur der Elektroantriebseinheit (31) größer als oder gleich einem vorgegebenen dritten Temperaturschwellenwert ist, wird beurteilt, ob die Wassertemperatur der Elektroantriebseinheit (31) größer als oder gleich der Umgebungstemperatur ist;
wenn die Wassertemperatur der Elektroantriebseinheit (31) größer als oder gleich der Umgebungstemperatur ist, geht das Fahrzeugwärmeverwaltungssystem in einen zweiten Modus über; wobei
im zweiten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist und eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und ein Batterie-Bypass (22) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein Kreislauf gebildet wird;
wenn die Wassertemperatur der Elektroantriebseinheit (31) kleiner als die Umgebungstemperatur ist, geht das Fahrzeugwärmeverwaltungssystem in einen dritten Modus über; wobei
im dritten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Bypass (22) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein Kreislauf gebildet wird.

8. Fahrzeugwärmeverwaltungsverfahren nach Anspruch 7, wobei während der Elektroantriebs-Kühlmittel-Hauptströmungsweg (6) einen thermoelektrischen Wärmeaustausch-Strömungsweg (61) und einen Elektroantriebs-Strömungsweg (62) umfasst, die nacheinander in Reihe verbunden sind und der Elektroantriebswärmeverwaltungskreis (3) weiter einen thermoelektrischen Wärmeaustausch-Bypass (37) umfasst, wobei im ersten Modus die Elektroantriebs-Strömungsweg-Schaltkomponente (34) den Elektroantriebs-Strömungsweg (62), den thermoelektrischen Wärmeaustausch-Bypass (37) mit dem Wärmeabfuhr-Bypass (33) in Fluidverbindung bringt, so dass ein Kreislauf gebildet wird; und
wenn die Elektroantriebs-Strömungsweg-Schaltkomponente (34) ein Vierwegeventil ist und eine erste Öffnung des Vierwegeventils mit einem Ende des Wärmeabfuhr-Hauptströmungswegs (7) verbunden ist, eine zweite Öffnung mit dem anderen Ende des thermoelektrischen Wärmeaustausch-Strömungswegs (61) verbunden ist, eine dritte Öffnung mit dem anderen Ende des thermoelektrischen Wärmeaustausch-Bypasses (37) verbunden ist und eine vierte Öffnung mit einem Ende des Wärmeabfuhr-Bypasses (33) verbunden ist, wobei die dritte Öffnung und die vierte Öffnung des Vierwegeventils in Fluidverbindung stehen.

9. Fahrzeugwärmeverwaltungsverfahren nach Anspruch 7 oder 8, wobei in dem Schritt S4,
wenn die Umgebungstemperatur größer als oder gleich dem vorgegebenen ersten Temperaturschwellenwert ist, geht das Fahrzeugwärmeverwaltungssystem in einen vierten Modus über und es wird beurteilt, ob eine Auslasswassertemperatur des Batteriekühlers (4) kleiner als eine Summe aus einer Temperatur von Kältemittel am anderen Ende des Außenwärmetauschers (11) des Kühl-/Heizkreislaufs der Klimaanlage (1) und einem vorgegebenen ersten Temperaturdifferenzschwellenwert ist;
wenn ja, werden Öffnungsgrade eines ersten Regulierventils (111) und eines zweiten Regulierventils (16) des Fahrzeugwärmeverwaltungssystems auf eine Proportionalgrenze geregelt und es wird beurteilt, ob eine Auslasswassertemperatur der Elektroantriebseinheit (31) des Fahrzeugs größer als oder gleich der Umgebungstemperatur ist;
wenn die Auslasswassertemperatur der Elektroantriebseinheit (31) des Fahrzeugs größer als oder gleich der Umgebungstemperatur ist, geht das Fahrzeugwärmeverwaltungssystem in einen fünften Modus über;
wenn die Temperatur der Elektroantriebseinheit (31) des Fahrzeugs kleiner als die Umgebungstemperatur ist, geht das Fahrzeugwärmeverwaltungssystem in einen sechsten Modus über; wobei
im vierten Modus der thermoelektrische Wärmetauscher (5) nicht bestromt wird, die Batterie-Kreislauf-Wasserpumpe des Batteriewärmeverwaltungskreises (2) betrieben wird, der Batterie-Kühlmittel-Hauptströmungsweg (8) und der Batterie-Bypass (22) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird, die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141) und der Außenwärmetauscher-Strömungsweg (411) und ein Heiz-Strömungsweg (181) des Kühl-/Heizkreislaufs der Klimaanlage (1) in Fluidverbindung stehen, so dass ein zweiter Kreislauf gebildet wird;
im fünften Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises betrieben wird, der Batterie-Kühlmittel-Hauptströmungsweg (8) und der Batterie-Bypass (22) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141), der Außenwärmetauscher-Strömungsweg (411) und der Heiz-Strömungsweg (181) des Kühl-/Heizkreislaufs der Klimaanlage (1) in Fluidverbindung stehen, so dass ein zweiter Kreislauf gebildet wird;
im sechsten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist und eine Seite des thermoelektrischen Wärmetauschers (5), die im Elektroantriebswärmeverwaltungskreis angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Bypass (22) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141), der Außenwärmetauscher-Strömungsweg (411) und der Heiz-Strömungsweg (181) des Kühl-/Heizkreislaufs der Klimaanlage (1) in Fluidverbindung stehen, so dass ein zweiter Kreislauf gebildet wird.

10. Fahrzeugwärmeverwaltungsverfahren nach einem der Ansprüche 7 bis 9, wobei in dem Schritt S2, wenn sich das Fahrzeug derzeit im Fahrzustand befindet, das Wärmeverwaltungsverfahren weiter umfasst:
Erfassen einer Zustandsinformation der Batterie (21) und einer Zustandsinformation des Fahrgastraums im Fahrzeugwärmeverwaltungssystem und Beurteilen, ob der Wärmeverwaltungsbedarf des Fahrzeugs entsprechend der Zustandsinformation der Batterie (21) und der Zustandsinformation des Fahrgastraums nur das Heizen der Batterie (21) ist;
wenn ja, wird beurteilt, ob die Wassertemperatur der Elektroantriebseinheit (31) größer als oder gleich einem vorgegebenen vierten Temperaturschwellenwert ist;
wenn nein, wird wiederholt beurteilt, ob der Wärmeverwaltungsbedarf des Fahrzeugs nur das Heizen der Batterie (21) ist;
wenn die Wassertemperatur der Elektroantriebseinheit (31) größer als oder gleich dem vorgegebenen vierten Temperaturschwellenwert ist, geht das Fahrzeugwärmeverwaltungssystem in einen siebten Modus über; wobei
im siebten Modus der thermoelektrische Wärmetauscher (5) nicht bestromt wird, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird, die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; und der Kühl-/Heizkreislauf der Klimaanlage (1) nicht betrieben wird;
wenn die Wassertemperatur der Elektroantriebseinheit (31) kleiner als der vorgegebene vierte Temperaturschwellenwert ist, wird beurteilt, ob die Wassertemperatur der Elektroantriebseinheit (31) größer als oder gleich der Umgebungstemperatur ist;
wenn die Wassertemperatur der Elektroantriebseinheit (31) größer als oder gleich der Umgebungstemperatur ist, geht das Fahrzeugwärmeverwaltungssystem in einen achten Modus über; wobei
im achten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird, die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; und der Kühl-/Heizkreislauf der Klimaanlage (1) nicht betrieben wird;
wenn die Temperatur der Elektroantriebseinheit (31) kleiner als die Umgebungstemperatur ist, geht das Fahrzeugwärmeverwaltungssystem in einen neunten Modus über; wobei
im neunten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird, die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; und der Kühl-/Heizkreislauf der Klimaanlage (1) nicht betrieben wird.

11. Fahrzeugwärmeverwaltungsverfahren nach einem der Ansprüche 7 bis 10, wobei in dem Schritt S2, wenn sich das Fahrzeug derzeit im Fahrzustand befindet, das Wärmeverwaltungsverfahren weiter umfasst:
Erfassen einer Zustandsinformation der Batterie (21) und einer Zustandsinformation des Fahrgastraums im Fahrzeugwärmeverwaltungssystem und Beurteilen, ob der Wärmeverwaltungsbedarf des Fahrzeugs entsprechend der Zustandsinformation der Batterie (21) und der Zustandsinformation des Fahrgastraums das Heizen der Batterie (21) und das Heizen des Fahrgastraums ist;
wenn der Wärmeverwaltungsbedarf des Fahrzeugs das Heizen der Batterie (21) und das Heizen des Fahrgastraums ist, wird beurteilt, ob ein Ziel des Heizens des Fahrgastraums erfüllt ist;
wenn der Wärmeverwaltungsbedarf des Fahrzeugs nicht das Heizen der Batterie (21) und das Heizen des Fahrgastraums ist, wird wiederholt beurteilt, ob der Wärmeverwaltungsbedarf des Fahrzeugs das Heizen der Batterie (21) und das Heizen des Fahrgastraums ist;
wenn das Ziel des Heizens des Fahrgastraums erfüllt ist, wird beurteilt, ob eine Rotationsgeschwindigkeit eines Verdichters (12) des Fahrzeugwärmeverwaltungssystems kleiner als ein vorgegebener Rotationsgeschwindigkeitsschwellenwert ist;
wenn das Ziel des Heizens des Fahrgastraums nicht erfüllt ist, wird beurteilt, ob der Wärmeverwaltungsbedarf des Fahrzeugs das Heizen der Batterie (21) und das Heizen des Fahrgastraums ist;
wenn die Rotationsgeschwindigkeit des Verdichters (12) kleiner als der vorgegebene Rotationsgeschwindigkeitsschwellenwert ist, wird beurteilt, ob die Wassertemperatur der Elektroantriebseinheit (31) größer als oder gleich der Umgebungstemperatur ist;
wenn die Rotationsgeschwindigkeit des Verdichters (12) größer als oder gleich dem vorgegebenen Rotationsgeschwindigkeitsschwellenwert ist, wird wiederholt beurteilt, ob das Ziel des Heizens des Fahrgastraums erfüllt ist;
wenn die Rotationsgeschwindigkeit des Verdichters (12) kleiner als der vorgegebene Rotationsgeschwindigkeitsschwellenwert ist, wird beurteilt, ob die Wassertemperatur der Elektroantriebseinheit (31) größer als oder gleich der Umgebungstemperatur ist;
wenn die Wassertemperatur der Elektroantriebseinheit (31) größer als oder gleich der Umgebungstemperatur ist, geht das Fahrzeugwärmeverwaltungssystem in einen zehnten Modus über; wobei
im zehnten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Bypass (33) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141), der Außenwärmetauscher-Strömungsweg (411) und der Heiz-Strömungsweg (181) des Kühl-/Heizkreislaufs der Klimaanlage (1) in Fluidverbindung stehen, so dass ein zweiter Kreislauf gebildet wird;
wenn die Wassertemperatur der Elektroantriebseinheit (31) kleiner als die Umgebungstemperatur ist, geht das Fahrzeugwärmeverwaltungssystem in einen elften Modus über; wobei
im elften Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises betrieben wird, der Batterie-Kühlmittel-Hauptströmungsweg (8) des Batteriewärmeverwaltungskreises (2) mit dem Batterie-Strömungsweg (9) in Fluidverbindung steht, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141), der Außenwärmetauscher-Strömungsweg (411) und der Heiz-Strömungsweg (181) des Kühl-/Heizkreislaufs der Klimaanlage (1) in Fluidverbindung stehen, so dass ein zweiter Kreislauf gebildet wird.

12. Fahrzeugwärmeverwaltungsverfahren nach einem der Ansprüche 7 bis 11, wobei in dem Schritt S1, wenn das Fahrzeug gestartet wird, das Wärmeverwaltungsverfahren weiter umfasst:
Erfassen einer Zustandsinformation des Fahrzeugs von einem Leistungsverwaltungsmodul des Fahrzeugs und Beurteilen, ob sich das Fahrzeug derzeit entsprechend der Zustandsinformation des Fahrzeugs in einem Ladezustand befindet;
wenn sich das Fahrzeug derzeit im Ladezustand befindet, wird beurteilt, ob der Wärmeverwaltungsbedarf des Fahrzeugs nur das Heizen des Fahrgastraums ist;
wenn der Wärmeverwaltungsbedarf des Fahrzeugs nur das Heizen des Fahrgastraums ist, wird beurteilt, ob die Umgebungstemperatur kleiner als ein vorgegebener fünfter Temperaturschwellenwert ist;
wenn die Umgebungstemperatur kleiner als der vorgegebene fünfte Temperaturschwellenwert ist, geht das Fahrzeugwärmeverwaltungssystem in den dritten Modus über;
wenn die Umgebungstemperatur größer als oder gleich dem vorgegebenen fünften Temperaturschwellenwert ist, geht das Fahrzeugwärmeverwaltungssystem in einen sechsten Modus über;
wenn der Wärmeverwaltungsbedarf des Fahrzeugs beurteilt wird, nicht nur das Heizen des Fahrgastraums zu sein, wird beurteilt, ob der Wärmeverwaltungsbedarf des Fahrzeugs nur das Heizen der Batterie (21) ist;
wenn es nur das Heizen der Batterie (21) ist, geht das Fahrzeugwärmeverwaltungssystem in einen zwölften Modus über; wobei
im zwölften Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Kühl-/Heizkreislauf der Klimaanlage (1) nicht betrieben wird;
wenn beurteilt wird, dass es nicht nur das Heizen der Batterie (21) ist, wird beurteilt, ob der Wärmeverwaltungsbedarf des Fahrzeugs das Heizen der Batterie (21) und das Heizen des Fahrgastraums ist;
wenn der Wärmeverwaltungsbedarf des Fahrzeugs das Heizen der Batterie (21) und das Heizen des Fahrgastraums ist, geht das Fahrzeugwärmeverwaltungssystem in einen dreizehnten Modus über; wobei
im dreizehnten Modus der thermoelektrische Wärmetauscher (5) bestromt wird und eine Seite des thermoelektrischen Wärmetauschers (5), die im Batteriewärmeverwaltungskreis (2) angeordnet ist, eine Heizseite ist, eine Seite des thermoelektrischen Wärmetauschers (5), die im Elektroantriebswärmeverwaltungskreis (3) angeordnet ist, eine Kälteseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Innenraumkondensator-Strömungsweg (141), der Funktionsventil-Strömungsweg (191) und der Batteriekühler-Strömungsweg (412) des Kühl-/Heizkreislaufs der Klimaanlage (1) in Fluidverbindung stehen, so dass ein Kreislauf gebildet wird.

13. Fahrzeugwärmeverwaltungsverfahren nach Anspruch 12, wobei in dem Schritt S1, wenn das Fahrzeug gestartet wird, das Wärmeverwaltungsverfahren weiter umfasst:
Erfassen einer Zustandsinformation der Batterie (21) im Fahrzeugwärmeverwaltungssystem und Beurteilen, ob die Batterie (21) entsprechend der Zustandsinformation der Batterie (21) einen Kühlbedarf aufweist;
wenn die Batterie (21) den Kühlbedarf aufweist, wird beurteilt, ob die Umgebungstemperatur größer als ein vorgegebener sechster Temperaturschwellenwert ist;
wenn die Umgebungstemperatur größer als der vorgegebene sechste Temperaturschwellenwert ist, wird beurteilt, ob der Fahrgastraum gleichzeitig einen Kältebedarf aufweist;
wenn der Fahrgastraum gleichzeitig den Kältebedarf aufweist, wird beurteilt, ob ein Absolutwert einer Differenz zwischen einer Zieltemperatur des Fahrgastraums und einer tatsächlichen Temperatur des Fahrgastraums größer als ein vorgegebener zweiter Temperaturdifferenzschwellenwert ist;
wenn der Fahrgastraum keinen Kältebedarf aufweist, wird wiederholt beurteilt, ob der Fahrgastraum gleichzeitig den Kältebedarf aufweist;
wenn der Absolutwert der Differenz zwischen der Zieltemperatur des Fahrgastraums und der tatsächlichen Temperatur des Fahrgastraums größer als der vorgegebene zweite Temperaturdifferenzschwellenwert ist, geht das Fahrzeugwärmeverwaltungssystem in einen vierzehnten Modus über; wobei
im vierzehnten Modus der thermoelektrische Wärmetauscher (5) bestromt wird und eine Seite des thermoelektrischen Wärmetauschers (5), die im Batteriewärmeverwaltungskreis (2) angeordnet ist, eine Kälteseite ist, eine Seite des thermoelektrischen Wärmetauschers (5), die im Elektroantriebswärmeverwaltungskreis (3) angeordnet ist, eine Heizseite ist, die Batterie-Kreislauf-Wasserpumpe des Batteriewärmeverwaltungskreises (2) betrieben wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Innenraumkondensator-Strömungsweg (141), der Regulierventil-Strömungsweg (1111) und der Innenraumverdampfer-Strömungsweg des Kühl-/Heizkreislaufs der Klimaanlage (1) in Fluidverbindung stehen, so dass ein Kreislauf gebildet wird; und ein Kältemittel nicht durch einen Innenraumkondensator (14) strömt;
wenn der Absolutwert der Differenz zwischen der Zieltemperatur des Fahrgastraums und der tatsächlichen Temperatur des Fahrgastraums kleiner als oder gleich dem vorgegebenen zweiten Temperaturdifferenzschwellenwert ist, geht das Fahrzeugwärmeverwaltungssystem in einen fünfzehnten Modus über; wobei
im fünfzehnten Modus der thermoelektrische Wärmetauscher (5) nicht bestromt wird, die Batterie-Kreislauf-Wasserpumpe des Batteriewärmeverwaltungskreises (2) betrieben wird oder ausgeschaltet wird, der Batterie-Kühlmittel-Hauptströmungsweg (8) und der Batterie-Strömungsweg (9) des Batteriewärmeverwaltungskreises (2) in Fluidverbindung stehen, so dass ein Kreislauf gebildet wird; die Elektroantriebskreislauf-Wasserpumpe (35) des Elektroantriebswärmeverwaltungskreises (3) betrieben wird, die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Verdichter-Strömungsweg (121), der Bypassventil-Strömungsweg (171), der Funktionsventil-Strömungsweg (191), der Außenwärmetauscher-Strömungsweg (411) und der Batteriekühler-Strömungsweg (412) des Kühl-/Heizkreislaufs der Klimaanlage (1) in Fluidverbindung stehen, so dass ein erster Kreislauf gebildet wird; und der Verdichter-Strömungsweg (121), der Innenraumkondensator-Strömungsweg (141), der Bypassventil-Strömungsweg (171), der Funktionsventil-Strömungsweg (191), der Außenwärmetauscher (11) und der Innenraumverdampfer-Strömungsweg (152) des Kühl-/Heizkreislaufs der Klimaanlage (1) in Fluidverbindung stehen, so dass ein zweiter Kreislauf gebildet wird;
wenn die Umgebungstemperatur kleiner als oder gleich dem vorgegebenen sechsten Temperaturschwellenwert ist, wird beurteilt, ob eine Zielwassertemperatur der Batterie (21) kleiner als ein vorgegebener siebter Temperaturschwellenwert ist;
wenn die Wassertemperatur der Batterie (21) kleiner als der vorgegebene siebte Temperaturschwellenwert ist, geht das Fahrzeugwärmeverwaltungssystem in einen sechzehnten Modus über; wobei
im sechzehnten Modus der thermoelektrische Wärmetauscher (5) nicht bestromt wird, die Batterie-Kreislauf-Wasserpumpe des Batteriewärmeverwaltungskreises (2) betrieben wird, der Batteriekühler (4) des Batteriewärmeverwaltungskreises (2) nicht betrieben wird, die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; ein Betriebszustand des Kühl-/Heizkreislaufs der Klimaanlage (1) zu bestimmen ist;
wenn die Wassertemperatur der Batterie (21) größer als oder gleich dem vorgegebenen siebten Temperaturschwellenwert ist, geht das Fahrzeugwärmeverwaltungssystem in einen siebzehnten Modus über; wobei
im siebzehnten Modus der thermoelektrische Wärmetauscher (5) bestromt wird und eine Seite des thermoelektrischen Wärmetauschers (5), die im Batteriewärmeverwaltungskreis (2) angeordnet ist, eine Kälteseite ist, eine Seite des thermoelektrischen Wärmetauschers (5), die im Elektroantriebswärmeverwaltungskreis (3) angeordnet ist, eine Heizseite ist, der Batteriekühler (4) des Batteriewärmeverwaltungskreises (2) nicht betrieben wird, die Elektroantriebskreislauf-Wasserpumpe (35) des Elektroantriebswärmeverwaltungskreises (3) betrieben wird und die Elektroantriebs-Strömungsweg-Schaltkomponente (34) den Elektroantriebs-Kühlmittel-Hauptströmungsweg (6) mit dem Wärmeabfuhr-Hauptströmungsweg (7) in Fluidverbindung bringt, so dass ein Kreislauf gebildet wird; der Betriebszustand des Kühl-/Heizkreislaufs der Klimaanlage (1) zu bestimmen ist.

14. Fahrzeugwärmeverwaltungsverfahren nach Anspruch 13, wobei während der Elektroantriebs-Kühlmittel-Hauptströmungsweg (6) einen thermoelektrischen Wärmeaustausch-Strömungsweg (61) und einen Elektroantriebs-Strömungsweg (62) umfasst, die nacheinander in Reihe verbunden sind, und der Elektroantriebswärmeverwaltungskreis (3) weiter einen thermoelektrischen Wärmeaustausch-Bypass (37) umfasst, wobei im fünfzehnten Modus die Elektroantriebs-Strömungsweg-Schaltkomponente (34) den Elektroantriebs-Strömungsweg (62), den thermoelektrischen Wärmeaustausch-Bypass (37) mit dem Wärmeabfuhr-Hauptströmungsweg (7) in Fluidverbindung bringt, so dass ein Kreislauf gebildet wird; und
wenn die Elektroantriebs-Strömungsweg-Schaltkomponente (34) ein Vierwegeventil ist und eine erste Öffnung des Vierwegeventils mit einem Ende des Wärmeabfuhr-Hauptströmungswegs (7) verbunden ist, eine zweite Öffnung mit dem anderen Ende des thermoelektrischen Wärmeaustausch-Strömungswegs (61) verbunden ist, eine dritte Öffnung mit dem anderen Ende eines thermoelektrischen Wärmeaustausch-Bypasses (37) verbunden ist und eine vierte Öffnung mit einem Ende des Wärmeabfuhr-Bypasses (33) verbunden ist, wobei die erste Öffnung und die dritte Öffnung des Vierwegeventils in Fluidverbindung stehen.

15. Fahrzeugwärmeverwaltungsverfahren nach Anspruch 13, wobei, wenn die Batterie-Strömungsweg-Schaltkomponente ein Dreiwegeventil ist, die Elektroantriebs-Strömungsweg-Schaltkomponente (34) ein Vierwegeventil ist, und der Kühl-/Heizkreislauf der Klimaanlage (1) weiter ein erstes Regulierventil (111), ein zweites Regulierventil (16), ein drittes Regulierventil (151), ein Bypassventil (17), ein Heizventil (18) und ein Funktionsventil (19) umfasst,
im ersten Modus eine erste Öffnung und eine dritte Öffnung der Batterie-Strömungsweg-Schaltkomponente in Fluidverbindung stehen, eine dritte Öffnung und eine vierte Öffnung der Elektroantriebs-Strömungsweg-Schaltkomponente (34) in Fluidverbindung stehen, das erste Regulierventil (111) geschlossen ist, das zweite Regulierventil (16) zum Drosseln halb geöffnet ist, das dritte Regulierventil (151) geschlossen ist, das Bypassventil (17) geschlossen ist, das Heizventil (18) geschlossen ist und das Funktionsventil (19) geöffnet ist;
im zweiten Modus die erste Öffnung und eine zweite Öffnung der Batterie-Strömungsweg-Schaltkomponente in Fluidverbindung stehen und eine zweite Öffnung und die vierte Öffnung der Elektroantriebs-Strömungsweg-Schaltkomponente (34) in Fluidverbindung stehen; das erste Regulierventil (111) geschlossen ist, das zweite Regulierventil (16) zum Drosseln halb geöffnet ist, das dritte Regulierventil (151) geschlossen ist, das Bypassventil (17) geschlossen ist, das Heizventil (18) geschlossen ist und das Funktionsventil (19) geöffnet ist;
im dritten Modus die erste Öffnung und die zweite Öffnung der Batterie-Strömungsweg-Schaltkomponente in Fluidverbindung stehen und eine erste Öffnung und die zweite Öffnung der Elektroantriebs-Strömungsweg-Schaltkomponente (34) in Fluidverbindung stehen; das erste Regulierventil (111) geschlossen ist, das zweite Regulierventil (16) zum Drosseln halb geöffnet ist, das dritte Regulierventil (151) geschlossen ist, das Bypassventil (17) geschlossen ist, das Heizventil (18) geschlossen ist und das Funktionsventil (19) geöffnet ist;
im vierten Modus die erste Öffnung und die zweite Öffnung der Batterie-Strömungsweg-Schaltkomponente in Fluidverbindung stehen, die zweite Öffnung und die vierte Öffnung der Elektroantriebs-Strömungsweg-Schaltkomponente (34) in Fluidverbindung stehen, das erste Regulierventil (111) zum Drosseln halb geöffnet ist, das zweite Regulierventil (16) zum Drosseln halb geöffnet ist, das dritte Regulierventil (151) geschlossen ist, das Bypassventil (17) geschlossen ist, das Heizventil (18) geöffnet ist und das Funktionsventil (19) geöffnet ist;
im fünften Modus die erste Öffnung und die zweite Öffnung der Batterie-Strömungsweg-Schaltkomponente in Fluidverbindung stehen, die zweite Öffnung und die vierte Öffnung der Elektroantriebs-Strömungsweg-Schaltkomponente (34) in Fluidverbindung stehen, das erste Regulierventil (111) zum Drosseln halb geöffnet ist, das zweite Regulierventil (16) zum Drosseln halb geöffnet ist, das dritte Regulierventil (151) geschlossen ist, das Bypassventil (17) geschlossen ist, das Heizventil (18) geöffnet ist und das Funktionsventil (19) geöffnet ist;
im sechsten Modus die erste Öffnung und die zweite Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) zum Drosseln halb geöffnet ist, das zweite Regulierventil (16) zum Drosseln halb geöffnet ist, das dritte Regulierventil (151) geschlossen ist, das Bypassventil (17) geschlossen ist, das Heizventil (18) geöffnet ist und das Funktionsventil (19) geöffnet ist;
im siebten Modus die erste Öffnung und die dritte Öffnung der Batterie-Strömungsweg-Schaltkomponente in Fluidverbindung stehen, die zweite Öffnung und die vierte Öffnung der Elektroantriebs-Strömungsweg-Schaltkomponente (34) in Fluidverbindung stehen, das erste Regulierventil (111) in einem Normalzustand ist, das zweite Regulierventil (16) in einem Normalzustand ist, das dritte Regulierventil (151) in einem Normalzustand ist, das Bypassventil (17) in einem Normalzustand ist, das Heizventil (18) in einem Normalzustand ist und das Funktionsventil in einem Normalzustand ist;
im achten Modus die erste Öffnung und die dritte Öffnung der Batterie-Strömungsweg-Schaltkomponente in Fluidverbindung stehen, die zweite Öffnung und die vierte Öffnung der Elektroantriebs-Strömungsweg-Schaltkomponente (34) in Fluidverbindung stehen, das erste Regulierventil (111) in einem Normalzustand ist, das zweite Regulierventil (16) in einem Normalzustand ist, das dritte Regulierventil (151) in einem Normalzustand ist, das Bypassventil (17) in einem Normalzustand ist, das Heizventil (18) in einem Normalzustand ist und das Funktionsventil (19) in einem Normalzustand ist;
im neunten Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) in einem Normalzustand ist, das zweite Regulierventil (16) in einem Normalzustand ist, das dritte Regulierventil (151) in einem Normalzustand ist, das Bypassventil (17) in einem Normalzustand ist, das Heizventil (18) in einem Normalzustand ist und das Funktionsventil (19) in einem Normalzustand ist;
im zehnten Modus die erste Öffnung und die dritte Öffnung der Batterie-Strömungsweg-Schaltkomponente in Fluidverbindung stehen, die zweite Öffnung und die vierte Öffnung der Elektroantriebs-Strömungsweg-Schaltkomponente (34) in Fluidverbindung stehen, das erste Regulierventil (111) zum Drosseln halb geöffnet ist, das zweite Regulierventil (16) zum Drosseln halb geöffnet ist, das dritte Regulierventil (151) geschlossen ist, das Bypassventil (17) geschlossen ist, das Heizventil (18) geöffnet ist und das Funktionsventil (19) geöffnet ist;
im elften Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) zum Drosseln halb geöffnet ist, das zweite Regulierventil (16) zum Drosseln halb geöffnet ist, das dritte Regulierventil (151) geschlossen ist, das Bypassventil (17) geschlossen ist, das Heizventil (18) geöffnet ist und das Funktionsventil (19) geöffnet ist;
im zwölften Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) in einem Normalzustand ist, das zweite Regulierventil (16) in einem Normalzustand ist, das dritte Regulierventil (151) in einem Normalzustand ist, das Bypassventil (17) in einem Normalzustand ist, das Heizventil (18) in einem Normalzustand ist und das Funktionsventil (19) in einem Normalzustand ist;
im dreizehnten Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) geschlossen ist, das zweite Regulierventil (16) zum Drosseln halb geöffnet ist, das dritte Regulierventil (151) geschlossen ist, das Bypassventil (17) geschlossen ist, das Heizventil (18) geschlossen ist und das Funktionsventil (19) geöffnet ist;
im vierzehnten Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) geöffnet ist, das zweite Regulierventil (16) geschlossen ist oder zum Drosseln halb geöffnet ist, das dritte Regulierventil (151) geöffnet ist, das Bypassventil (17) geöffnet ist, das Heizventil (18) geschlossen ist und das Funktionsventil (19) geschlossen ist;
im fünfzehnten Modus die erste Öffnung und die dritte Öffnung der Batterie-Strömungsweg-Schaltkomponente in Fluidverbindung stehen, die erste Öffnung und die dritte Öffnung der Elektroantriebs-Strömungsweg-Schaltkomponente (34) in Fluidverbindung stehen, das erste Regulierventil (111) geöffnet ist, das zweite Regulierventil (16) geschlossen ist oder zum Drosseln halb geöffnet ist, das dritte Regulierventil (151) geöffnet ist oder geschlossen ist, das Bypassventil (17) geöffnet ist, das Heizventil (18) geschlossen ist und das Funktionsventil (19) geschlossen ist;
im sechzehnten Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) zu bestimmen ist, das zweite Regulierventil (16) zu bestimmen ist, das dritte Regulierventil (151) zu bestimmen ist, das Bypassventil (17) zu bestimmen ist, das Heizventil (18) zu bestimmen ist und das Funktionsventil (19) zu bestimmen ist;
im siebzehnten Modus die erste Öffnung und die dritte Öffnung der Batterie-Strömungsweg-Schaltkomponente in Fluidverbindung stehen, die erste Öffnung und die zweite Öffnung der Elektroantriebs-Strömungsweg-Schaltkomponente (34) in Fluidverbindung stehen, das erste Regulierventil (111) zu bestimmen ist, das zweite Regulierventil (16) zu bestimmen ist, das dritte Regulierventil (151) zu bestimmen ist, das Bypassventil (17) zu bestimmen ist, das Heizventil (18) zu bestimmen ist und das Funktionsventil (19) zu bestimmen ist.

16. Fahrzeugwärmeverwaltungsverfahren nach einem der Ansprüche 13 bis 15, wobei
ein Bereich des vorgegebenen ersten Temperaturschwellenwerts -13 °C bis -17 °C ist;
ein Bereich des vorgegebenen zweiten Temperaturschwellenwerts 15 °C bis 25 °C ist;
ein Bereich des vorgegebenen dritten Temperaturschwellenwerts 0 °C bis 10 °C ist;
ein Bereich des vorgegebenen vierten Temperaturschwellenwerts 15 °C bis 25 °C ist;
ein Bereich des vorgegebenen fünften Temperaturschwellenwerts -13 °C bis -17°C ist;
ein Bereich des vorgegebenen sechsten Temperaturschwellenwerts 18 °C bis 22 °C ist;
ein Bereich des vorgegebenen siebten Temperaturschwellenwerts 12 °C bis 20 °C ist;
ein Bereich des vorgegebenen ersten Temperaturdifferenzschwellenwerts 0 °C bis 5 °C ist;
ein Bereich des vorgegebenen zweiten Temperaturdifferenzschwellenwerts 0 °C bis 5 °C ist.

## Revendications

1. Système de gestion thermique de véhicule, comprenant une boucle de réfrigération et de chauffage de climatiseur (1), une boucle de gestion thermique de batterie (2) et une boucle de gestion thermique d'entraînement électrique (3), un refroidisseur de batterie (4) est agencé entre la boucle de réfrigération et de chauffage de climatiseur (1) et la boucle de gestion thermique de batterie (2), une batterie (21) est agencée dans la boucle de gestion thermique de batterie (2), la boucle de gestion thermique d'entraînement électrique (3) comprend un trajet principal de liquide de refroidissement d'entraînement électrique (6) et un trajet principal de dissipation de chaleur (7) qui sont raccordés séquentiellement en série, un ensemble d'entraînement électrique (31) est agencé dans le trajet principal de liquide de refroidissement d'entraînement électrique (6), et un radiateur est agencé dans le trajet principal de dissipation de chaleur (7),
dans lequel la boucle de gestion thermique d'entraînement électrique (3) comprend en outre une dérivation de dissipation de chaleur (33) et un composant de commutation de trajet d'écoulement d'entraînement électrique (34), la dérivation de dissipation de chaleur (33) est raccordée en parallèle au trajet principal de dissipation de chaleur (7), et le composant de commutation de trajet d'écoulement d'entraînement électrique (34) est raccordé entre une extrémité du trajet principal de dissipation de chaleur (7), une extrémité de la dérivation de dissipation de chaleur (33), et une extrémité du trajet principal de liquide de refroidissement d'entraînement électrique (6) ; dans lequel, une boucle est formée après que le trajet principal de liquide de refroidissement d'entraînement électrique (6) communique sélectivement avec le trajet principal de dissipation de chaleur (7) ou la dérivation de dissipation de chaleur (33) par le composant de commutation de trajet d'écoulement d'entraînement électrique (34) **caractérisé en ce que**
le système de gestion thermique de véhicule comprend en outre un échangeur de chaleur thermoélectrique (5), l'échangeur de chaleur thermoélectrique (5) est disposé entre la boucle de gestion thermique de batterie (2) et le trajet principal de liquide de refroidissement d'entraînement électrique (6) de la boucle de gestion thermique d'entraînement électrique (3), de sorte qu'un état de transfert de chaleur d'un liquide de refroidissement entre la boucle de gestion thermique de batterie (2) et la boucle de gestion thermique d'entraînement électrique (3) soit régulé par l'échangeur de chaleur thermoélectrique (5) ;
dans lequel le trajet principal de liquide de refroidissement d'entraînement électrique (6) comprend un trajet d'écoulement d'échange de chaleur thermoélectrique (61) et un trajet d'écoulement d'entraînement électrique (62) qui sont raccordés séquentiellement en série, l'échangeur de chaleur thermoélectrique (5) est disposé dans le trajet d'écoulement d'échange de chaleur thermoélectrique (61), l'ensemble d'entraînement électrique (31) est disposé dans le trajet d'écoulement d'entraînement électrique (62), l'autre extrémité du trajet d'écoulement d'échange de chaleur thermoélectrique (61) est l'extrémité du trajet principal de liquide de refroidissement d'entraînement électrique (6), et est raccordée au composant de commutation de trajet d'écoulement d'entraînement électrique (34), et une extrémité du trajet d'écoulement d'entraînement électrique (62) est l'autre extrémité du trajet principal de liquide de refroidissement d'entraînement électrique (6), et est raccordée à l'autre extrémité de la boucle principale de dissipation de chaleur et à l'autre extrémité de la dérivation de dissipation de chaleur (33) ;
la boucle de gestion thermique d'entraînement électrique (3) comprend en outre une dérivation d'échange de chaleur thermoélectrique (37), une extrémité de la dérivation d'échange de chaleur thermoélectrique (37) est raccordée à une extrémité du trajet d'écoulement d'échange de chaleur thermoélectrique (61), et l'autre extrémité de la dérivation d'échange de chaleur thermoélectrique (37) est raccordée au composant de commutation de trajet d'écoulement d'entraînement électrique (34), de sorte que la dérivation d'échange de chaleur thermoélectrique (37) et le trajet d'écoulement d'échange de chaleur thermoélectrique (61) soient disposés en parallèle ;
dans lequel, le composant de commutation de trajet d'écoulement d'entraînement électrique (34) met sélectivement le trajet principal de dissipation de chaleur (7) ou la dérivation de dissipation de chaleur (33) en communication avec le trajet d'écoulement d'échange de chaleur thermoélectrique (61) ou la dérivation d'échange de chaleur thermoélectrique (37) et ensuite en communication avec le trajet d'écoulement d'entraînement électrique (62), pour former une boucle, et
dans lequel le composant de commutation de trajet d'écoulement d'entraînement électrique (34) est une soupape à quatre voies qui présente un premier orifice, un deuxième orifice, un troisième orifice et un quatrième orifice ; le premier orifice est raccordé à une extrémité du trajet principal de dissipation de chaleur (7), le deuxième orifice est raccordé à l'autre extrémité du trajet d'échange de chaleur thermoélectrique (61), le troisième orifice est raccordé à l'autre extrémité de la dérivation d'échange de chaleur thermoélectrique (37), et le quatrième orifice est raccordé à une extrémité de la dérivation de dissipation de chaleur (33) ;
une pompe à eau de boucle d'entraînement électrique (35) est en outre agencée dans le trajet d'écoulement d'entraînement électrique (62), et la pompe à eau de boucle d'entraînement électrique (35) est disposée entre l'échangeur de chaleur thermoélectrique (5) et l'ensemble d'entraînement électrique (31).

2. Système de gestion thermique de véhicule selon la revendication 1, dans lequel l'échangeur de chaleur thermoélectrique (5) comprend une unité d'échange de chaleur thermoélectrique (50), l'unité d'échange de chaleur thermoélectrique (50) comprend un module de refroidissement par liquide de batterie (51), un module thermoélectrique (51), et un module de refroidissement par liquide d'entraînement électrique (55), qui sont empilés séquentiellement le long d'une direction d'épaisseur de l'échangeur de chaleur thermoélectrique (5), un côté du module thermoélectrique est en contact avec le module de refroidissement par liquide de batterie (51), l'autre côté du module thermoélectrique est en contact avec le module de refroidissement par liquide d'entraînement électrique (55), le module de refroidissement par liquide de batterie (51) est disposé dans la boucle de gestion thermique de batterie (2), et est disposé en série avec la batterie (21), et le module de refroidissement par liquide d'entraînement électrique (55) est disposé dans le trajet principal de liquide de refroidissement d'entraînement électrique (6), et est disposé en série avec l'ensemble d'entraînement électrique (31).

3. Système de gestion thermique de véhicule selon la revendication 2, dans lequel le module thermoélectrique comprend une première couche thermiquement conductrice (52), une couche semi-conductrice (53), et une seconde couche thermiquement conductrice (54), qui sont empilées séquentiellement le long d'une direction d'épaisseur de l'unité d'échange de chaleur thermoélectrique (50) ; un côté de la première couche thermiquement conductrice (52) est en contact avec le module de refroidissement par liquide de batterie (51), l'autre côté de la première couche thermiquement conductrice (52) est en contact avec un côté de la couche semi-conductrice (53), l'autre côté de la couche semi-conductrice (53) est en contact avec un côté de la seconde couche thermiquement conductrice (54), l'autre côté de la seconde couche thermiquement conductrice (54) est en contact avec le module de refroidissement par liquide d'entraînement électrique (55), et la couche semi-conductrice (53) comprend une pluralité de semi-conducteurs (531) agencés en une matrice.

4. Système de gestion thermique de véhicule selon l'une quelconque des revendications 1 à 3, dans lequel la boucle de gestion thermique de batterie (2) comprend un trajet principal de liquide de refroidissement de batterie (8) et un trajet d'écoulement de batterie (9) qui sont raccordés séquentiellement en série, l'échangeur de chaleur thermoélectrique (5) et le refroidisseur de batterie (4) sont à la fois disposés dans le trajet principal de liquide de refroidissement de batterie (8), et la batterie (21) est disposée dans le trajet d'écoulement de batterie (9) ; et
la boucle de gestion thermique de batterie (2) comprend en outre une dérivation de batterie (22) et un composant de commutation de trajet d'écoulement de batterie ; la dérivation de batterie (22) et le trajet principal de liquide de refroidissement de batterie (8) sont raccordés en parallèle, et le composant de commutation de trajet d'écoulement de batterie est raccordé entre l'autre extrémité du trajet principal de liquide de refroidissement de batterie (8), une extrémité de la dérivation de batterie (22), et une extrémité du trajet d'écoulement de batterie (9) ; et
la dérivation de dissipation de chaleur (33) et la dérivation de batterie (22) sont toutes deux des dérivations courtes ;
une pompe à eau de boucle de batterie est en outre agencée dans le trajet principal de liquide de refroidissement de batterie (8), et la pompe à eau de boucle de batterie est disposée entre l'échangeur de chaleur thermoélectrique (5) et le composant de commutation de trajet d'écoulement de batterie.

5. Système de gestion thermique de véhicule selon la revendication 4, dans lequel le composant de commutation de trajet d'écoulement de batterie est une soupape à trois voies qui présente un premier orifice, un deuxième orifice et un troisième orifice, le premier orifice est raccordé à l'autre extrémité du trajet principal de liquide de refroidissement de batterie (8), le deuxième orifice est raccordé à une extrémité de la dérivation de batterie (22), et le troisième orifice est raccordé à une extrémité du trajet d'écoulement de batterie (9).

6. Système de gestion thermique de véhicule selon l'une quelconque des revendications 1 à 5, dans lequel la boucle de réfrigération et de chauffage de climatiseur (1) comprend un trajet d'écoulement de compresseur (121), un trajet d'écoulement de condenseur embarqué (141), un trajet d'écoulement de chauffage (181), un trajet principal de réfrigérant (41), un trajet d'écoulement de soupape de dérivation (171), un trajet d'écoulement de soupape de fonction (191), un trajet d'écoulement de soupape de régulation (1111), et un trajet d'écoulement d'évaporateur embarqué (152) ; le trajet d'écoulement de compresseur (121) est raccordé en série avec le trajet d'écoulement de condenseur embarqué (141), le trajet d'écoulement de chauffage (181) est raccordé en série avec le trajet d'écoulement de compresseur (121), le trajet principal de réfrigérant (41) est raccordé en parallèle avec le trajet d'écoulement d'évaporateur embarqué (152) et le trajet d'écoulement de chauffage (181), et le trajet principal de réfrigérant (41) comprend un trajet d'écoulement d'échangeur de chaleur extérieur (411) et un trajet d'écoulement de refroidisseur de batterie (412) qui sont raccordés en série ; et
la boucle de réfrigération et de chauffage de climatisation (1) comprend en outre un échangeur de chaleur extérieur (11), un compresseur (12), un séparateur gaz-liquide (13), un condenseur embarqué (14), et un évaporateur embarqué (15) ; l'échangeur de chaleur extérieur (11) est disposé dans le trajet d'écoulement d'échangeur de chaleur extérieur (411), et une extrémité du trajet d'écoulement d'échangeur de chaleur extérieur (411) communique avec l'autre extrémité du trajet d'écoulement de soupape de régulation (1111), et l'autre extrémité du trajet d'écoulement d'échangeur de chaleur extérieur (411) communique avec une extrémité du trajet d'écoulement de chauffage (181) et une extrémité du trajet d'écoulement d'évaporateur embarqué (152) ; le séparateur gaz-liquide (13) et le compresseur (12) sont disposés en série dans le trajet d'écoulement de compresseur (121) ; le condenseur embarqué (14) est raccordé à l'autre extrémité du trajet d'écoulement de compresseur (121) et à une extrémité du trajet d'écoulement de condenseur embarqué (141) ; l'évaporateur embarqué (15) est disposé dans le trajet d'écoulement d'évaporateur embarqué (152), et l'autre extrémité du trajet d'écoulement d'évaporateur embarqué (152) est raccordée à l'autre extrémité du trajet d'écoulement de chauffage (181) et à une extrémité du trajet d'écoulement de compresseur (121) ; le refroidisseur de batterie (4) est disposé dans le trajet d'écoulement de refroidisseur de batterie (412) du trajet principal de réfrigérant (41), et l'autre extrémité du trajet principal de réfrigérant (41) est raccordée à une extrémité du trajet d'écoulement de compresseur (121) ;
la boucle de réfrigération et de chauffage de climatiseur (1) comprend en outre une première soupape de régulation (111), une deuxième soupape de régulation (16), une troisième soupape de régulation (151), une soupape de dérivation (17), une soupape de chauffage (18), et une soupape de fonction (19) ; la première soupape de régulation (111), la deuxième soupape de régulation (16) et la troisième soupape de régulation (151) sont toutes utilisées pour réguler un débit du réfrigérant ; la soupape de dérivation (17), la soupape de chauffage (18), et la soupape de fonction (19) sont toutes utilisées pour réguler une direction d'écoulement du réfrigérant ; la première soupape de régulation (111) est disposée dans le trajet d'écoulement de soupape de régulation, et est située au niveau du côté d'une extrémité de l'échangeur de chaleur extérieur (11) ; la deuxième soupape de régulation (16) est disposée dans le trajet d'écoulement de refroidisseur de batterie (412) du trajet principal de réfrigérant (41), et est située au niveau du côté d'une extrémité du refroidisseur de batterie (4) ; la troisième soupape de régulation (151) est disposée dans le trajet d'écoulement d'évaporateur embarqué (152), et est située au niveau du côté d'une extrémité de l'évaporateur embarqué (15) ; la soupape de dérivation (17) est disposée dans le trajet d'écoulement de soupape de dérivation (171), la soupape de dérivation (17) est disposée en parallèle avec la première soupape de régulation (111), et une extrémité du trajet d'écoulement de soupape de dérivation (171) est raccordée à une extrémité de la première soupape de régulation (111), et l'autre extrémité est raccordée à l'autre extrémité de la première soupape de régulation (111) ; la soupape de chauffage (18) est disposée dans le trajet d'écoulement de chauffage (181), une extrémité du trajet d'écoulement de chauffage (181) est raccordée à l'échangeur de chaleur extérieur (11), et l'autre extrémité du trajet d'écoulement de chauffage (181) est raccordée à une extrémité du trajet d'écoulement de compresseur (121) ; la soupape de fonction (19) est disposée dans le trajet d'écoulement de soupape de fonction (191), une extrémité du trajet d'écoulement de soupape de fonction est raccordée à l'autre extrémité du trajet d'écoulement de condenseur embarqué (141), et l'autre extrémité du trajet d'écoulement de soupape de fonction (191) est raccordée à une extrémité du trajet d'écoulement de refroidisseur de batterie (412) du trajet principal de réfrigérant (41).

7. Procédé de gestion thermique de véhicule adapté pour le système de gestion thermique de véhicule selon l'une quelconque des revendications 1 à 6, le procédé de gestion thermique de véhicule comprend les étapes suivantes :
S1 : l'acquisition d'informations de démarrage d'un véhicule, et la détermination de si le véhicule est démarré selon les informations de démarrage du véhicule ;
si oui, l'étape S2 est réalisée ;
si non, il est déterminé de façon répétée si le véhicule est démarré ou non ;
S2 : l'acquisition d'informations d'état du véhicule à partir d'un module de gestion de puissance du véhicule, et la détermination de si le véhicule est actuellement dans un état de conduite selon les informations d'état du véhicule ;
si le véhicule est actuellement dans l'état de conduite, l'étape S3 est réalisée ;
si le véhicule n'est actuellement pas dans l'état de conduite, il est déterminé de façon répétée si le véhicule est actuellement dans l'état de conduite ou non ;
S3 : l'acquisition d'informations d'état d'une batterie (21) et d'informations d'état d'un habitacle dans le système de gestion thermique de véhicule, et la détermination de si une demande de gestion thermique du véhicule consiste uniquement à chauffer l'habitacle selon les informations d'état de la batterie (21) et les informations d'état de l'habitacle ;
si oui, l'étape S4 est réalisée ;
si non, il est déterminé de façon répétée si la demande de gestion thermique du véhicule consiste uniquement à chauffer l'habitacle ;
S4 : la détermination de si une température ambiante est inférieure à un premier seuil de température prédéterminé ;
si oui, il est déterminé si une température centrale de la batterie (21) est supérieure ou égale à un deuxième seuil de température prédéterminé, et si une température d'eau de l'ensemble d'entraînement électrique (31) est inférieure à un troisième seuil de température prédéterminé ;
si la température centrale de la batterie (21) est supérieure ou égale au deuxième seuil de température prédéterminé, et si la température d'eau de l'ensemble d'entraînement électrique (31) est inférieure au troisième seuil de température prédéterminé, le système de gestion thermique de véhicule entre dans un premier mode ; dans lequel
dans le premier mode, l'échangeur de chaleur thermoélectrique (5) n'est pas excité, une pompe à eau de boucle de batterie de la boucle de gestion thermique de la batterie (2) fonctionne, un trajet principal de liquide de refroidissement de batterie (8) de la boucle de gestion thermique de batterie (2) communique avec un trajet d'écoulement de batterie (9), une pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; un trajet d'écoulement de compresseur (121), un trajet d'écoulement de condenseur embarqué (141), un trajet d'écoulement de soupape de fonction (191) et le trajet d'écoulement de refroidisseur de batterie (412) de la boucle de réfrigération et de chauffage de climatiseur (1) sont en communication, pour former une boucle ;
si une température centrale de la batterie (21) est inférieure à un deuxième seuil de température prédéterminé, ou la température d'eau de l'ensemble d'entraînement électrique (31) est supérieure ou égale à un troisième seuil de température prédéterminé, il est déterminé si la température d'eau de l'ensemble d'entraînement électrique (31) est supérieure ou égale à la température ambiante ;
si la température d'eau de l'ensemble d'entraînement électrique (31) est supérieure ou égale à la température ambiante, le système de gestion thermique de véhicule entre dans un deuxième mode ; dans lequel
dans le deuxième mode, l'échangeur de chaleur thermoélectrique (5) est excité, et un côté de l'échangeur de chaleur thermoélectrique (5) situé dans la boucle de gestion thermique de batterie (2) est un côté de chauffage, et un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et une dérivation de batterie (22) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une boucle ;
si la température d'eau de l'ensemble d'entraînement électrique (31) est inférieure à la température ambiante, le système de gestion thermique de véhicule entre dans un troisième mode ; dans lequel
dans le troisième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et la dérivation de batterie (22) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une boucle.

8. Procédé de gestion thermique de véhicule selon la revendication 7, dans lequel alors que le trajet principal de liquide de refroidissement d'entraînement électrique (6) comprend un trajet d'écoulement d'échange de chaleur thermoélectrique (61) et un trajet d'écoulement d'entraînement électrique (62) qui sont raccordés séquentiellement en série, et la boucle de gestion thermique d'entraînement électrique (3) comprend en outre une dérivation d'échange de chaleur thermoélectrique (37), dans le premier mode, le composant de commutation de trajet d'écoulement d'entraînement électrique (34) met le trajet d'écoulement d'entraînement électrique (62), la dérivation d'échange de chaleur thermoélectrique (37) en communication avec la dérivation de dissipation de chaleur (33), pour former une boucle ; et
lorsque le composant de commutation de trajet d'écoulement d'entraînement électrique (34) est une soupape quatre voies, et un premier orifice de la soupape quatre voies est raccordé à une extrémité du trajet principal de dissipation de chaleur (7), un deuxième orifice est raccordé à l'autre extrémité du trajet d'échange de chaleur thermoélectrique (61), un troisième orifice est raccordé à l'autre extrémité de la dérivation d'échange de chaleur thermoélectrique (37), et un quatrième orifice est raccordé à une extrémité de la dérivation de dissipation de chaleur (33), le troisième orifice et le quatrième orifice de la soupape à quatre voies sont en communication.

9. Procédé de gestion thermique de véhicule selon la revendication 7 ou 8, dans lequel dans l'étape S4,
si la température ambiante est supérieure ou égale au premier seuil de température prédéterminé, le système de gestion thermique de véhicule entre dans un quatrième mode, et il est déterminé si une température d'eau de sortie du refroidisseur de batterie (4) est inférieure à une somme d'une température de réfrigérant au niveau de l'autre extrémité de l'échangeur de chaleur extérieur (11) de la boucle de réfrigération et de chauffage de climatiseur (1), et à un premier seuil de différence de température prédéterminé ;
si oui, des degrés d'ouverture d'une première soupape de régulation (111) et d'une seconde soupape de régulation (16) du système de gestion thermique de véhicule sont régulés à une limite proportionnelle, et il est déterminé si une température d'eau de sortie de l'ensemble d'entraînement électrique (31) du véhicule est supérieure ou égale à la température ambiante ;
si la température d'eau de sortie de l'ensemble d'entraînement électrique (31) du véhicule est supérieure ou égale à la température ambiante, le système de gestion thermique de véhicule entre dans un cinquième mode ;
si la température de l'ensemble d'entraînement électrique (31) du véhicule est inférieure à la température ambiante, le système de gestion thermique de véhicule entre dans un sixième mode ; dans lequel
dans le quatrième mode, l'échangeur de chaleur thermoélectrique (5) n'est pas excité, la pompe à eau de boucle de batterie de la boucle de gestion thermique de batterie (2) fonctionne, le trajet principal de liquide de refroidissement de batterie (8) et la dérivation de batterie (22) de la boucle de gestion thermique de batterie (2) sont en communication pour former une boucle ; la pompe à eau de boucle d'entraînement électrique (35) de la boucle de gestion thermique d'entraînement électrique (3) fonctionne, le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une première boucle ; et le trajet d'écoulement de compresseur (121), le trajet d'écoulement de condenseur embarqué (141), et le trajet d'écoulement d'échangeur de chaleur extérieur (411) et un trajet d'écoulement de chauffage (181) de la boucle de réfrigération et de chauffage de climatiseur (1) sont en communication, pour former une seconde boucle ;
dans le cinquième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie fonctionne, le trajet principal de liquide de refroidissement de batterie (8) et la dérivation de batterie (22) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une première boucle ; et le trajet d'écoulement de compresseur (121), le trajet d'écoulement de condenseur embarqué (141), le trajet d'écoulement d'échangeur de chaleur extérieur (411) et le trajet d'écoulement de chauffage (181) de la boucle de réfrigération et de chauffage de climatiseur (1) sont en communication, pour former une seconde boucle ;
dans le sixième mode, l'échangeur de chaleur thermoélectrique (5) est excité, et un côté de l'échangeur de chaleur thermoélectrique (5) situé dans la boucle de gestion thermique de batterie (2) est un côté de chauffage, et un côté de l'échangeur de chaleur thermoélectrique (5) situé dans la boucle de gestion thermique d'entraînement électrique est un côté de réfrigération, la pompe à eau de boucle de batterie de la boucle de gestion thermique de batterie (2) fonctionne, le trajet principal de liquide de refroidissement de batterie (8) et la dérivation de batterie (22) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une première boucle ; et le trajet d'écoulement de compresseur (121), le trajet d'écoulement de condenseur embarqué (141), le trajet d'écoulement d'échangeur de chaleur extérieur (411) et le trajet d'écoulement de chauffage (181) de la boucle de réfrigération et de chauffage de climatiseur (1) sont en communication, pour former une seconde boucle.

10. Procédé de gestion thermique de véhicule selon l'une quelconque des revendications 7 à 9, dans lequel dans l'étape S2, si le véhicule est actuellement dans l'état de conduite, le procédé de gestion thermique comprend en outre :
l'acquisition d'informations d'état de la batterie (21) et d'informations d'état de l'habitacle dans le système de gestion thermique de véhicule, et la détermination de si la demande de gestion thermique du véhicule consiste uniquement à chauffer la batterie (21) selon les informations d'état de la batterie (21) et les informations d'état de l'habitacle ;
si oui, il est déterminé si la température d'eau de l'ensemble d'entraînement électrique (31) est supérieure ou égale à un quatrième seuil de température prédéterminé ;
si non, il est déterminé de façon répétée si la demande de gestion thermique du véhicule consiste uniquement à chauffer la batterie (21) ;
si la température d'eau de l'ensemble d'entraînement électrique (31) est supérieure ou égale au quatrième seuil de température prédéterminé, le système de gestion thermique de véhicule entre dans un septième mode ; dans lequel
dans le septième mode, l'échangeur de chaleur thermoélectrique (5) n'est pas excité, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; et la boucle de réfrigération et de chauffage de climatiseur (1) ne fonctionne pas ;
si la température d'eau de l'ensemble d'entraînement électrique (31) est inférieure au quatrième seuil de température prédéterminé, il est déterminé si la température d'eau de l'ensemble d'entraînement électrique (31) est supérieure ou égale à la température ambiante ;
si la température d'eau de l'ensemble d'entraînement électrique (31) est supérieure ou égale à la température ambiante, le système de gestion thermique de véhicule entre dans un huitième mode ; dans lequel
dans le huitième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; et la boucle de réfrigération et de chauffage de climatiseur (1) ne fonctionne pas ;
si la température de l'ensemble d'entraînement électrique (31) est inférieure à la température ambiante, le système de gestion thermique de véhicule entre dans un neuvième mode ; dans lequel
dans le neuvième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; et la boucle de réfrigération et de chauffage de climatiseur (1) ne fonctionne pas.

11. Procédé de gestion thermique de véhicule selon l'une quelconque des revendications 7 à 10, dans lequel dans l'étape S2, si le véhicule est actuellement dans l'état de conduite, le procédé de gestion thermique comprend en outre :
l'acquisition d'informations d'état de la batterie (21) et d'informations d'état de l'habitacle dans le système de gestion thermique de véhicule, et la détermination de si la demande de gestion thermique du véhicule consiste à chauffer la batterie (21) et à chauffer l'habitacle selon les informations d'état de la batterie (21) et les informations d'état de l'habitacle ;
si la demande de gestion thermique du véhicule consiste à chauffer la batterie (21) et à chauffer l'habitacle, il est déterminé si une cible de chauffage de l'habitacle est satisfaite ;
si la demande de gestion thermique du véhicule ne consiste pas à chauffer la batterie (21) et à chauffer l'habitacle, il est déterminé de façon répétée si la demande de gestion thermique du véhicule consiste à chauffer la batterie (21) et à chauffer l'habitacle ;
si la cible de chauffage de l'habitacle est satisfaite, il est déterminé si une vitesse de rotation d'un compresseur (12) du système de gestion thermique de véhicule est inférieure à un seuil de vitesse de rotation prédéterminé ;
si la cible de chauffage de l'habitacle n'est pas satisfaite, il est déterminé si la demande de gestion thermique du véhicule consiste à chauffer la batterie (21) et à chauffer l'habitacle ;
si la vitesse de rotation du compresseur (12) est inférieure au seuil de vitesse de rotation prédéterminé, il est déterminé si la température d'eau de l'ensemble d'entraînement électrique (31) est supérieure ou égale à la température ambiante ;
si la vitesse de rotation du compresseur (12) est supérieure ou égale au seuil de vitesse de rotation prédéterminé, il est déterminé de façon répétée si la cible de chauffage de l'habitacle est satisfaite ;
si la vitesse de rotation du compresseur (12) est inférieure au seuil de vitesse de rotation prédéterminé, il est déterminé si la température d'eau de l'ensemble d'entraînement électrique (31) est supérieure ou égale à la température ambiante ;
si la température d'eau de l'ensemble d'entraînement électrique (31) est supérieure ou égale à la température ambiante, le système de gestion thermique de véhicule entre dans un dixième mode ; dans lequel
dans le dixième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec la dérivation de dissipation de chaleur (33), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une première boucle ; et le trajet d'écoulement de compresseur (121), le trajet d'écoulement de condenseur embarqué (141), le trajet d'écoulement d'échangeur de chaleur extérieur (411) et le trajet d'écoulement de chauffage (181) de la boucle de réfrigération et de chauffage de climatiseur (1) sont en communication, pour former une seconde boucle ;
si la température d'eau de l'ensemble d'entraînement électrique (31) est inférieure à la température ambiante, le système de gestion thermique de véhicule entre dans un onzième mode ; dans lequel
dans le onzième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie fonctionne, le trajet principal de liquide de refroidissement de batterie (8) de la boucle de gestion thermique de batterie (2) communique avec le trajet d'écoulement de batterie (9) pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une première boucle ; et le trajet d'écoulement de compresseur (121), le trajet d'écoulement de condenseur embarqué (141), le trajet d'écoulement d'échangeur de chaleur extérieur (411) et le trajet d'écoulement de chauffage (181) de la boucle de réfrigération et de chauffage de climatiseur (1) sont en communication, pour former une seconde boucle.

12. Procédé de gestion thermique de véhicule selon l'une quelconque des revendications 7 à 11, dans lequel dans l'étape S1, si le véhicule est démarré, le procédé de gestion thermique comprend en outre :
l'acquisition d'informations d'état du véhicule à partir d'un module de gestion de puissance du véhicule, et la détermination de si le véhicule est actuellement dans un état de charge selon les informations d'état du véhicule ;
si le véhicule est actuellement dans l'état de charge, il est déterminé si la demande de gestion thermique du véhicule consiste uniquement à chauffer l'habitacle ;
si la demande de gestion thermique du véhicule consiste uniquement à chauffer l'habitacle, il est déterminé si la température ambiante est inférieure à un cinquième seuil de température prédéterminé ;
si la température ambiante est inférieure au cinquième seuil de température prédéterminé, le système de gestion thermique de véhicule entre dans le troisième mode ;
si la température ambiante est supérieure ou égale au cinquième seuil de température prédéterminé, le système de gestion thermique de véhicule entre dans un sixième mode ;
s'il est déterminé que la demande de gestion thermique du véhicule ne consiste pas uniquement à chauffer l'habitacle, il est déterminé si la demande de gestion thermique du véhicule consiste uniquement à chauffer la batterie (21) ;
si elle consiste uniquement à chauffer la batterie (21), le système de gestion thermique de véhicule entre dans un douzième mode ; dans lequel
dans le douzième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; la boucle de réfrigération et de chauffage de climatiseur (1) ne fonctionne pas ;
s'il est déterminé qu'elle ne consiste pas uniquement à chauffer la batterie (21), il est déterminé si la demande de gestion thermique du véhicule consiste à chauffer la batterie (21) et à chauffer l'habitacle ;
si la demande de gestion thermique du véhicule consiste à chauffer la batterie (21) et à chauffer l'habitacle, le système de gestion thermique de véhicule entre dans un treizième mode ; dans lequel
dans le treizième mode, l'échangeur de chaleur thermoélectrique (5) est excité, et un côté de l'échangeur de chaleur thermoélectrique (5) situé dans la boucle de gestion thermique de batterie (2) est un côté de chauffage, un côté de l'échangeur de chaleur thermoélectrique (5) situé dans la boucle de gestion thermique d'entraînement électrique (3) est un côté de réfrigération, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de condenseur embarqué (141), le trajet d'écoulement de soupape de fonction (191) et le trajet d'écoulement de refroidisseur de batterie (412) de la boucle de réfrigération et de chauffage de climatiseur (1) sont en communication, pour former une boucle.

13. Procédé de gestion thermique de véhicule selon la revendication 12, dans lequel dans l'étape S1, si le véhicule est démarré, le procédé de gestion thermique comprend en outre :
l'acquisition d'informations d'état de la batterie (21) dans le système de gestion thermique de véhicule, et la détermination si la batterie (21) présente une demande de refroidissement selon les informations d'état de la batterie (21) ;
si la batterie (21) présente la demande de refroidissement, il est déterminé si la température ambiante est supérieure à un sixième seuil de température prédéterminé ;
si la température ambiante est supérieure au sixième seuil de température prédéterminé, il est déterminé si l'habitacle présente une demande de réfrigération en même temps ;
si l'habitacle présente la demande de réfrigération en même temps, il est déterminé si une valeur absolue d'une différence entre une température cible de l'habitacle et une température réelle de l'habitacle est supérieure à un deuxième seuil de différence de température prédéterminé ;
si l'habitacle ne présente pas de demande de réfrigération, il est déterminé de façon répétée si l'habitacle présente la demande de réfrigération en même temps ;
si la valeur absolue de la différence entre la température cible de l'habitacle et la température réelle de l'habitacle est supérieure au deuxième seuil de différence de température prédéterminé, le système de gestion thermique de véhicule entre dans un quatorzième mode ; dans lequel
dans le quatorzième mode, l'échangeur de chaleur thermoélectrique (5) est excité, et un côté de l'échangeur de chaleur thermoélectrique (5) situé dans la boucle de gestion thermique de batterie (2) est un côté de réfrigération, un côté de l'échangeur de chaleur thermoélectrique (5) situé dans la boucle de gestion thermique d'entraînement électrique (3) est un côté de chauffage, la pompe à eau de boucle de batterie de la boucle de gestion thermique de batterie (2) fonctionne, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de condenseur embarqué (141), le trajet d'écoulement de soupape de régulation (1111) et le trajet d'écoulement d'évaporateur intérieur de la boucle de réfrigération et de chauffage de climatiseur (1) sont en communication, pour former une boucle ; et un réfrigérant ne s'écoule pas à travers un condenseur embarqué (14) ;
si la valeur absolue de la différence entre la température cible de l'habitacle et la température réelle de l'habitacle est inférieure ou égale au deuxième seuil de différence de température prédéterminé, le système de gestion thermique de véhicule entre dans un quinzième mode ; dans lequel
dans le quinzième mode, l'échangeur de chaleur thermoélectrique (5) n'est pas excité, la pompe à eau de boucle de batterie de la boucle de gestion thermique de batterie (2) fonctionne ou s'arrête, le trajet principal de liquide de refroidissement de batterie (8) et le trajet d'écoulement de batterie (9) de la boucle de gestion thermique de batterie (2) sont en communication pour former une boucle ; la pompe à eau de boucle d'entraînement électrique (35) de la boucle de gestion thermique d'entraînement électrique (3) fonctionne, le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; le trajet d'écoulement de compresseur (121), le trajet d'écoulement de soupape de dérivation (171), le trajet d'écoulement de soupape de fonction (191), le trajet d'écoulement d'échangeur de chaleur extérieur (411), et le trajet d'écoulement de refroidisseur de batterie (412) de la boucle de réfrigération et de chauffage de climatiseur (1) sont en communication pour former une première boucle ; et le trajet d'écoulement de compresseur (121), le trajet d'écoulement de condenseur embarqué (141), le trajet d'écoulement de soupape de dérivation (171), le trajet d'écoulement de soupape de fonction (191), l'échangeur de chaleur extérieur (11) et le trajet d'écoulement d'évaporateur embarqué (152) de la boucle de réfrigération et de chauffage de climatiseur (1) sont en communication, pour former une seconde boucle ;
si la température ambiante est inférieure ou égale au sixième seuil de température prédéterminé, il est déterminé si une température d'eau cible de la batterie (21) est inférieure à un septième seuil de température prédéterminé ;
si la température d'eau de la batterie (21) est inférieure au septième seuil de température prédéterminé, le système de gestion thermique de véhicule entre dans un seizième mode ; dans lequel
dans le seizième mode, l'échangeur de chaleur thermoélectrique (5) n'est pas excité, la pompe à eau de boucle de batterie de la boucle de gestion thermique de batterie (2) fonctionne, le refroidisseur de batterie (4) de la boucle de gestion thermique de batterie (2) ne fonctionne pas, la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; un état de fonctionnement de la boucle de réfrigération et de chauffage de climatiseur (1) doit être déterminé ;
si la température d'eau de la batterie (21) est supérieure ou égale au septième seuil de température prédéterminé, le système de gestion thermique de véhicule entre dans un dix-septième mode ; dans lequel
dans le dix-septième mode, l'échangeur de chaleur thermoélectrique (5) est excité, et un côté de l'échangeur de chaleur thermoélectrique (5) situé dans la boucle de gestion thermique de batterie (2) est un côté de réfrigération, un côté de l'échangeur de chaleur thermoélectrique (5) situé dans la boucle de gestion thermique d'entraînement électrique (3) est un côté de chauffage, le refroidisseur de batterie (4) de la boucle de gestion thermique de batterie (2) ne fonctionne pas, la pompe à eau de boucle d'entraînement électrique (35) de la boucle de gestion thermique d'entraînement électrique (3) fonctionne, et le composant de commutation de trajet d'écoulement d'entraînement électrique (34) met le trajet principal de liquide de refroidissement d'entraînement électrique (6) en communication avec le trajet principal de dissipation de chaleur (7), pour former une boucle ; l'état de fonctionnement de la boucle de réfrigération et de chauffage de climatiseur (1) doit être déterminé.

14. Procédé de gestion thermique de véhicule selon la revendication 13, dans lequel alors que le trajet principal d'écoulement de liquide de refroidissement d'entraînement électrique (6) comprend un trajet d'échange de chaleur thermoélectrique (61) et un trajet d'écoulement d'entraînement électrique (62) qui sont raccordés séquentiellement en série, et la boucle de gestion thermique d'entraînement électrique (3) comprend en outre une dérivation d'échange de chaleur thermoélectrique (37), dans le quinzième mode, le composant de commutation de trajet d'écoulement d'entraînement électrique (34) met le trajet d'écoulement d'entraînement électrique (62), la dérivation d'échange de chaleur thermoélectrique (37) en communication avec le trajet principal de dissipation de chaleur (7), pour former une boucle ; et
lorsque le composant de commutation de trajet d'écoulement d'entraînement électrique (34) est une soupape à quatre voies, et un premier orifice de la soupape à quatre voies est raccordé à une extrémité du trajet principal de dissipation de chaleur (7), un deuxième orifice est raccordé à l'autre extrémité du trajet d'écoulement d'échange de chaleur thermoélectrique (61), un troisième orifice est raccordé à l'autre extrémité d'une dérivation d'échange de chaleur thermoélectrique (37), et un quatrième orifice est raccordé à une extrémité de la dérivation de dissipation de chaleur (33), le premier orifice et le troisième orifice de la soupape à quatre voies sont en communication.

15. Procédé de gestion thermique de véhicule selon la revendication 13, dans lequel lorsque le composant de commutation de trajet d'écoulement de batterie est une soupape à trois voies, le composant de commutation de trajet d'écoulement d'entraînement électrique (34) est une soupape à quatre voies, et la boucle de réfrigération et de chauffage de climatiseur (1) comprend en outre une première soupape de régulation (111), une deuxième soupape de régulation (16), une troisième soupape de régulation (151), une soupape de dérivation (17), une soupape de chauffage (18), et une soupape de fonction (19),
dans le premier mode, un premier orifice et un troisième orifice du composant de commutation de trajet d'écoulement de batterie sont en communication, un troisième orifice et un quatrième orifice du composant de commutation de trajet d'écoulement d'entraînement électrique (34) sont en communication, la première soupape de régulation (111) est fermée, la deuxième soupape de régulation (16) est à moitié ouverte pour réaliser un étranglement, la troisième soupape de régulation (151) est fermée, la soupape de dérivation (17) est fermée, la soupape de chauffage (18) est fermée, et la soupape de fonction (19) est ouverte ;
dans le deuxième mode, le premier orifice et un deuxième orifice du composant de commutation de trajet d'écoulement de batterie sont en communication, et un deuxième orifice et le quatrième orifice du composant de commutation de trajet d'écoulement d'entraînement électrique (34) sont en communication ; la première soupape de régulation (111) est fermée, la deuxième soupape de régulation (16) est à moitié ouverte pour réaliser un étranglement, la troisième soupape de régulation (151) est fermée, la soupape de dérivation (17) est fermée, la soupape de chauffage (18) est fermée, et la soupape de fonction (19) est ouverte ;
dans le troisième mode, le premier orifice et le deuxième orifice du composant de commutation de trajet d'écoulement de batterie sont en communication, et un premier orifice et le deuxième orifice du composant de commutation de trajet d'écoulement d'entraînement électrique (34) sont en communication ; la première soupape de régulation (111) est fermée, la deuxième soupape de régulation (16) est à moitié ouverte pour réaliser un étranglement, la troisième soupape de régulation (151) est fermée, la soupape de dérivation (17) est fermée, la soupape de chauffage (18) est fermée, et la soupape de fonction (19) est ouverte ;
dans le quatrième mode, le premier orifice et le deuxième orifice du composant de commutation de trajet d'écoulement de batterie sont en communication, le deuxième orifice et le quatrième orifice du composant de commutation de trajet d'écoulement d'entraînement électrique (34) sont en communication, la première soupape de régulation (111) est à moitié ouverte pour réaliser un étranglement, la deuxième soupape de régulation (16) est à moitié ouverte pour réaliser un étranglement, la troisième soupape de régulation (151) est fermée, la soupape de dérivation (17) est fermée, la soupape de chauffage (18) est ouverte, et la soupape de fonction (19) est ouverte ;
dans le cinquième mode, le premier orifice et le deuxième orifice du composant de commutation de trajet d'écoulement de batterie sont en communication, le deuxième orifice et le quatrième orifice du composant de commutation de trajet d'écoulement d'entraînement électrique (34) sont en communication, la première soupape de régulation (111) est à moitié ouverte pour réaliser un étranglement, la deuxième soupape de régulation (16) est à moitié ouverte pour réaliser un étranglement, la troisième soupape de régulation (151) est fermée, la soupape de dérivation (17) est fermée, la soupape de chauffage (18) est ouverte, et la soupape de fonction (19) est ouverte ;
dans le sixième mode, le premier orifice et le deuxième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est à moitié ouverte pour réaliser un étranglement, la deuxième soupape de régulation (16) est à moitié ouverte pour réaliser un étranglement, la troisième soupape de régulation (151) est fermée, la soupape de dérivation (17) est fermée, la soupape de chauffage (18) est ouverte, et la soupape de fonction (19) est ouverte ;
dans le septième mode, le premier orifice et le troisième orifice du composant de commutation de trajet d'écoulement de batterie sont en communication, le deuxième orifice et le quatrième orifice du composant de commutation de trajet d'écoulement d'entraînement électrique (34) sont en communication, la première soupape de régulation (111) est dans un état normal, la deuxième soupape de régulation (16) est dans un état normal, la troisième soupape de régulation (151) est dans un état normal, la soupape de dérivation (17) est dans un état normal, la soupape de chauffage (18) est dans un état normal, et la soupape de fonction est dans un état normal ;
dans le huitième mode, le premier orifice et le troisième orifice du composant de commutation de trajet d'écoulement de batterie sont en communication, le deuxième orifice et le quatrième orifice du composant de commutation de trajet d'écoulement d'entraînement électrique (34) sont en communication, la première soupape de régulation (111) est dans un état normal, la deuxième soupape de régulation (16) est dans un état normal, la troisième soupape de régulation (151) est dans un état normal, la soupape de dérivation (17) est dans un état normal, la soupape de chauffage (18) est dans un état normal, et la soupape de fonction (19) est dans un état normal ;
dans le neuvième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est dans un état normal, la deuxième soupape de régulation (16) est dans un état normal, la troisième soupape de régulation (151) est dans un état normal, la soupape de dérivation (17) est dans un état normal, la soupape de chauffage (18) est dans un état normal, et la soupape de fonction (19) est dans un état normal ;
dans le dixième mode, le premier orifice et le troisième orifice du composant de commutation de trajet d'écoulement de batterie sont en communication, le deuxième orifice et le quatrième orifice du composant de commutation de trajet d'écoulement d'entraînement électrique (34) sont en communication, la première soupape de régulation (111) est à moitié ouverte pour réaliser un étranglement, la deuxième soupape de régulation (16) est à moitié ouverte pour réaliser un étranglement, la troisième soupape de régulation (151) est fermée, la soupape de dérivation (17) est fermée, la soupape de chauffage (18) est ouverte, et la soupape de fonction (19) est ouverte ;
dans le onzième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est à moitié ouverte pour réaliser un étranglement, la deuxième soupape de régulation (16) est à moitié ouverte pour réaliser un étranglement, la troisième soupape de régulation (151) est fermée, la soupape de dérivation (17) est fermée, la soupape de chauffage (18) est ouverte, et la soupape de fonction (19) est ouverte ;
dans le douzième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est dans un état normal, la deuxième soupape de régulation (16) est dans un état normal, la troisième soupape de régulation (151) est dans un état normal, la soupape de dérivation (17) est dans un état normal, la soupape de chauffage (18) est dans un état normal, et la soupape de fonction (19) est dans un état normal ;
dans le treizième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est fermée, la deuxième soupape de régulation (16) est à moitié ouverte pour réaliser un étranglement, la troisième soupape de régulation (151) est fermée, la soupape de dérivation (17) est fermée, la soupape de chauffage (18) est fermée, et la soupape de fonction (19) est ouverte ;
dans le quatorzième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) est ouverte, la deuxième soupape de régulation (16) est fermée ou à moitié ouverte pour réaliser un étranglement, la troisième soupape de régulation (151) est ouverte, la soupape de dérivation (17) est ouverte, la soupape de chauffage (18) est fermée, et la soupape de fonction (19) est fermée ;
dans le quinzième mode, le premier orifice et le troisième orifice du composant de commutation de trajet d'écoulement de batterie sont en communication, le premier orifice et le troisième orifice du composant de commutation de trajet d'écoulement d'entraînement électrique (34) sont en communication, la première soupape de régulation (111) est ouverte, la deuxième soupape de régulation (16) est fermée ou à moitié ouverte pour réaliser un étranglement, la troisième soupape de régulation (151) est ouverte ou fermée, la soupape de dérivation (17) est ouverte, la soupape de chauffage (18) est fermée, et la soupape de fonction (19) est fermée ;
dans le seizième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) doit être déterminée, la deuxième soupape de régulation (16) doit être déterminée, la troisième soupape de régulation (151) doit être déterminée, la soupape de dérivation (17) doit être déterminée, la soupape de chauffage (18) doit être déterminée, et la soupape de fonction (19) doit être déterminée ;
dans le dix-septième mode, le premier orifice et le troisième orifice du composant de commutation de trajet d'écoulement de batterie sont en communication, le premier orifice et le deuxième orifice du composant de commutation de trajet d'écoulement d'entraînement électrique (34) sont en communication, la première soupape de régulation (111) doit être déterminée, la deuxième soupape de régulation (16) doit être déterminée, la troisième soupape de régulation (151) doit être déterminée, la soupape de dérivation (17) doit être déterminée, la soupape de chauffage (18) doit être déterminée, et la soupape de fonction (19) doit être déterminée.

16. Procédé de gestion thermique de véhicule selon l'une quelconque des revendications 13 à 15, dans lequel
une plage du premier seuil de température prédéterminé est de -13 °C à -17 °C ;
une plage du deuxième seuil de température prédéterminé est de 15 °C à 25 °C ;
une plage du troisième seuil de température prédéterminé est de 0 °C à 10 °C ;
une plage du quatrième seuil de température prédéterminé est de 15 °C à 25 °C ;
une plage du cinquième seuil de température prédéterminé est de -13 °C à -17 °C ;
une plage du sixième seuil de température prédéterminé est de 18 °C à 22 °C ;
une plage du septième seuil de température prédéterminé est de 12 °C à 20 °C ;
une plage du premier seuil de différence de température prédéterminé est de 0 °C à 5 °C ;
une plage du deuxième seuil de différence de température prédéterminé est de 0 °C à 5 °C.
